Europäisches Patentamt

European Patent Office

Office européen des brevets

(19)

(11) Veröffentlichungsnummer : **0 433 322 B1**

# (12) EUROPÄISCHE PATENTSCHRIFT

(45) Veröffentlichungstag der Patentschrift :
02.11.94 Patentblatt 94/44

(51) Int. Cl.⁵ : **G05D 1/02**

(21) Anmeldenummer : **89909750.5**

(22) Anmeldetag : **07.09.89**

(86) Internationale Anmeldenummer :
**PCT/EP89/01043**

(87) Internationale Veröffentlichungsnummer :
**WO 90/02986 22.03.90 Gazette 90/07**

(54) **VERFAHREN UND VORRICHTUNG ZUR AUTOMATISCHEN FÜHRUNG DER LÄNGS- UND QUERBEWEGUNGEN EINES FAHRZEUGS.**

(30) Priorität : **09.09.88 DE 3830747**

(43) Veröffentlichungstag der Anmeldung :
**26.06.91 Patentblatt 91/26**

(45) Bekanntmachung des Hinweises auf die Patenterteilung :
**02.11.94 Patentblatt 94/44**

(84) Benannte Vertragsstaaten :
**DE FR GB IT SE**

(56) Entgegenhaltungen :
**EP-A- 0 198 450**
**EP-A- 0 278 366**
**FR-A- 2 178 219**
**ROBOTERSYSTEME, Bd. 3, Nr. 2, 1987, Berlin,-DE;Seiten 119-127;M.JANTZER:**
**"Bahnregelung flächenbeweglicher Flurförderzeuge"**
**W.OPPELT: "Kleines Handbuch technischer Regelvorgänge", 1972, Verlag Chemie, Weinheim,DE**

(56) Entgegenhaltungen :
**COMPUTER IN MECHANICAL ENGINEERING (CIME), Januar 1987, New York,US;Seiten 10 - 22; Y. HOSSAM EL-DEEN et al.:**
**"Mechatronics for Cars: Integrating Machines and Electronics to Prevent Skiding on Icy Roads"**

(73) Patentinhaber : **FREUND, Eckhard**
**Am Hausbruch 7**
**D-58239 Schwerte (DE)**

(72) Erfinder : **FREUND, Eckhard**
**Am Hausbruch 7**
**D-5840 Schwerte (DE)**
Erfinder : **MAYR, Robert**
**Hohenfriedberger Str. 34**
**D-4600 Dortmund 50 (DE)**

(74) Vertreter : **Flach, Dieter Dipl.-Phys. et al**
**Patentanwälte Dipl.-Phys. Dieter Flach**
**Dipl.-Chem. Dr. Steffen Andrae**
**Dipl.-Ing. Dietmar Haug**
**Dipl.-Chem. Dr. Richard Kneissl**
**Prinzregentenstrasse 24**
**D-83022 Rosenheim (DE)**

**Beschreibung**

1. Die Erfindung betrifft ein

Verfahren und eine Vorrichtung zur automatischen Führung der Längs- und Querbewegungen eines Fahrzeugs.

2. Anwendungsgebiet

Bei dem Verfahren gemäß der Erfindung werden sowohl die Lenkung als auch die Antriebs- bzw. Bremskraft gleichzeitig so beeinflußt, daß das Fahrzeug sich selbsttätig auf einer vorgegebenen Sollbahn mit einem vorgegebenen Geschwindigkeitsprofil bewegt.

3. Zweck

Das Verfahren soll bei teilweise oder gänzlich automatisch geführten Fahrzeugen zum Einsatz kommen, wobei das Fahrzeug seiner vorgegebenen Fahrspur selbsttätig mit einer vorgegebenen Geschwindigkeit folgen soll. Das Verfahren kann als Bestandteil eines Leit- und Sicherheitssystems für Kraftfahrzeuge herangezogen werden. Es ist in der Lage, die Antriebs- bzw. Bremskraft und den Lenkwinkeleinschlag eines Fahrzeugs dynamisch so zu beeinflussen, daß sich das Fahrzeug selbsttätig auf einen vorgegebenen Zielpunkt zubewegt. Dieser Zielpunkt darf sich seinerseits auch bewegen, so daß das Fahrzeug ihm permanent folgt. Die Dynamik des Abstandes zwischen dem Zielpunkt und dem Schwerpunkt des Fahrzeugs und somit mittelbar die Dynamik des Fahrzeugs selbst, ist hierbei frei einstellbar. Diese dynamischen Eigenschaften bleiben dann für jede Art von Fahrmanöver erhalten.

4. Stand der Technik

Aus der Druckschrift "Robotersysteme" (vo. 3, no. 2, 1987, Berlin, DE, Seiten 119 - 127; M. JANTZER: "Bahnregelung flächenbeweglicher Flurförderzeuge") ist ein gattungsbildendes Verfahren zur automatischen Positionierung und somit zur Bahnregelung eines Flurförderzeuges beschrieben. Ausgangspunkt ist hierbei ein vereinfachtes nichtlineares kinematisches Modell, welches die Bewegungseigenschaften des Flurförderzeuges beinhaltet. Zur Entwicklung eines Regelgesetzes für Bahnregelung dieses Flurförderzeuges wird zunächst das nichtlineare Modell mit Hilfe des Taylorschen Satzes um einen Arbeitspunkt linearisiert. Anschließend wird mit Hilfe der Laplace-Transformation die Strecken-Übertragungsmatrix im Frequenzbereich ermittelt. Auf dieser Grundlage wird dann unter Zuhilfenahme linearer Entwurfsmethoden im Frequenzbereich ein Regelgesetz entwickelt, worüber eine "Entkopplungsregelung" ermöglicht werden soll. Ein wesentliches Merkmal hierbei ist die Bildung der inversen Übertragungsmatrix, die im Regler die in der Strecke auftretenden Verkopplungen kompensiert, so daß ein linear entkoppeltes Gesamtsystem verbleibt. In diesem Zusammenhang wird auch die Einschränkung auf fünf typische Fahrzustände vorgeschlagen, für die spezielle Transformationsmatrizen vorab bereitgestellt werden können.

Diese Linearisierung mittels der Taylorentwicklung weist aber schwerwiegende Nachteile auf, da eine hinreichend genaue Nachbildung immer nur in unmittelbarer Umgebung des Arbeitspunktes möglich ist. Bei größeren Abweichungen vom jeweiligen Arbeitspunkt müssen in der Regelung dementsprechende Ungenauigkeiten in Kauf genommen werden. Schließlich werden darüber hinaus auch bei den Fahrzeugbewegungen durch die Fahrzeugmasse beeinflußte kinetische Anteile völlig vernachlässigt.

Aus der Druckschrift W. Oppelt: "Kleines Handbuch technischer Regelvorgänge", 1972, Verlag Chemie, Weinheim, DE, Seiten 531 - 534, wird am Beispiel der Zweigrößenregelung ein allgemeines Verfahren zur Mehrgrößenregelung von verkoppelten Netzwerken beschrieben. Hierbei kommt der Entkopplung der beiden beteiligten Zweige eine besondere Bedeutung zu. Sie wird im wesentlichen realisiert durch die Vorabsubtraktion der durch die entsprechenden Verkopplungen entstehenden Einflüsse. Dabei wird vereinfachend davon ausgegangen, daß die Verkopplungen über Kreuz jeweils additiv auf die beiden beteiligten Regelkreise einwirken. Im allgemeinen Fall jedoch, bei dem ein hoher Grad an Vermaschung der beteiligten Zweige zu erwarten ist, wird eine Durchführung der Entkopplung nach dem hier aufgezeigten vereinfachten Muster nicht mehr zum gewünschten Erfolg führen, nämlich insbesondere dann auch, wenn gleichzeitig mehrere Verkopplungen nicht nur additiv, sondern auch multiplikativ etc. und weiterhin nicht ausschließlich auf die Ausgänge der einzelnen Teilstrecken, sondern auch beispielsweise zusätzlich auf die Eingänge wirken.

Beim Bewegungsverhalten eines Kraftfahrzeuges wirken jedoch eine Vielzahl von kinetischen und kinematischen Verkopplungen, durch die die Fahrdynamik entscheidend mitcharakterisiert wird. Aufgrund dieses hohen Grades an Vermaschung und der Komplexität der Signalpfade können die Entkopplungsbedingungen gemäß der in der zuletzt genannten Druckschrift angegebenen Form so nicht zur Anwendung gelangen. Darüber hinaus sind mehr oder weniger rudimentäre Versuche zur automatischen Bewegung eines Fahrzeuges u. a. auch aus den Druckschriften ASME/CIME/Jan. 1987/pp. 10-22; Dowling, K. et. al., NAVLAB: An Autonomous Navigation Testbed, Technical Report, The Robotics Institute, Carnegie Mellon University, Pittsburgh, Pennsylvania 15213, 1987, CMU-RI-TR-87-24; und Dickmanns, E. D.; Zapp, H., Autonomous High Speed Road Vehicle Guidance by Computer Vision, Proc. IFAC, 1987, pp. 232-237 bekannt geworden.

Der augenblickliche Stand der Technik ermöglicht es, einem automatisch geführten Fahrzeug einer optisch erfaßten Spur (z. B. den Mittelstreifen einer Straße) bei gleichzeitiger Vorgabe der Geschwindigkeit zu folgen. Der augenblickliche Stand der Technik ermöglicht es bisher jedoch nicht, bei vollständiger Kompensation der linearen und nichtlinearen Verkopplungen der Längs- und Querdynamik eines Fahrzeugs und gleichzeitiger Kompensation des Einflusses diverser Kenngrößen des Fahrzeugs, wie z. B. der Fahrzeugmasse, der Federung etc., ein automatisch geführtes Fahrzeug bei - innerhalb der erlaubten Grenzen - exakt einstellbarer Dynamik einer festgelegten Spur mit einem vorgegebenen Geschwindigkeitsprofil zu folgen. Weiterhin erlaubt es der augenblickliche Stand der Technik nicht, daß bei zusätzlicher vollständiger Kompensation der durch die für die Positionierung relevanten Einzelkoordinaten untereinander entstehenden Verkopplungen und der durch die Längs- und Querdynamik untereinander entstehenden Verkopplungen, ein automatisch geführtes Fahrzeug einem beweglichen Zielpunkt permanent folgt.

## 5. Aufgabe

Der Erfindung liegt die Aufgabe zugrunde, ein Verfahren sowie eine Vorrichtung zu entwickeln, welches einem Fahrzeug ermöglicht, automatisch und autonom einem beweglichen Zielpunkt und somit einem vorgegebenen Sollbahnverlauf mit einem Vollautomaten zu folgen bzw. mit einem vorgebbaren Geschwindigkeitsprofil und mit einem ebenfalls vorgebbaren Kurswinkel nach Art eines Halbautomaten zu fähren. Bei Verwendung lediglich eines Halbautomaten soll auch ein Vorschaltautomat zur Anwendung gelangen, mit der der Halbautomat zu einem Vollautomaten komplettiert werden kann, wobei bei einem Vollautomaten die Steuerung automatisch in Abhängigkeit von Soll- Positionskoordinaten und in der Betriebsweise nach Art eines Halbautomaten in Abhängigkeit von einer Soll-Geschwindigkeit und einem Soll-Kurswinkel automatisch erfolgen soll. Je nach Bedarf soll eine Verfeinerung durch Berücksichtigung einer Schleppfehler-Kompensation möglich sein. Schließlich soll auch ein Verfahren zur Ermittlung des Wertes für den Schwimmwinkel möglich sein.

## 6. Lösung

Die Aufgabe wird erfindungsgemäß bezüglich des Verfahrens entsprechend den in den Ansprüchen 1 bzw. 10 und bezüglich der Vorrichtung entsprechend den in den Ansprüchen 11, 14, 15 bzw. 34 oder 41 angegebenen Merkmalen gelöst. Vorteilhafte Ausgestaltungen der Erfindung sind in den Unteransprüchen angegeben.

Es wird dabei ferner auf die am gleichen Tage eingereichte Patentanmeldung des gleichen Anmelders mit dem Titel "Verfahren und Vorrichtung zur automatischen Kollisionsvermeidung für automatisch führbare Fahrzeuge" hingewiesen, deren Offenbarungsinhalt ausdrücklich und in vollem Umfange zum Inhalt der vorliegenden Anmeldung gemacht wird.

Die Bewegungen eines Fahrzeuges auf einer Ebene kann mittels eines zweidimensionalen (z. B. kartesischen) Koordinatensystems beschrieben werden. Dabei stehen die Fahrzeugkoordinaten in einem engen Zusammenhang mit den zeitlichen Verläufen der Lenkwin-keleinstellung und der Antriebs- bzw. Bremskraft. Somit sind die Einzelkoordinaten über den zeitlichen Verlauf der dynamischen Fahrzeuggrößen (wie z. B. der Kurswinkel und die Geschwindigkeit) des Fahrzeugs eng miteinander verkoppelt. Aufgrund dieser nichtlinearen Verkopplungen und der hochgradigen Nichtlinearitäten in den Bewegungsgleichungen der Fahrzeugdynamik sind lineare Regelsysteme nur sehr bedingt tauglich.

Bei der vorliegenden Erfindung werden zunächst diese in den Bewegungsgleichungen eines Fahrzeugs vorkommenden nichtlinearen Kopplungen durch geeignete Vorrichtungen entkoppelt und durch entsprechende Regelungsvorrichtungen ergänzt. Ein so ausgelegtes System ist in der Lage, die Stellgrößen des Fahrzeugs so zu beeinflussen, daß sich das Fahrzeug unabhängig von seiner Ausgangslage und Ausrichtung in geeigneter Weise auf sein Ziel zubewegt und letztlich auf ihm zum Stehen kommt. Konsequenterweise wird ein sich bewegender Sollwert von einem so geregelten Fahrzeug permanent verfolgt. Das dynamische Verhalten dieses Gesamtsystems, bestehend aus dem Regelungssystem und dem Fahrzeug, ist dabei frei einstellbar und kann somit den jeweiligen technischen Gegebenheiten des Fahrzeugs angepaßt werden. Dabei wird die Konstanz der dynamischen Regeleigenschaften für jedes Fahrmanöver sichergestellt. Außerdem ist das auf jede Einzelachse des Umweltkoordinatensystems projezierte Zeitverhalten des geregelten Fahrzeugs immer gleich, was eine wesentliche Erhöhung der gefahrenen Bahngenauigkeit mit sich bringt. Die Einhaltung einer hohen Bahngüte für ein automatisch geführtes Fahrzeug, auch bei großen Geschwindigkeiten und in engen Kurven, ist unbedingt erforderlich, da eine bleibende Regelabweichung oder ein Überschwingen über die Sollposition verheerende Folgen haben könnte.

## 7. Weitere Ausgestaltung der Erfindung

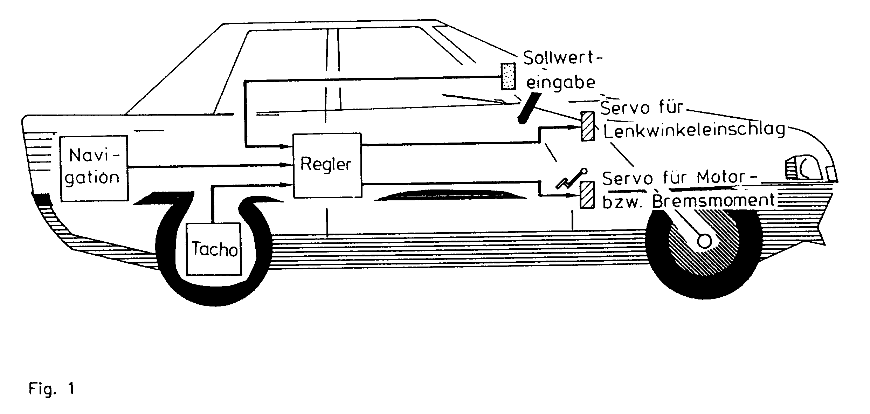

Die beschriebene Vorrichtung, die in einem Fahrzeug zu installieren ist, kann z.B. als elektronische Schaltung realisiert werden. Wie Fig. 1 zeigt, werden mittels einer geeigneten Sensorik die Meßgrößen diesem Bordsystem zugeführt, das dann die entsprechenden Stellgrößen ermittelt und über geeignete Servoantriebe an das Fahrzeug ausgibt. Eine solche Einrichtung kann ein Fahrzeug selbständig mit einem bestimmten Geschwindigkeitsprofil in eine bestimmte Richtung fahren lassen oder auf einer vorgegebenen Sollbahn führen. Sie kann jedoch auch als Bestandteil in ein Fahrzeug-Sicherheitssystem miteinbezogen werden und dann erst in einem etwaigen Gefahrenfall zum Einsatz kommen.

## 8. Erzielbare Vorteile

Die mit der Erfindung erzielten Vorteile bestehen darin, daß das Regelungsverfahren in der Lage ist, gleichzeitig die Antriebs- bzw. Bremskraft und die Lenkung des Fahrzeuges bei freier Wahl der Gesamtdynamik so zu beeinflussen, daß ein völlig automatisiertes Fahren ermöglicht wird. Durch die sehr hohe Bahngüte, wie sie bei konventionellen Regelungssystemen nicht erreicht werden kann, wird ein schnelles und präzises Bahnfahren des geregelten Fahrzeugs ermöglicht. Die einmal entsprechend der Kenndaten des Fahrzeugs vorgewählte Gesamtdynamik gilt dann für den gesamten Geschwindigkeitsbereich bei Geradeausfahrt sowie bei Kurvenfahrt. In Notsituationen jedoch kann das dynamische Verhalten kurzfristig härter eingestellt werden, um ein schnelles Ausweichen zu ermöglichen. Damit wird eine wichtige Voraussetzung für die Ermöglichung des Einsatzes von speziellen Verfahren zur Kollisionsvermeidung des Fahrzeugs mit feststehenden Hindernissen und anderen Verkehrsteilnehmern geschaffen.

Weiterhin besitzt das Regelungsverfahren klar definierte Schnittstellen, die auf eine relativ einfache Weise die Integration des Regelungssystems in ein übergeordnetes Sicherheits- oder Verkehrsleitsystem erlauben.

Die Erfindung wird nachfolgend anhand von mehreren Ausführungsbeispielen erläuert. Dabei zeigen im einzelnen:

Fig. 1: ein mit der Einrichtung zur automatischen Führung der Längs- und Querbewegungen bestücktes Fahrzeug;

Fig. 2: eine schematische Darstellung der Kenngrößen eines Fahrzeuges;

Fig. 3: eine Vorrichtung zur automatischen Bestimmung des aktuell einzustellenden Lenkwinkeleinschlags $\delta$ in Abhängigkeit von den Sollwerten $w_v$ für den Gierwinkel $w_v$ und für die Fahrzeuggeschwindigkeit sowie von den Meßwerten;

Fig. 4: eine Vorrichtung zur automatischen Bestimmung der aktuell einzustellenden Antriebs- bzw. Bremskraft H in Abhängigkeit von den Sollwerten $w_v$ für den Gierwinkel $w_v$ und für die Fahrzeuggeschwindigkeit sowie von den Meßwerten;

Fig. 5: eine Vorrichtung zur automatischen Bestimmung des aktuell einzustellenden Sollwertes $w_v$ für den Kurswinkel in Abhängigkeit von den Positionssollwerten $w_X$ und $w_Y$ sowie von den Meßwerten;

Fig. 6: eine Vorrichtung zur automatischen Bereitstellung des aktuell einzustellenden Sollwertes $w_v$ für die Fahrzeuggeschwindigkeit in Abhängigkeit von den Positionssollwerten $w_X$ und $w_Y$ sowie von den Meßwerten;

Fig. 7: eine Vorrichtung zur automatischen Bestimmung des aktuell einzustellenden Lenkwinkeleinschlages $\delta$ in Abhängigkeit von den Positionssollwerten $w_X$ und $w_Y$ sowie den Meßwerten;

Fig. 8: eine Vorrichtung zur automatischen Bestimmung der aktuell einzustellenden Antriebs- bzw. Bremskraft H in Abhängigkeit von den Positionssollwerten $w_X$ und $w_Y$ sowie von den Meßwerten;

Fig. 9: Vorrichtung KL;

Fig. 10: Vorrichtung KH;

Fig. 11: Vorrichtung EK;

Fig. 12: Vorrichtung EM;

Fig. 13: Vorrichtung RP;

Fig. 14: Vorrichtung RU;

Fig. 15: Vorrichtung GL;

EP 0 433 322 B1

Fig. 16:    Vorrichtung GH;
Fig. 17:    Vorrichtung GV;
Fig. 18:    Vorrichtung GK;
Fig. 19:    Vorrichtung GPH;
Fig. 20:    Vorrichtung GPL;
Fig. 21:    Vorrichtung KROK;
Fig. 22:    Vorrichtung KROV;
Fig. 23:    Vorrichtung KOK;
Fig. 24:    Vorrichtung KOV;
Fig. 25:    eine Vorrichtung zur Schätzung des aktuellen Wertes für den Schwimmwinkel $\beta$;
Fig. 26:    Vorrichtung SB zur Ermittlung des aktuellen Schätzwertes $\hat{\beta}$ für den Schwimmwinkel;
Fig. 27:    Vorrichtung SA zur Ermittlung der aktuellen Werte für die Signale $a_{11}$, $a_{13}$, $a_{31}$, $a_{33}$, $b_1$ und $b_3$;
Fig. 28:    Vorrichtung SK1 zur Ermittlung des aktuellen Wertes für das Signal $k_1$;
Fig. 29:    Vorrichtung SK3 zur Ermittlung des aktuellen Wertes für das Signal $k_3$;
Fig. 30:    Vorrichtung VS1 zur Kompensation des durch die resultierende Fahrzeuggeschwindigkeit entstehenden Schleppfehlers;
Fig. 31:    Vorrichtung VS2 zur Kompensation des durch die resultierende Fahrzeuglängsbeschleunigung entstehenden Schleppfehlers;
Fig. 32:    Vorrichtung VS3 zur Kompensation des durch die resultierende Fahrzeugquerbeschleunigung entstehenden Schleppfehlers;
Fig. 33:    eine Vorrichtung zur Positionsregelung eines Fahrzeugs in Verbindung mit einer Vorrichtung zur Schätzung des Schwimmwinkels $\beta$.

### 9. Beschreibung mehrerer Ausführungsbeispiele

### 9.1 Erläuterung der dynamischen Fahrzeuggrößen

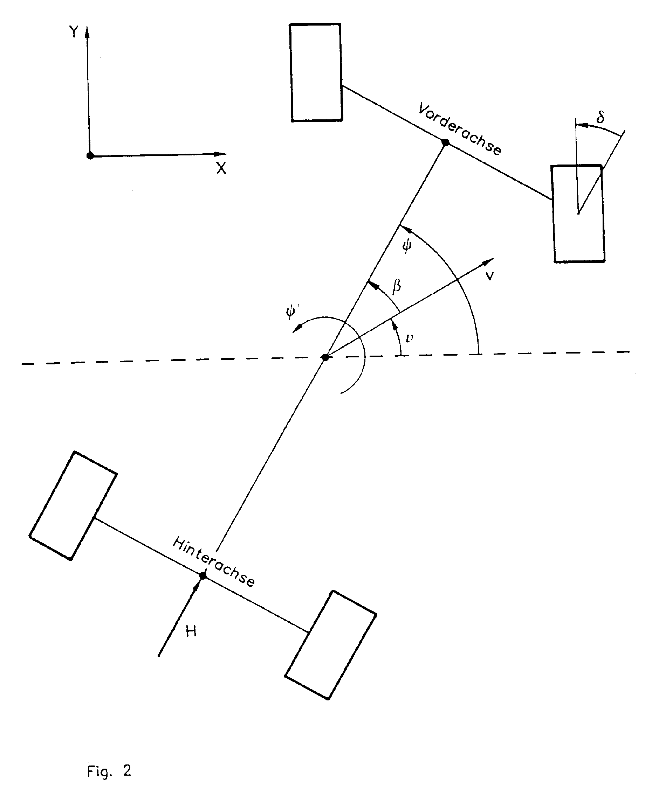

Für die Beschreibung der Vorrichtungen zur automatischen Fahrzeugführung werden im folgenden einige dynamische Fahrzeuggrößen spezifiziert. Fig. 2 zeigt schematisch das Fahrgestell eines Fahrzeugs, das in einer Ebene, in der die Fahrzeugposition durch ein kartesisches Koordinatensystem festgelegt ist, fährt. Dabei wird es von der Antriebsbzw. Bremskraft H angetrieben bzw. abgebremst. Der Winkel $\delta$ stellt dabei den Lenkwinkeleinschlag der Vorderräder gegenüber der Fahrzeuglängsachse dar.

Der Gierwinkel $\psi$ beschreibt die momentane Ausrichtung der Fahrzeuglängsachse bezüglich der x-Achse des kartesischen Koordinatensystems. Da ein Fahrzeug, insbesondere bei Kurvenfahrt, nicht genau nach vorne fährt, sondern auch seitlich etwas "wegschwimmt", kann die Fahrtrichtung nicht durch den Gierwinkel $\psi$ beschrieben werden. Der Kurswinkel $\nu$ beschreibt die momentane Richtung, in die das Fahrzeug fährt, ebenfalls bezüglich der x-Achse des kartesischen Koordinatensystems. Die Differenz zwischen dem Gierwinkel $\psi$ und dem Kurswinket $\psi$ ergibt den Schwimmwinkel $\beta$, der den Winkel zwischen der Fahrzeugausrichtung und der Richtung, in die das Fahrzeug fährt, beschreibt. Die Drehung des Fahrzeugs um seinen Schwerpunkt wird durch die Giergeschwindigkeit $\psi'$ fesgelegt. Dabei sind die dynamischen Fahrzeuggrößen $\psi'$ für die Giergeschwindigkeit und $\beta$ für den Schwimmwinkel nicht zwingend notwendig. Sie dienen lediglich einer verfeinerten Steuerung. Sollen diese Größen nicht berücksichtigt werden, so müssen sie in den nachfolgenden Beispielen und Formeln lediglich auf "Null" gesetzt werden.

### 9.2 Regelungsvorrichtung für ein Fahrzeug

Im folgenden werden mehrere Realisierungsmöglichkeiten der Fahrzeugregelung, die Bestandteil der automatischen Fahrzeugführung ist, beschrieben. Mit solchen Regelungsvorrichtungen wird es möglich, dem Fahrzeug mittels einer automatischen Bestimmung des Lenkwinkeleinschlags $\delta$ und der Antriebs- bzw. Bremskraft H ein bestimmtes Fahrverhalten aufzuprägen. Dabei werden der Regelung die Führungsgrößen und diverse, mit geeigneten Sensoren erfaßte, fahrzeugspezifische Meßgrößen zugeführt. Dabei können die Fahrzeugkoordinaten, der Gierwinkel $\psi$ und die Giergeschwindigkeit $\psi'$ mittels eines geeigneten Navigationsinstruments ermittelt werden. Die Geschwindigkeit v kann durch einen an einem Rad des Fahrzeugs angebrachten Tachogenerator gemessen werden. Der Schwimmwinkel $\beta$ hingegen ist nicht ohne weiteres meßbar. Er wird durch eine Vorrichtung, der ein geeignetes Schätzverfahren innewohnt, aus den meßbaren dynamischen Meßund Stellgroßen rekonstruiert. Resultierend aus diesen Meßgrößen können durch die Erfindung der Lenkwvinkeleinschlag $\delta$ und die Antriebs- bzw. Bremskraft H entsprechend beeinflußt werden. Diese Stellsignale werden durch geeignete Servoantriebe an die Lenkung und zum Motor weitergegeben. Fig. 1 zeigt ein

5

mit einer solchen Einrichtung ausgerüstetes Fahrzeug. Allen Arten der Regelung ist gemeinsam, daß zunächst die fahrzeug- bzw. prozeßseitigen, störenden Verkopplungen (z. B. zwischen der Längs- und Querdynamik) kompensiert werden. Diese Kompensationszweige werden durch entsprechende Regelungszweige ergänzt, wodurch sich die kompletten Regelungsvorrichtungen ergeben. Der Vorteil eines solchen Aufbaus ist, daß sich störende, fahrzeug- bzw. prozeßseitige Verkopplungen nicht mehr unmittelbar auf die Regelkreise auswirken. Da für eine so strukturierte Regelung das dynamische Verhalten mittels der Reglerparameter frei vorgewählt werden kann, ist hierbei ein schnelles Übergangsverhalten der entsprechend kalibrierten Regelung zu erwarten.

Im folgenden werden drei verschiedene Arten von Regelungsvorrichtungen beschrieben. Bei der ersten Variante werden die Führungsgrößen dieser Regelungsvorrichtungen lediglich durch die Sollwerte des aktuell einzustellenden Kurswinkels und der aktuell einzustellenden Fahrzeuggeschwindigkeit vorgegeben. Da eine solche Vorrichtung positionsunabhängig arbeitet, brauchen ihr neben den Führungsgrößen lediglich die dynamischen Fahrzeuggrößen wie z. B. Schwimmwinkel, Gierwinkel, Giergeschwindigkeit und Fahrzeuggeschwindigkeit, nicht aber die aktuelle Fahrzeugposition zugeführt werden. Aufgrund dieser Führungs- und Meßgrößen wird von der Regelungsvorrichtung der aktuell einzustellende Lenkwinkeleinschlag und die aktuell einzustellende Antriebs- bzw. Bremskraft ermittelt und an die Aktuatoren ausgegeben.

Die zweite Variante der Regelungsvorrichtung ist als Ergänzung zur ersten Variante zu verstehen. Dabei wird die Aufgabe, das Fahrzeug automatisch zu einem bestimmten Punkt, der durch ein geeignetes Koordinatensystem beschrieben wird, durch die Vorgabe des entsprechenden Verlaufs von Kurswinkel und Geschwindigkeit gelöst. Somit kann diese zweite Variante der Regelungsvorrichtung nur bei einem Fahrzeug zur Anwendung kommen, das bereits mit der ersten Variante, der Regelungsvorrichtung für den Kurswinkel und die Fahrzeuggeschwindigkeit ausgerüstet ist. Die hier beschriebene zweite Variante ist dann eine übergeordnete Regelungsvorrichtung für die Fahrzeugposition und wird der Regelungsvorrichtung für Kurswinkel und Fahrzeuggeschwindigkeit vorgeschaltet. Dabei werden von der Regelungsvorrichtung für die Fahrzeugposition die aktuell einzustellenden Werte für den Kurswinkel und die Fahrzeuggeschwindigkeit aufgrund der Positionssollwerte und der Meßgrößen, wobei neben den dynamischen Fahrzeuggrößen auch die aktuelle Fahrzeugposition gemessen wird, ermittelt, die von der untergeordneten Regelungsvorrichtung (siehe vorherigen Abschnitt) für den Kurswinkel und die Fahrzeuggeschwindigkeit als Führungsgrößen herangezogen werden.

In der dritten Variante der Regelungsvorrichtung werden die erste und die zweite Variante miteinander vereint. Somit ist sie nicht als Ergänzung, sondern als Alternative zu den ersten beiden zu sehen. Als Führungsgrößen werden hier, wie bei der zweiten Variante, die Sollwerte für die Fahrzeugposition angegeben. Aufgrund dieser Sollwerte für die Fahrzeugposition und den Meßgrößen, wobei neben den dynamischen Fahrzeuggrößen auch die aktuelle Fahrzeugposition gemessen wird, wird direkt - nicht über den Kurswinkel und die Fahrzeuggeschwindigkeit - der aktuell einzustellende Lenkwinkeleinschlag und die aktuell einzustellende Antriebs- bzw. Bremskraft ermittelt und an die Aktuatoren ausgegeben.

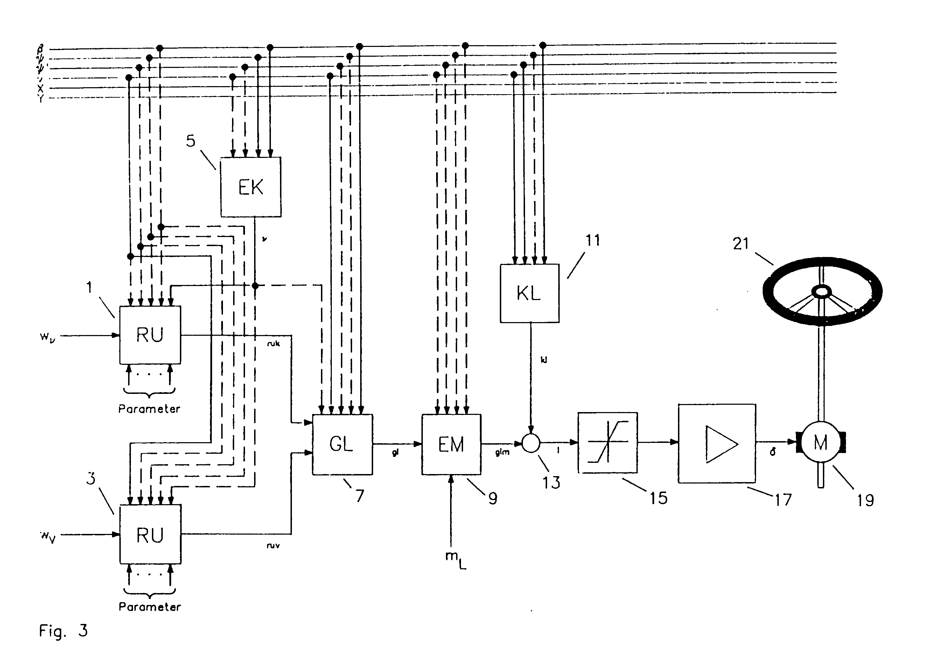

Die drei Varianten der Regelungsvorrichtungen sind in den Figs. 3 bis 8 skizziert. Dabei sind die den einzelnen darin enthaltenen Vorrichtungen zugeführten Signale mit durchgezogenen Linien gekennzeichnet. Weitere Signale, die den einzelnen Vorrichtungen optionell bei Bedarf evtl. zugeführt werden könnten, sind durch gestrichelte Linien gekennzeichnet.

### 9.2.1 Regelungsvorrichtung für den Kurswinkel und die Fahrzeuggeschwindigkeit durch die automatische Beeienflussung des Lenkwinkeleinschlags $\delta$ und der Antriebs- bzw. Bremskraft H

### a) Automatische Beeinflussung des Lenkwinkeleinschlags $\delta$

Fig. 3 zeigt die erfindungsgemäß ausgebildete Vorrichtung zur automatischen Beeinflussung des Lenkwinkeleinschlags $\delta$. Hierbei liegen eingangsseitig die Sollwerte $w_v$ für den Kurswinkel und $w_v$ für die Fahrzeuggeschwindigkeit sowie die Meßgrößen für den Schwimmwinkel $\beta$, den Gierwinkel $\psi$, die Giergeschwindigkeit $\psi'$ und die Fahrzeuggeschwindigkeit v an. Am Ausgang dieser Regelungsvorrichtung liegt der aktuell einzustellende Lenkwinkeleinschlag als elektrisches Signal I an. Mittels einer geeigneten Vorrichtung, z. B. dem Anpaßglied 15 in Verbindung mit dem Leistungsverstärker 17 und dem Servoantrieb 19 kann der tatsächliche Lenkwinkeleinschlag $\delta$ dem Signal I immer angepaßt werden.

Mit dem Addierer 13 wird das Signal kl des Kompensationszweiges, das den Anteil der untereinander entstehenden Verkopplungen in der Längs- und Querdynamik des Fahrzeugs repräsentiert, der durch die Lenkung kompensiert werden muß und der dabei durch die Kompensationsvorrichtung KL (Block 11) in Abhängigkeit vom Schwimmwinkel $\beta$, von der Giergeschwindigkeit $\psi'$ und der Fahrzeuggeschwindigkeit v ermittelt wird mit dem Ausgangssignal glm des Regelungszweiges zusammengeführt.

Im Regelungszweig wird zunächst in der Vorrichtung RU (Block 1) die durch geeignete Reglerparameter modifizierte Regeldifferenz ruk für den Kurswinkel $\nu$ in Abhängigkeit vom Kurswinkel $\nu$ und dem Sollwert $w_\nu$ für den Kurswinkel bestimmt. Dabei wird das Signal für den Kurswinkel $\nu$ in der Vorrichtung EK (Block 5) in Abhängigkeit vom Gierwinkel $\psi$ und vom Schwimmwinkel $\beta$ ermittelt. Außerdem wird die in der Vorrichtung RU (Block 3) ebenfalls durch geeignete Reglerparameter modifizierte Regeldifferenz ruv für die Fahrzeuggeschwindigkeit v in Abhängigkeit von der Fahrzeuggeschwindigkeit v und dem Sollwert $w_v$ für die Fahrzeuggeschwindigkeit bestimmt.

In der Mischvorrichtung GL (Block 7) werden die beiden modifizierten Regeldifferenzen ruk für den Kurswinkel und ruv für die Fahrzeuggeschwindigkeit in Abhängigkeit vom Schwimmwinkel $\beta$ und von der Fahrzeuggeschwindigkeit v gewichtet und somit zur gewichteten modifizierten Regeldifferenz gl zusammengeführt.

In der Vorrichtung EM (Block 9), der die gewichtete modifizierte Regeldifferenz gl als Eingangsgröße zugeführt wird, wird das dynamische Verhalten des Regelungszweiges der unterschiedlichen Gesamtmasse des Fahrzeugs in Abhängigkeit von der Fahrzeugladung $m_L$ angepaßt und somit letztlich das Ausgangssignal glm des Regelungszweiges gebildet, das wie bereits erwähnt, durch Addition (Addierer 13) mit dem Ausgangssignal kl der Kompensationsvorrichtung KL (Block 11) das Stellsignal l für den Lenkwinkeleinschlag $\delta$ ergibt.

Das Stellsignal l für den Lenkwinkeleinschlag läßt sich formelmäßig wie folgt beschreiben, wobei die Werte für $l_i$ und $a_{ij}$ vorwählbare Parameter und die Werte für $c_i$ (i,j = 1,2,...) Konstanten repräsentieren:

$$l = c_1 \cdot \frac{\psi'}{v} - c_2 \cdot \beta$$

$$+ c_3 \cdot m_G \left\{ - \left[ a_{01} \cdot (\psi - \beta) - l_1 w_\nu \right] \cdot v \right.$$

$$\left. + \left[ a_{02} \cdot v - l_2 w_v \right] \cdot \beta \right\}$$

Hierbei ist $m_G$ die Gesamtmasse des Fahrzeugs, bestehend aus der Leermasse m und der Masse der Ladung $m_L$.

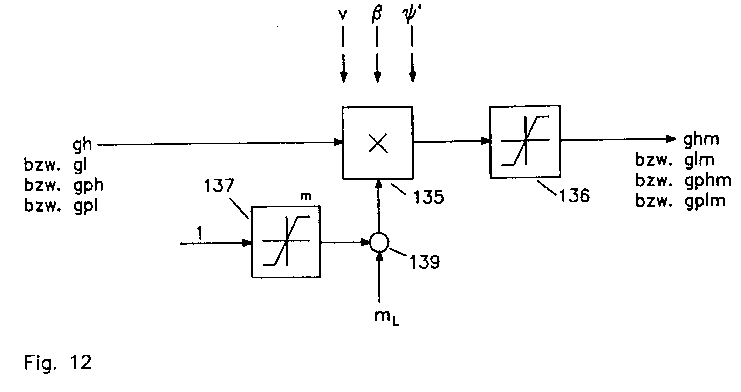

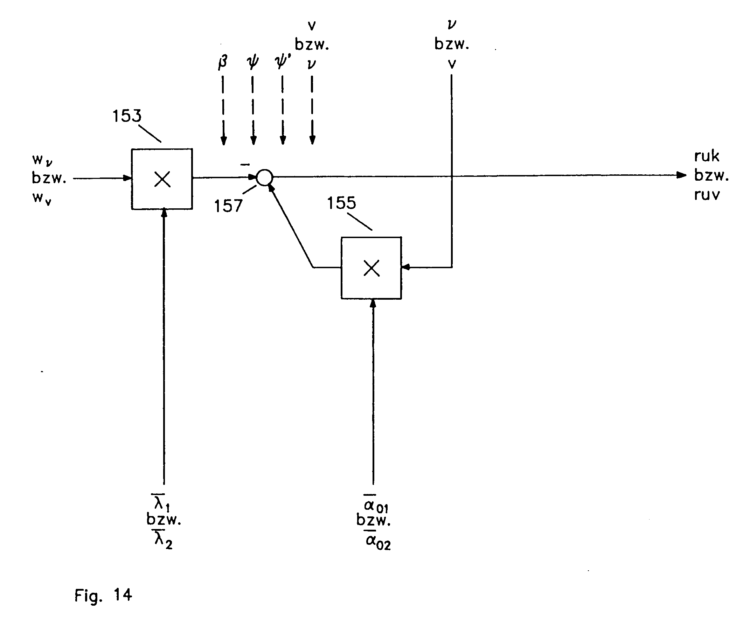

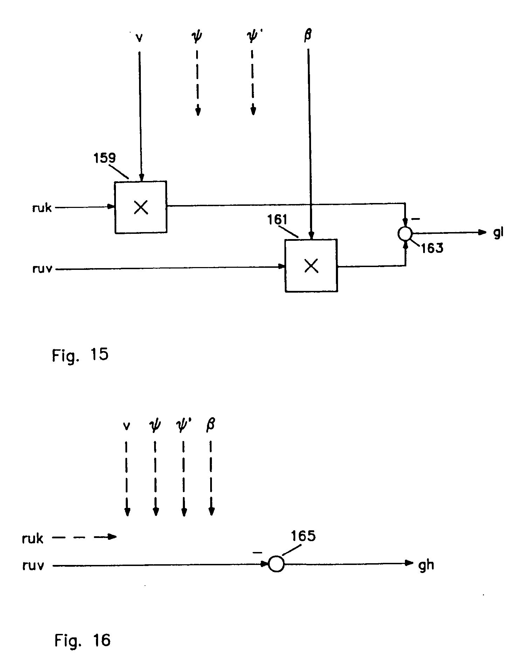

Die Vorrichtungen RU, EK, GL, EM und KL sind in den Figs. 14, 11, 15, 12 und 9 skizziert und in den Ansprüchen 24, 21, 25, 22 und 19 beschrieben.

### b) Automatische Beeinflussung der Antriebs- bzw. Bremskraft H

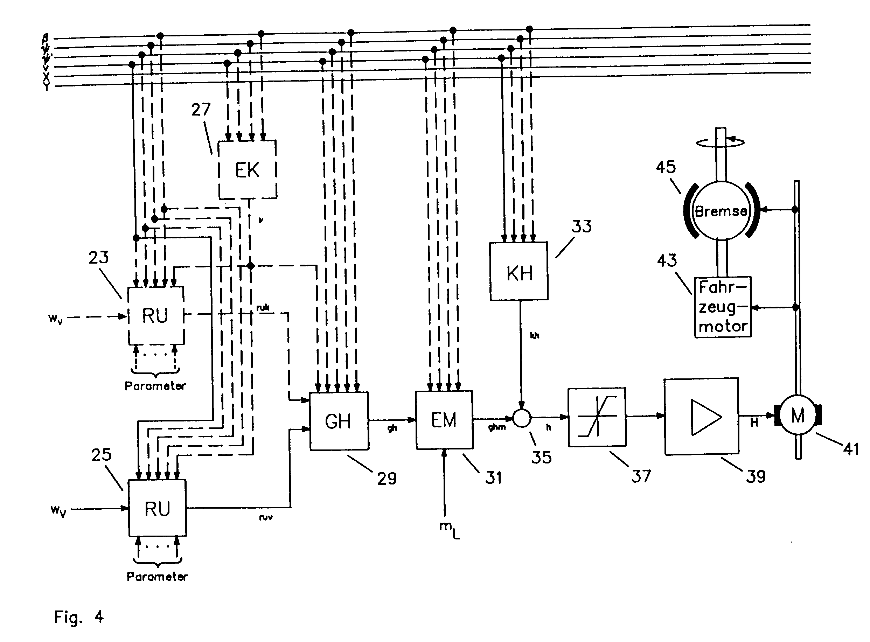

Fig. 4 zeigt die erfindungsgemäß ausgebildete Vorrichtung zur automatischen Beeinflussung der Antriebsbzw. Bremskraft H. Hierbei liegt eingangsseitig der Sollwert $w_v$ für die Fahrzeuggeschwindigkeit sowie die Meßgrößen für die Fahrzeuggeschwindigkeit v an. Am Ausgang dieser Regelungsvorrichtung liegt die aktuell einzustellende Antriebs-bzw. Bremskraft als elektrisches Signal h an. Mittels einer geeigneten Vorrichtung, z B. dem Anpaßglied 37 in Verbindung mit dem Leistungsverstärker 39 und dem Servoantrieb 41 kann die tatsächliche Antriebs- bzw. Bremskraft H dem Signal h immer angepaßt werden.

Mit dem Addierer 35 wird das Signal kh des Kompensationszweiges, das den Anteil der untereinander entstehenden Verkopplungen in der Längs- und Querdynamik des Fahrzeugs repräsentiert, der durch die Antriebs- bzw. Bremskraft kompensiert werden muß und der dabei durch die Kompensationsvorrichtung KH (Block 33) in Abhängigkeit von der Fahrzeuggeschwindigkeit v ermittelt wird, mit dem Ausgangssignal ghm des Regelungszweiges zusammengeführt.

Im Regelungszweig wird die in der Vorrichtung RU (Block 25) durch geeignete Reglerparameter modifizierte Regeldifferenz ruv für die Fahrzeuggeschwindigkeit v in Abhängigkeit von der Fahrzeuggeschwindigkeit v und dem Sollwert $w_v$ für die Fahrzeuggeschwindigkeit bestimmt, aus der in der Vorrichtung GH (Block 29) das Signal gh ermittelt wird.

In der Vorrichtung EM (Block 31), der das Signal gl als Eingangsgröße zugeführt wird, wird das dynamische Verhalten des Regelungszweiges der unterschiedlichen Gesamtmasse des Fahrzeugs in Abhängigkeit von der Fahrzeugladung $m_L$ angepaßt und somit letztlich das Ausgangssignal ghm des Regelungszweiges gebildet, das wie bereits erwähnt, durch Addition (Addierer 35) mit dem Ausgangssignal kh der Kompensationsvorrichtung KH (Block 33) das Stellsignal h für die Antriebs- bzw. Bremskraft H ergibt.

Das Stellsignal h für die Antriebs- bzw. Bremskraft läßt sich formelmäßig wie folgt beschreiben, wobei die Werte für $l_v$ und $a_{ij}$ vorwählbare Parameter und die Werte für $c_i$ (i, j = 1,2,...) Konstanten repräsentieren.

$$h = c_4 v^2 - m_G[a_{02} \cdot v - l_2 w_v]$$

Hierbei ist $m_G$ die Gesamtmasse des Fahrzeugs, bestehend aus der Leermasse m und der Masse der Ladung $m_L$.

Die Vorrichtungen RU, GH, EM und KH sind in den Figs. 14, 16, 12 und 10 skizziert und in den Ansprüchen 24, 26, 22 und 20 beschrieben.

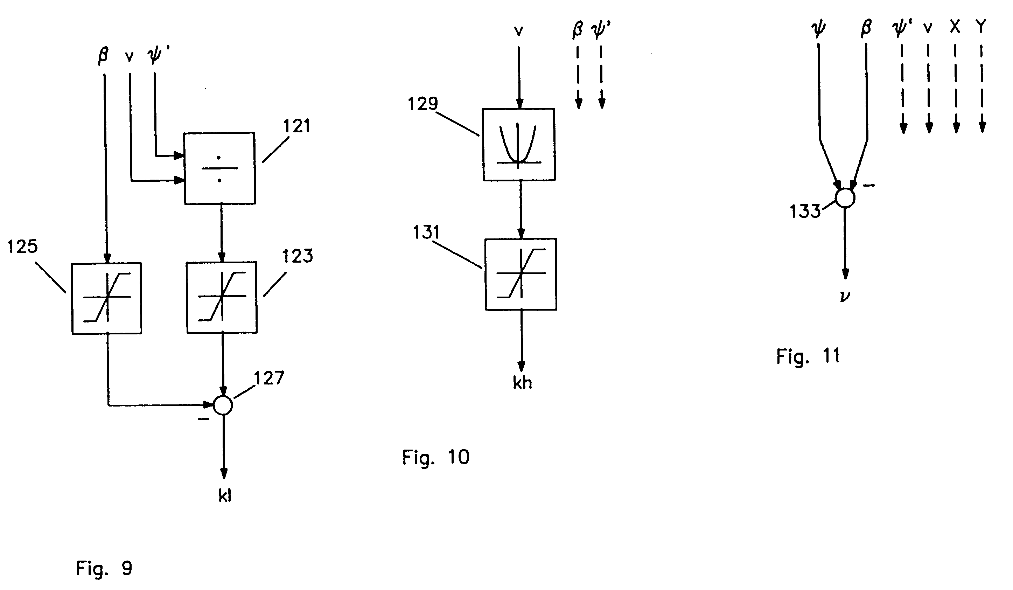

Soll optionell für eine evtl. vefeinerte Bestimmung des Signals gh die modifizierte Regeldifferenz ruk für den Kurswinkel mit herangezogen werden, so wird in der Vorrichtung RU (Block 23) die durch geeignete Reglerparameter modifizierte Regeldifferenz ruk für den Kurswinkel $v$ in Abhängigkeit vom Kurswinkel $v$ und dem Sollwert $w_v$ für den Kurswinkel bestimmt. Dabei wird das Signal für den Kurswinkel $v$ in der Vorrichtung EK (Block 27) in Abhängigkeit vom Gierwinkel $\psi$ und vom Schwimmwinkel $\beta$ ermittelt, wobei die Vorrichtung EK in Fig. 11 skizziert und in Anspruch 29 beschrieben ist. In der Vorrichtung GH (Block 29), die dann als Mischvorrichtung fungiert, werden die beiden modifizierten Regeldifferenzen ruk für den Kurswinkel und ruv für die Fahrzeuggeschwindigkeit in Abhängigkeit von den dafür erforderlichen Meßgrößen gewichtet und somit zur gewichteten modifizierten Regeldifferenz gh zusammengeführt.

Durch den Einsatz der in a) beschriebenen Vorrichtung zur automatischen Beeinflussung des Lenkwinkeleinschlags $\delta$ und der in b) beschriebenen Vorrichtung zur automatischen Beeinflussung der Antriebs- bzw. Bremskraft H zur Regelung des Kurswinkels $v$ und der Fahrzeuggeschwindigkeit v kann dem Fahrverhalten eine frei vorwählbare Dynamik aufgeprägt werden, die durch die Wahl der Reglerparameter eingestellt werden kann. Im vorliegenden Fall wird sowohl der Kurswinkel $v$ wie auch die Fahrzeuggeschwindigkeit v dem jeweiligen Sollwert mit einem dynamischen Verhalten 1. Ordnung nachgeführt.

### 9.2.2 Regelungsvorrichtung für die Fahrzeugposition durch die automatische Bestimmung der Sollwerte untergeodneter Regelkreise für den Kurswinkel und die Geschwindigkeit

### a) Automatische Bestimmung des Sollwerts $w_v$ für den Kurswinkel

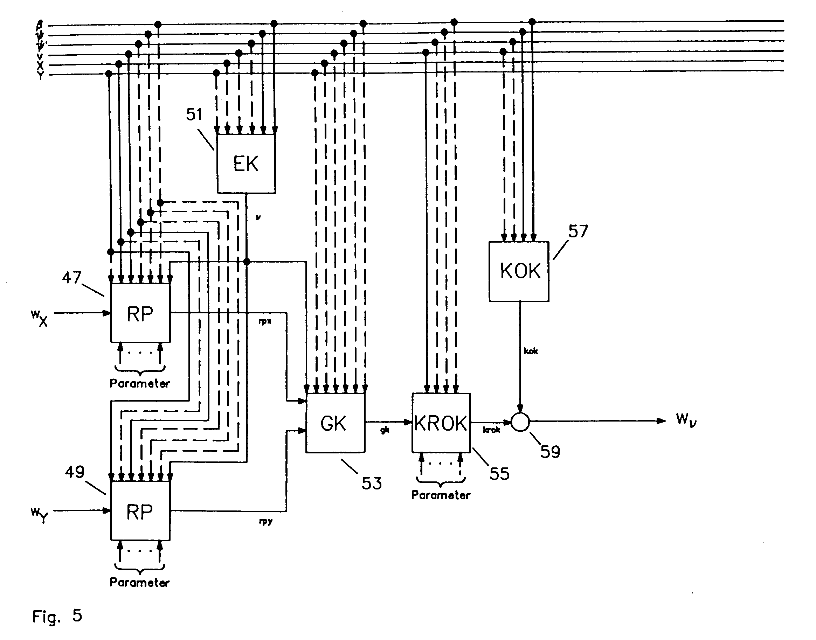

Fig. 5 zeigt die erfindungsgemäß ausgebildete Vorrichtung zur automatischen Bestimmung des Sollwerts $w_v$ für den Kurswinkel. Hierbei liegen eingangsseitig die Sollwerte $w_X$ und $w_Y$ für die Fahrzeugposition sowie die Meßgrößen für den Schwimmwinkel $\beta$, den Gierwinkel $\psi$, die Fahrzeuggeschwindigkeit v und die Fahrzeugposition X, Y an. Am Ausgang dieser Regelungsvorrichtung liegt der aktuell einzustellende Sollwert $w_v$ für den Kurswinkel an.

Mit dem Addierer 59 wird das Signal kok des Kompensationszweiges, das den Anteil der bezüglich der für die Positionierung relevanten Einzelkoordinaten untereinander entstehenden Verkopplungen repräsentiert, der durch den Sollwert $w_v$ kompensiert werden muß und der dabei durch die Kompensationsvorrichtung KOK (Block 57) in Abhängigkeit vom Schwimmwinkel $\beta$ und vom Gierwinkel $\psi$ ermittelt wird, mit dem Ausgangssignal krok des Regelungszweiges zusammengeführt.

Im Regelungszweig wird zunächst in der Vorrichtung RP (Block 47) die durch geeignete Reglerparameter modifizierte Regeldifferenz rpx für die x-Koordinate der Fahrzeugposition in Abhängigkeit vom Kurswinkel $v$, von der Fahrzeuggeschwindigkeit v, von der x-Koordinate der Fahrzeugposition und dem Sollwert $w_X$ für die x-Koordinate der Position bestimmt. Dabei wird das Signal für den Kurswinkel $v$ in der Vorrichtung EK (Block 51) in Abhängigkeit vom Gierwinkel $\psi$ und vom Schwimmwinkel $\beta$ ermittelt. Außerdem wird die in der Vorrichtung RP (Block 49) ebenfalls durch geeignete Reglerparameter modifizierte Regeldifferenz rpy für die y-Koordinate der Fahrzeugposition in Abhängigkeit vom Kurswinkel $v$ von der Fahrzeuggeschwindigkeit v, von der y-Koordinate der Fahrzeugposition und dem Sollwert $w_Y$ für die y-Koordinate der Position bestimmt.

In der Mischvorrichtung GK (Block 53) werden die beiden modifizierten Regeldifferenzen rpx und rpy für die Fahrzeugposition in Abhängigkeit vom Kurswinkel $v$ gewichtet und somit zur gewichteten modifizierten Regeldifferenz gk zusammengeführt.

In der Vorrichtung KROK (Block 55), der die gewichtete modifizierte Regeldifferenz gk als Eingangsgröße zugeführt wird, wird das dynamische Verhalten des Regelungszweiges einer untergeordneten Regelungsvorrichtung durch die Wahl eines Parameters angepaßt und somit letztlich das Ausgangssignal krok des Regelungszweiges gebildet, das wie bereits erwähnt, durch Addition (Addierer 59) mit dem Ausgangssignal kok der Kompensationsvorrichtung KOK (Block 57) das Signal für den Sollwert $w_v$ eines untergeordneten Regelkreises für den Kurswinkel ergibt.

Das "Stellsignal" $w_v$ für den Kurswinkel, das als Sollwert für einen nachgeschalteten Regelkreis zu verstehen ist, läßt sich formelmäßig wie folgt beschreiben, wobei die Werte für $\lambda_i$ und $\alpha_{ij}$ vorwählbare Parameter, die Werte für $c_i$ (i, j = 1,2,...) Konstanten und die Werte für $a_{ij}$ Parameter des nachgeschalteten Regelkreises repräsentieren.

$$w_\nu = \psi - \beta$$

$$+ \frac{1}{v \cdot a_{01}} \left\{ \left[ \alpha_{11} \cdot \cos(\psi - \beta) \cdot v + \alpha_{01} \cdot X - \lambda_1 w_X \right] \cdot \sin(\psi - \beta) \right.$$

$$\left. - \left[ \alpha_{12} \cdot \sin(\psi - \beta) \cdot v + \alpha_{02} \cdot Y - \lambda_2 w_Y \right] \cdot \cos(\psi - \beta) \right\}$$

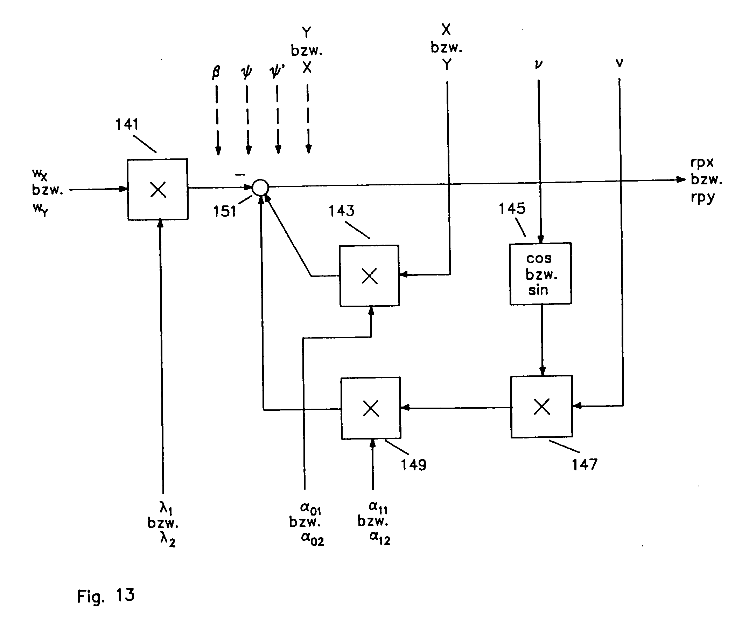

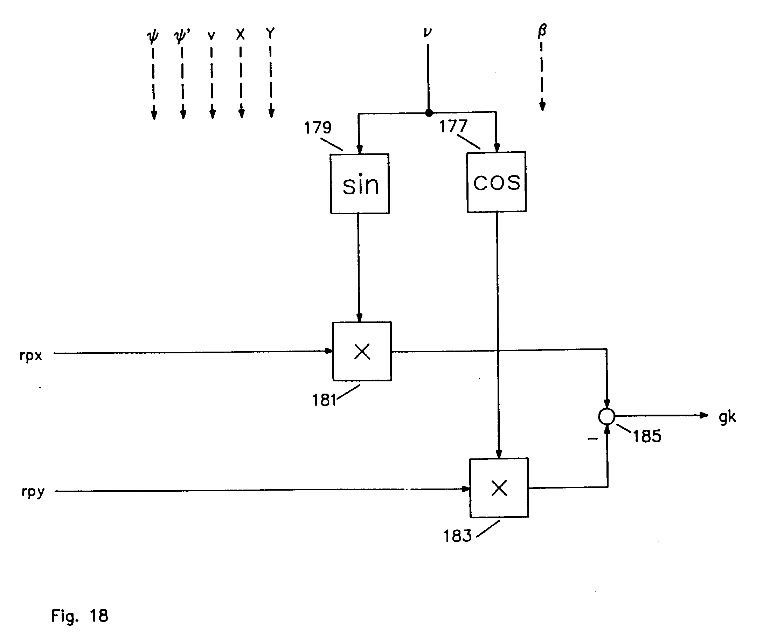

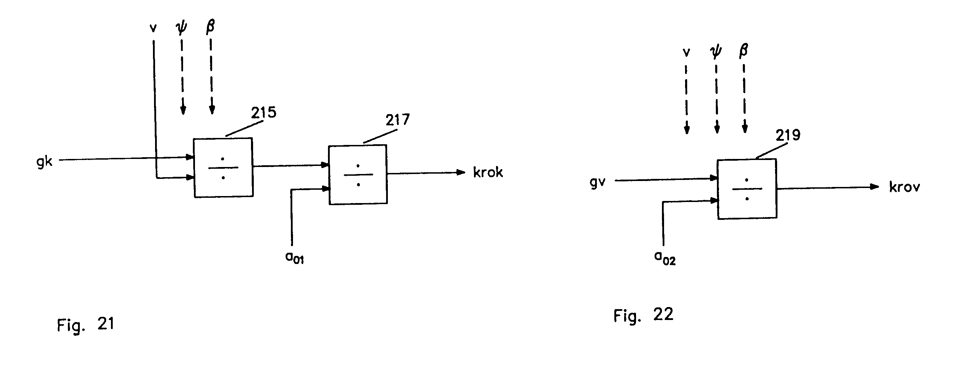

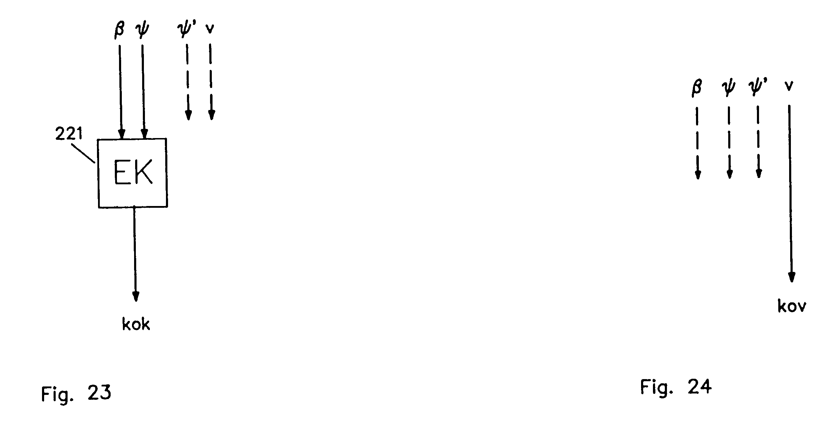

Die Vorrichtungen RP, EK, GK, KROK und KOK sind in den Figs. 13, 11, 18, 21 und 23 skizziert und in den Ansprüchen 23, 21, 28, 31 und 33 beschrieben.

### b) Automatische Bestimmung des Sollwertes $w_v$ für die Geschwindigkeit

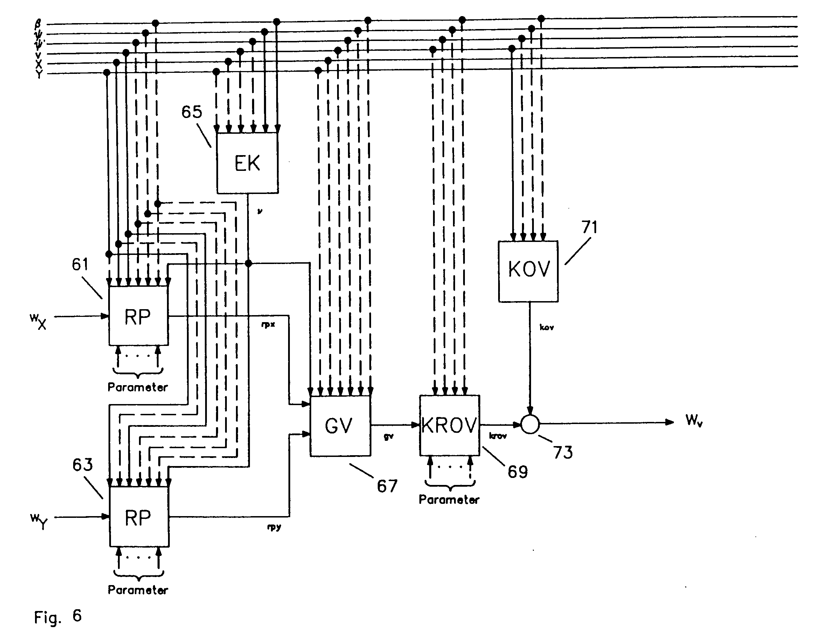

Fig. 6 zeigt die erfindungsgemäß ausgebildete Vorrichtung zur automatischen Bestimmung des Sollwerts $w_v$ für die Geschwindigkeit. Hierbei liegen eingangsseitig die Sollwerte $w_X$ und $w_Y$ für die Fahrzeugposition sowie die Meßgrößen für den Schwimmwinkel $\beta$, den Gierwinkel $\psi$, die Fahrgeschwindigkeit v und die Fahrzeugposition X, Y an. Am Ausgang dieser Regelungsvorrichtung liegt der aktuell einzustellende Sollwert $w_v$ für die Geschwindigkeit an.

Mit dem Addierer 73 wird das Signal kov des Kompensationszweiges, das den Anteil der bezüglich der für die Positionierung relevanten Einzelkoordinaten untereinander entstehenden Verkopplungen repräsentiert, der durch den Sollwert $w_v$ kompensiert werden muß und der dabei durch die Kopmpensationsvorrichtung KOV (Block 71) in Abhängigkeit von der Fahrzeuggeschwindigkeit v ermittelt wird mit dem Ausgangssignal krov des Regelungszweiges zusammengeführt.

Im Regelungszweig wird zunächst in der Vorrichtung RP (Block 61) die durch geeignete Reglerparameter modifizierte Regeldifferenz rpx für die x-Koordinate der Fahrzeugposition in Abhängigkeit vom Kurswinkel $\nu$, von der Fahrzeuggeschwindigkeit v, von der x-Koordinate der Fahrzeugposition und dem Sollwert $w_X$ für die x-Koordinate der Position bestimmt. Dabei wird das Signal für den Kurswinkel $\nu$ in der Vorrichtung EK (Block 65) in Abhängigkeit vom Gierwinkel $\psi$ und vom Schwimmwinkel $\beta$ ermittelt. Außerdem wird die in der Vorrichtung RP (Block 63) ebenfalls durch geeignete Reglerparameter modifizierte Regeldifferenz rpy für die y-Koordinate der Fahrzeugposition in Abhängigkeit vom Kurswinkel $\nu$ von der Fahrzeuggeschwindigkeit v, von der y-Koordinate der Fahrzeugposition und dem Sollwert $w_Y$ für die y-Koordinate der Position bestimmt.

In der Mischvorrichtung GV (Block 67) werden die beiden modifizierten Regeldifferenzen rpx und rpy für die Fahrzeugposition in Abhängigkeit vom Kurswinkel $\nu$ gewichtet und somit zur gewichteten modifizierten Regeldifferenz gv zusammengeführt.

In der Vorrichtung KROV (Block 69), der die gewichtete modifizierte Regeldifferenz gv als Eingangsgröße zugeführt wird, wird das dynamische Verhalten des Regelungszweiges einer untergeordneten Regelungsvorrichtung durch die Wahl eines Parameters angepaßt und somit letztlich das Ausgangssignal krov des Regelungszweiges gebildet, das wie bereits erwähnt, durch Addition (Addierer 73) mit dem Ausgangssignal kov der Kompensationsvorrichtung KOV (Block 71) das Signal für den Sollwert $w_v$ eines untergeordneten Regelkreises für die Fahrzeuggeschwindigkeit ergibt.

Das "Stellsignal" $w_v$ für die Fahrzeuggeschwindigkeit, das als Sollwert für einen nachgeschalteten Regelkreis zu verstehen ist, läßt sich formelmäßig wie folgt beschreiben, wobei die Werte für $\lambda_i$ und $\alpha_{ij}$ vorwählbare Parameter, die Werte für $c_i$ )i, j = 1,2,...,) Konstanten und die Werte für $a_{ij}$ Parameter des nachgeschalteten Regelkreises repräsentieren.

$$w_v = v - \frac{1}{a_{02}} \left\{ \left[ \alpha_{11} \cdot \cos(\psi - \beta) \cdot v + \alpha_{01} \cdot X - \lambda_1 w_X \right] \cdot \cos(\psi - \beta) \right.$$

$$\left. + \left[ \alpha_{12} \cdot \sin(\psi - \beta) \cdot v + \alpha_{02} \cdot Y - \lambda_2 w_Y \right] \cdot \sin(\psi - \beta) \right\}$$

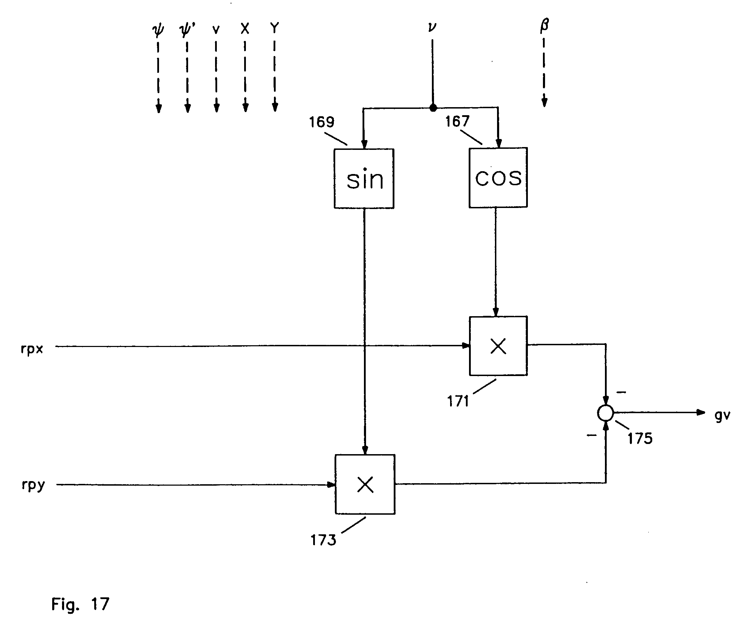

Die Vorrichtungen RP, EK, GV, KROV und KOV sind in den Figs. 13, 11, 17, 22 und 24 skizziert und in den Ansprüchen 23, 21, 27, 32 und 34 beschrieben.

Durch den Einsatz der in a) beschriebenen Vorrichtung zur automatischen Bestimmung des Sollwerts $w_v$ für den Kurswinkel und der in b) beschriebenen Vorrichtung zur automatischen Bestimmung des Sollwerts $w_v$ für die Fahrzeuggeschwindigkeit zur Regelung der Fahrzeugposition kann dem Fahrverhalten eine frei vorwählbare Dynamik aufgeprägt werden, die durch die Wahl der Reglerparameter für die Blöcke RP eingestellt werden kann. Im vorliegenden Fall werden die Fahrzeugkoordinaten in x- und y-Richtung dem jeweiligen Sollwert mit einem dynamischen Verhalten 2. Ordnung nachgeführt.

### 9.2.3 Regelungs vorrichtung für die Fahrzeugposition durch die automatische Beeinflussung des Lenkwinkeleinschlages δ und der Antriebs- bzw. Bremskraft H

#### a) Automatische Beeinflussung des Lenkwinkeleinschlags δ

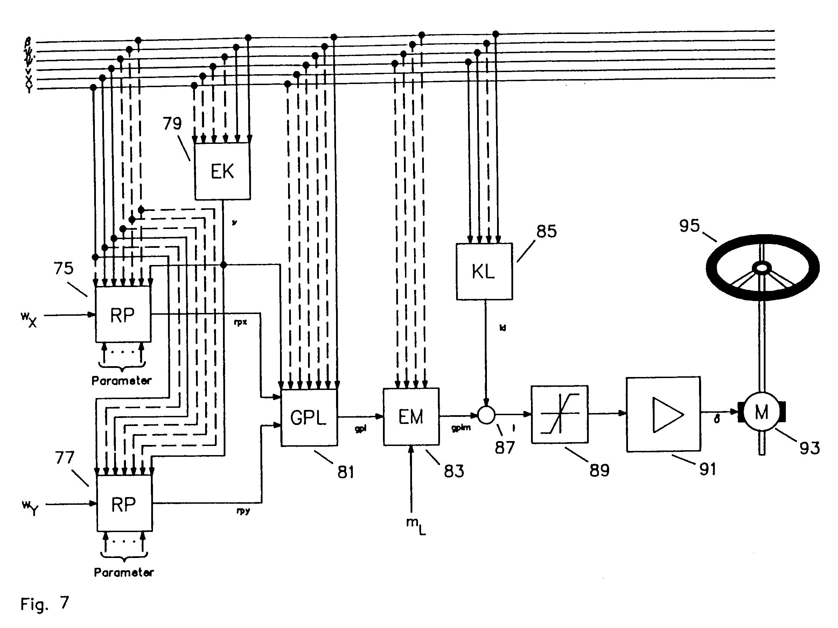

Fig. 7 zeigt die erfindungsgemäß ausgebildete Vorrichtung zur automatischen Beeinflussung des Lenkwinkeleinschlags δ. Hierbei liegen eingangsseitig die Sollwerte $w_X$ und $w_Y$ für die Fahrzeugposition sowie die Meßgrößen für den Schwimmwinkel β, den Gierwinkel ψ, die Giergeschwindigkeit ψ′, die Fahrzeuggeschwindigkeit v und die Fahrzeugposition X, Y an. Am Ausgang dieser Regelungsvorrichtung liegt der aktuell einzustellende Lenkwinkeleinschlag als elektrisches Signal I an. Mittels einer geeigneten Vorrichtung, z. B. dem Anpaßglied 89 in Verbindung mit dem Leistungsverstärker 91 und dem Servoantrieb 93 kann der tatsächliche Lenkwinkeleinschlag δ dem Signal I immer angepaßt werden.

Mit dem Addierer 87 wird das Signal kl des Kompensationszweiges, das den Anteil der untereinander entstehenden Verkopplungen in der Längs- und Querdynamik des Fahrzeugs repräsentiert, der durch die Lenkung kompensiert werden muß und der dabei durch die Kompensationsvorrichtung KL (Block 85) in Abhängigkeit vom Schwimmwinkel β, von der Giergeschwindigkeit ψ′ und der Fahrzeuggeschwindigkeit v ermittelt wird, mit dem Ausgangssignal gplm des Regelungszweiges zusammengeführt.

Im Regelungszweig wird zunächst in der Vorrichtung RP (Block 75) die durch geeignete Reglerparameter modifizierte Regeldifferenz rpx für die x-Koordinate der Fahrzeugposition in Abhängigkeit vom Kurswinkel ν, von der Fahrzeuggeschwindigkeit v, von der x-Koordinate der Fahrzeugposition und dem Sollwert $w_X$ für die x-Koordinate der Position bestimmt. Dabei wird das Signal für den Kurswinkel ν in der Vorrichtung EK (Block 79) in Abhängigkeit vom Gierwinkel ψ und vom Schwimmwinkel β ermittelt. Außerdem wird die in der Vorrichtung RP (Block 77) ebenfalls durch geeignete Reglerparameter modifizierte Regeldifferenz rpy für die y-Koordinate der Fahrzeugposition in Abhängigkeit vom Kurswinkel ν, von der Fahrzeuggeschwindigkeit v, von der y-Koordinate der Fahrzeugposition und dem Sollwert $w_Y$ für die y-Koordinate der Position bestimmt.

In der Mischvorrichtung GPL (Block 81) werden die beiden modifizierten Regeldifferenzen rpx und rpy für die Fahrzeugposition in Abhängigkeit vom Kurswinkel ν und vom Schwimmwinkel β gewichtet und somit zur gewichteten modifizierten Regeldifferenz gpl zusammengeführt.

In der Vorrichtung EM (Block 83), der die gewichtete modifizierte Regeldifferenz gpl als Eingangsgröße zugeführt wird, wird das dynamische Verhalten des Regelungszweiges der unterschiedlichen Gesamtmasse des Fahrzeugs in Abhängigkeit von der Fahrzeugladung $m_L$ angepaßt und somit letztlich das Ausgangssignal gplm des Regelungszweiges gebildet, das wie bereits erwähnt, durch Addition (Addierer 87) mit dem Ausgangssignal kl der Kompensationsvorrichtung KL (Block 85) das Stellsignal I für den Lenkwinkeleinschlag δ ergibt.

Das Stellsignal I für den Lenkwinkeleinschlag läßt sich formelmäßig wie folgt beschreiben, wobei die Werte für $\lambda_i$ und $\alpha_{ij}$ vorwählbare Parameter und die Werte für $c_i$ (i, j = 1,2,...) Konstanten repräsentieren.

$$l = \quad c_5 \cdot \frac{\psi'}{v} - c_6 \cdot \beta$$

$$+ c_7 \cdot m_G \left\{ \left[ \alpha_{11} \cdot \cos(\psi{-}\beta) \cdot v + \alpha_{01} \cdot X - \lambda_1 w_X \right] \left[ \sin(\psi{-}\beta) + \beta \cdot \cos(\psi{-}\beta) \right] \right.$$

$$\left. + \left[ \alpha_{12} \cdot \sin(\psi{-}\beta) \cdot v + \alpha_{02} \cdot Y - \lambda_2 w_Y \right] \left[ \beta \cdot \sin(\psi{-}\beta) - \cos(\psi{-}\beta) \right] \right\}$$

Hierbei ist $m_G$ die Gesamtmasse des Fahrzeugs, bestehend aus der Leermasse m und der Masse der Ladung $m_L$.

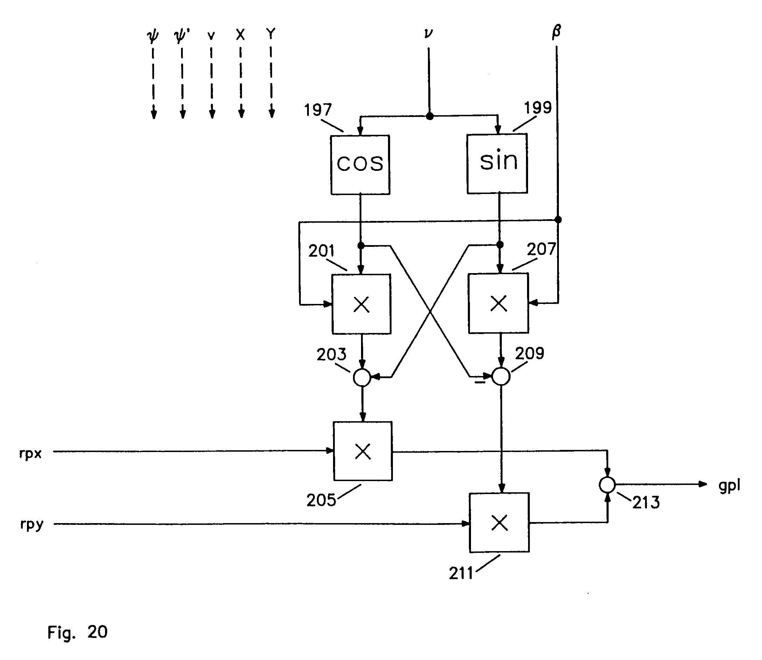

Die Vorrichtungen RP, EK, GPL, EM und KL sind in den Figs. 13, 11, 20, 12 und 9 skizziert und in den Ansprüchen 23, 21, 30, 22 und 19 beschrieben.

### b) Automatische Beeinflussung der Antriebs- bzw. Bremskraft H

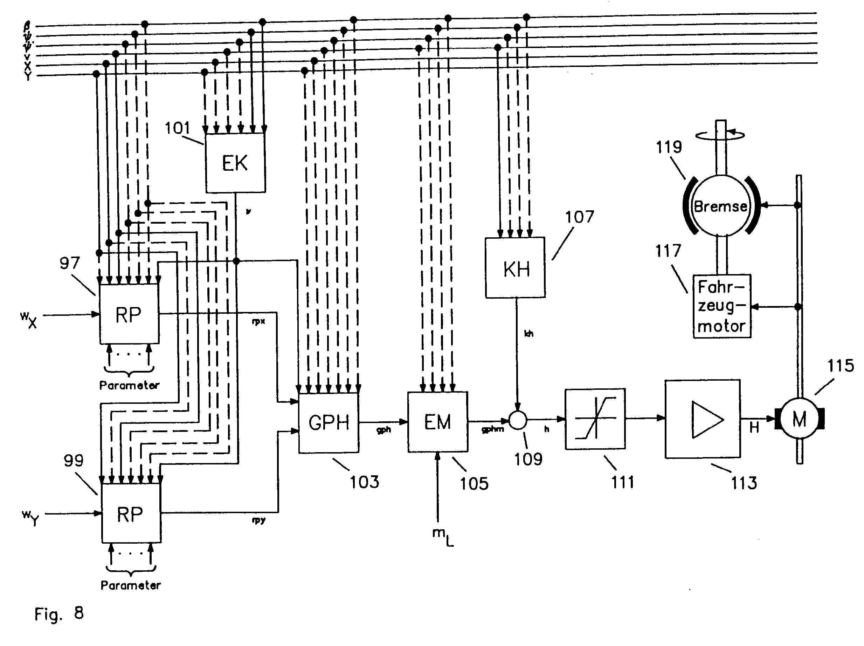

Fig. 8 zeigt die erfindungsgemäß ausgebildete Vorrichtung zur automatischen Beeinflussung der Antriebs- bzw. Bremskraft H. Hierbei liegen eingangsseitig die Sollwerte $w_X$ und $w_Y$ für die Fahrzeugposition sowie die Meßgrößen für den Schwimmwinkel $\beta$, den Gierwinkel $\psi$, die Fahrzeuggeschwindigkeit v und die Fahrzeugposition X, Y an. Am Ausgang dieser Regelungsvorrichtung liegt die aktuell einzustellende Antriebs- bzw. Bremskraft als elektrisches Signal h an. Mittels einer geeigneten Vorrichtung, z. B. dem Anpaßglied 111 in Verbindung mit dem Leistungsverstärker 113 und dem Servoantrieb 115 kann die tatsächliche Antriebs- bzw. Bremskraft H dem Signal h immer angepaßt werden.

Mit dem Addierer 109 wird das Signal kh des Kompensationszweiges, das den Anteil der untereinander entstehenden Verkopplungen in der Längs- und Querdynamik des Fahrzeugs repräsentiert, der durch die Antriebs- bzw. Bremskraft kompensiert werden muß und der dabei durch die Kompensationsvorrichtung KH (Block 107) in Abhängigkeit von der Fahrzeuggeschwindigkeit v ermittelt wird mit dem Ausgangssignal gphm des Regelungszweiges zusammengeführt.

Im Regelungszweig wird zunächst in der Vorrichtung RP (Block 97) die durch geeignete Reglerparameter modifizierte Regeldifferenz rpx für die x-Koordinate der Fahrzeugposition in Abhängigkeit vom Kurswinkel $v$, von der Fahrzeuggeschwindigkeit v, von der x-Koordinate der Fahrzeugposition und dem Sollwert $w_X$ für die x-Koordinate der Position bestimmt. Dabei wird das Signal für den Kurswinkel $v$ in der Vorrichtung EK (Block 101) in Abhängigkeit vom Gierwinkel $\psi$ und vom Schwimmwinkel $\beta$ ermittelt. Außerdem wird die in der Vorrichtung RP (Block 99) ebenfalls durch geeignete Reglerparameter modifizierte Regeldifferenz rpy für die y-Koordinate der Fahrzeugposition in Abhängigkeit vom Kurswinkel $v$, von der Fahrzeuggeschwindigkeit v, von der y-Koordinate der Fahrzeugposition und dem Sollwert $w_Y$ für die y-Koordinate der Position bestimmt.

In der Mischvorrichtung GPH (Block 103) werden die beiden modifizierten Regeldifferenzen rpx und rpy für die Fahrzeugposition in Abhängigkeit vom Kurswinkel $v$ gewichtet und somit zur gewichteten modifizierten Regeldifferenz gph zusammengeführt.

In der Vorrichtung EM (Block 105), der die gewichtete modifizierte Regeldifferenz gph als Eingangsgröße zugeführt wird, wird das dynamische Verhalten des Regelungszweiges der unterschiedlichen Gesamtmasse des Fahrzeugs in Abhängigkeit von der Fahrzeugladung $m_L$ angepaßt und somit letztlich das Ausgangssignal gphm des Regelungszweiges gebildet, das wie bereits erwähnt, durch Addition (Addierer 109) mit dem Ausgangssignal kh der Kompensationsvorrichtung KH (Block 107) das Stellsignal h für Antriebsbzw. Bremskraft H ergibt.

Das Stellsignal h für die Antriebs- bzw. Bremskraft läßt sich formelmäßig wie folgt beschreiben, wobei die Werte für $\lambda_i$ und $\alpha_{ij}$ vorwählbare Parameter und die Werte für $c_i$ (i, j = 1,2,...) Konstanten repräsentieren.

$$h = c_8 \cdot v^2$$

$$-m_G \left\{ \left[ \alpha_{11} \cdot \cos(\psi - \beta) \cdot v + \alpha_{01} \cdot X - \lambda_1 w_X \right] \cdot \cos(\psi - \beta) \right.$$

$$\left. + \left[ \alpha_{12} \cdot \sin(\psi - \beta) \cdot v + \alpha_{02} \cdot Y - \lambda_2 w_Y \right] \cdot \sin(\psi - \beta) \right\}$$

Hierbei ist $m_G$ die Gesamtmasse des Fahrzeugs, bestehend aus der Leermasse m und der Masse der Ladung $m_L$.

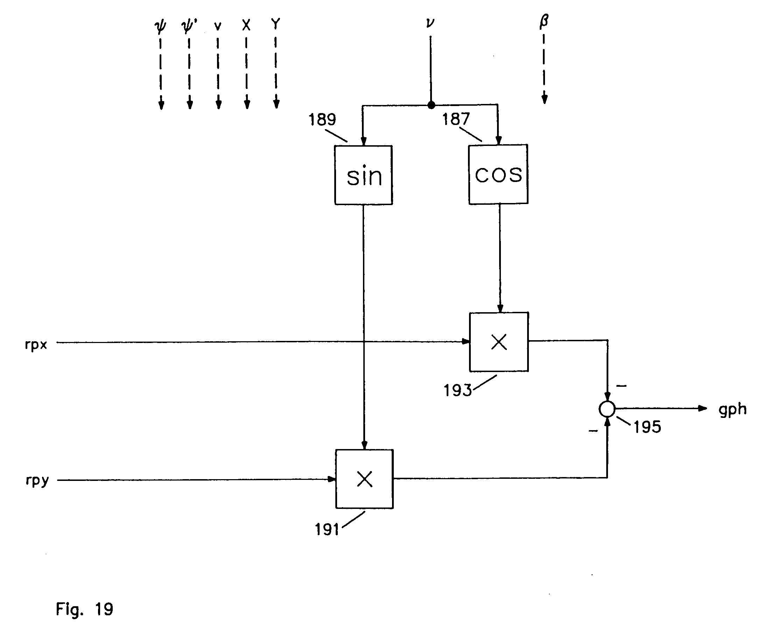

Die Vorrichtungen RP, EK, GPH, EM und KH sind in den Figs. 13, 11, 19, 12 und 10 skizziert und in den Ansprüchen 23, 21, 29, 22 und 20 beschrieben.

Durch den Einsazu der in a) beschriebenen Vorrichtung zur automatischen Beeinflussung des Lenkwinkeleinschlags δ und der in b) beschriebenen Vorrichtung zur automatischen Beeinflussung der Antriebs- bzw. Bremskraft H zur Regelung der Fahrzeugposition kann dem Fahrverhalten eine frei vorwählbare Dynamik aufgeprägt werden, die durch die Wahl der Reglerparameter eingestellt werden kann. Im vorliegenden Fall werden die Fahrzeugkoordinaten in x- und y-Richtung dem jeweiligen Sollwert mit einem dynamischen Verhalten 2. Ordnung nachgeführt.

### 9.3 Vorrichtung zur Schätzung des nur aufwendig meßbaren Schwimmwinkels

Für die Regelungsvorrichtungen nach den Abschnitten 9.2.1 bis 9.2.3 müssen immer die aktuellen Werte eines Teils oder aller dynamischen Fahrzeuggrößen β, ψ, ψ′ und v sowie u. U. der Positionskoordinaten X und Y zur Verfügung stehen. Bis auf den Schwimmwinkel β können alle diese Größen durch geeignete Meßeinrichtungen ermittelt werden. Der Schwimmwinkel β hingegen, der den Winkel zwischen der Ausrichtung der Fahrzeuglängsachse und der Geschwindigkeitsrichtung des Fahrzeugs repräsentiert, läßt sich meßtechnisch nur äußerst schwierig erfassen. Somit erscheint es zweckmäßig, diese Größe durch eine geeignete Vorrichtung bereitstellen zu lassen, die unter der Berücksichtigung des Verlaufs der übrigen Meß- und Stellgrößen der Regelungsvorrichtungen einen Schätzwert $\hat{\beta}$ für den Schwimmwinkel rekonstruiert. Im folgenden wird erfindungsgemäß eine Vorrichtung beschrieben, die aus dem zeitlichen Verlauf der Giergeschwindigkeit ψ′, der Fahrzeuggeschwindigkeit v sowie des Lenkwinkeleinschlags δ und der Antriebs-bzw. Bremskraft H einen Schätzwert $\hat{\beta}$ für den Schwimmwinkel ermittelt. Dabei konvergiert der Schätzfehler $\tilde{\beta} = \beta - \hat{\beta}$ gegen 0, d. h. nach dem Ablauf einer geringen Einschwingzeit nach dem Einschalten der Schätzeinrichtung wird der Schätzfehler verschwindend gering.

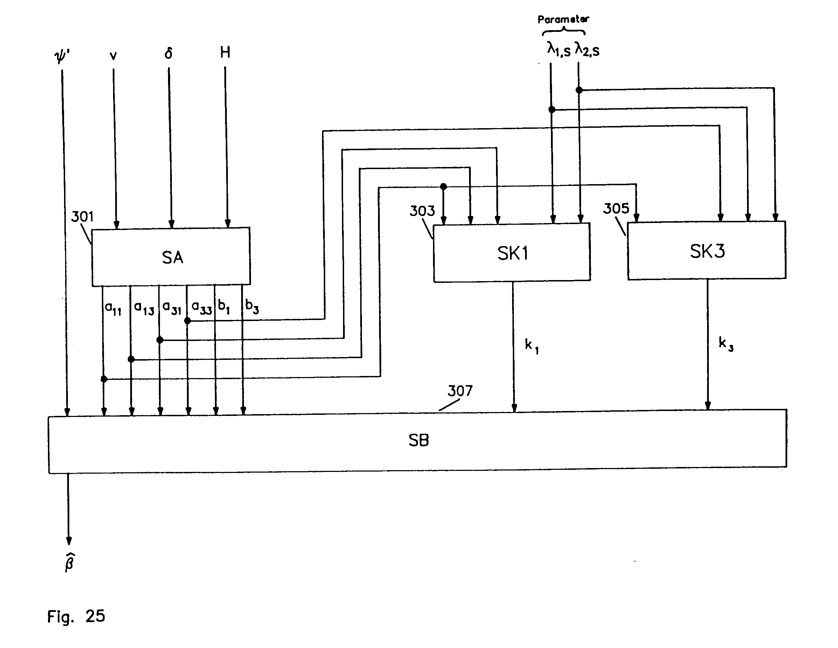

Ausgangspunkt für die Vorrichtung zur Schätzung des Schwimmwinkels β ist eine möglichst naturgetreue Nachbildung des Schwimmwinkels β und der Giergeschwindigkeit ψ. Dabei wird für den Schwimmwinkel der Schätzwert $\hat{\beta}$ und für die Giergeschwindigkeit der Schätzwert $\hat{\psi}′$ ermittelt. Die Differenz zwischen dem gemessenen Wert der Giergeschwindigkeit ψ′ und dem Schätzwert $\hat{\psi}′$ wird von einer Korrekturschleife herangezogen, deren Aufgabe es ist, ein Auseinanderdriften zwischen den dynamischen Fahrzeuggrößen β und ψ′ und deren Schätzwerte $\hat{\beta}$ und $\hat{\psi}′$ zu verhindern. Die Korrektureinrichtung beeinflußt somit die Schätzeinrichtung so, daß sich die rekonstruierten Werte $\hat{\psi}′$ und $\hat{\beta}$ in einer optimalen Weise an die echten Werte ψ′ und β anpassen. Somit dient die Rekonstruktion der Giergeschwindigkeit $\hat{\psi}′$ der permanenten Nachkalibrierung der Schätzeinrichtung. Der rekonstruierte Schwimmwinkel $\hat{\beta}$ kann hingegen als Ersatz für die praktisch nicht mögliche Messung des Schwimmwinkels herangezogen werden. Fig. 25 zeigt die Funktionsweise der Vorrichtung zur Schätzung des Schwimmwinkels, in die die Vorrichtungen SA, SK1, SK3 und SB integriert sind. Dabei werden in der Vorrichtung SA variable Schätzparameter zur möglichst realitätsgetreuen Vorab-Nachbildung der Schätzwerte $\hat{\beta}$ und $\hat{\psi}′$ ermittelt, während in den Vorrichtungen SK1 und SK3 die Signale für Gewichtungsfaktoren gebildet werden, die dafür Sorge tragen, daß die in der Vorrichtung SB gebildeten Schätzwerte $\hat{\beta}$ und $\hat{\psi}′$ durch die in die Vorrichtung SB integrierte Korrekturschleife auf die tatsächlichen Werte von Schwimmwin-

kel $\beta$ und Giergeschwindigkeit $\hat{\psi}'$ zulaufen, so daß die Schätzfehler mit einem dynamischen Verhalten zweiter Ordnung verschwinden.

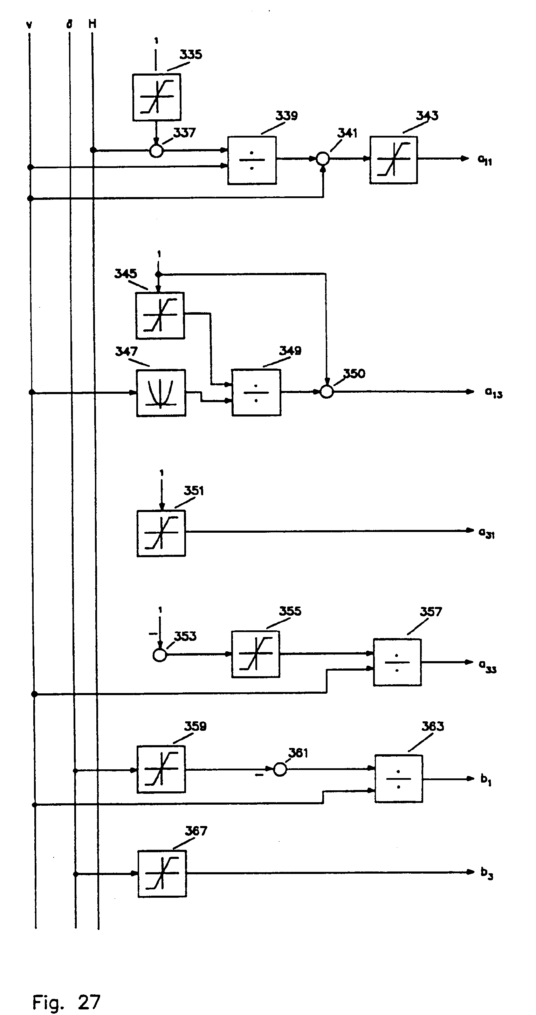

Die Vorrichtung SA dient der Ermittlung der Signale $a_{11}$, $a_{13}$, $a_{31}$, $a_{33}$, $b_1$ und $b_3$ von variablen Schätzparametern. Sie ist in Fig. 27 skizziert und in Anspruch 36 beschrieben. Eingangsseitig benötigt diese Vorrichtung die aktuellen Werte der Fahrzeuggeschwindigkeit v sowie der Antriebs- bzw. Bremskraft H und des Lenkwinkeleinschlages $\delta$. Ausgehend von diesen Größen werden alle der oben genannten Signale, die die variablen Schätzparameter beinhalten, ermittelt.

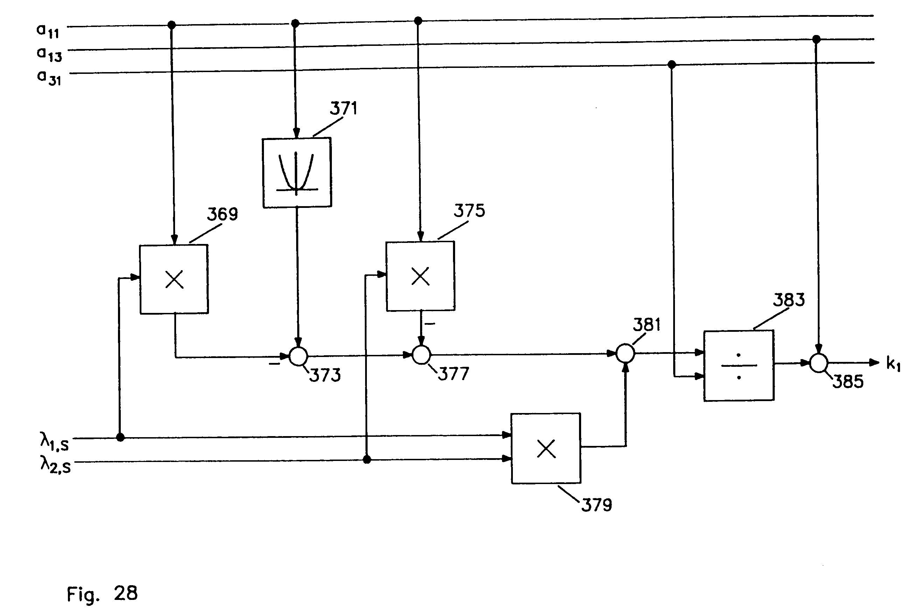

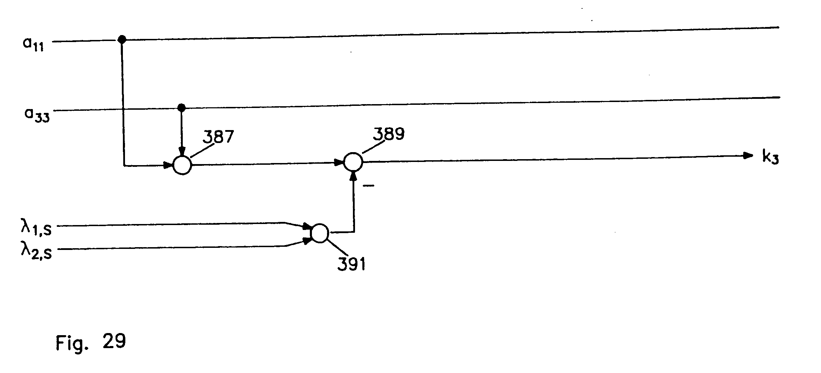

In den Vorrichtungen SK1 und SK3 werden die Gewichtungssignale $k_1$ und $k_3$ ermittelt. Hierbei stellen die durch die Vorrichtung SA bereitgestellten Signale $a_{11}$, $a_{13}$ und $a_{31}$ die Eingangsgrößen für die Vorrichtung SK1 und die Signale $a_{11}$ und $a_{33}$ die Eingangsgrößen für die Vorrichtung SK3 dar. In der Vorrichtung SK1 (Fig. 28) zur Ermittlung des Gewichtungssignals $k_1$ wird durch den Addierer 385 der Einfluß des Signals $a_{13}$ und durch den Dividierer 383 der Einfluß des Signals $a_{31}$ auf die Schätzfehler $\tilde{\beta}$ und $\tilde{\psi}'$ kompensiert. Durch Multiplizierer 379 und Addierer 381 wird mittels der Parameter $\lambda_{1,s}$ und $\lambda_{2,s}$ die Dynamik der Schätzfehler beeinflußt, wobei diese Parameter so einzustellen sind, daß die Schätzfehler möglichst schnell gegen den Wert Null konvergieren. Durch die Subtrahierer 373 und 377 werden schädliche Einflüsse kompensiert, die die Vorrichtung SK3 in die Dynamik der Schätzfehler einbringt, die jedoch nur in der Anordnung SK1 kompensiert werden können. In der Vorrichtung SK3 (siehe Fig. 29) zur Ermittlung des Signals $k_3$ wird durch den Addierer 387 der Einfluß der Signale $a_{11}$ und $a_{33}$ auf die Schätzfehler $\tilde{\beta}$ und $\tilde{\psi}'$ kompensiert. Durch den Addierer 391 und den Subtrahierer 389 wird, wie bei der Vorrichtung SK1, die Dynamik der Schätzfehler beeinflußt.

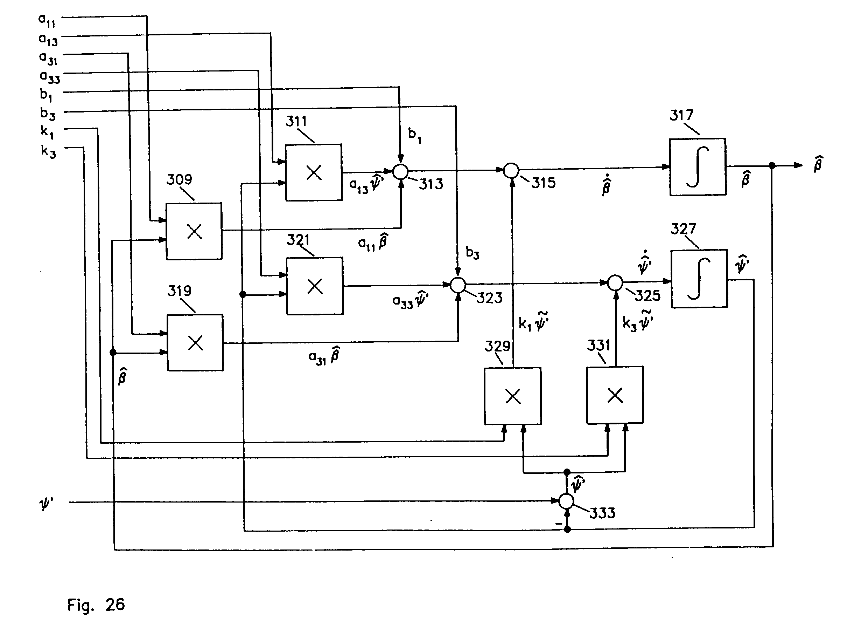

In der Vorrichtung SB (siehe Fig. 26) werden die Schätzwerte $\hat{\beta}$ für den Schwimmwinkel und $\hat{\psi}'$ für die Giergeschwindigkeit ermittelt. Hierfür wird das dynamische Verhalten des Schwimmwinkels und der Giergeschwindigkeit unter Miteinbeziehung der durch die Vorrichtung SA bereitgestellten Signale $a_{11}$, $a_{13}$, $a_{31}$, $a_{33}$, $b_1$ und $b_2$ für die variablen Schätzparameter nachgebildet. Somit wird die geschätzte Ableitung $\dot{\hat{\beta}}$ des Schwimmwinkels als Summe (Addierer 313) der Multiplikation (Multiplizierer 309) des Signals $a_{11}$ mit dem Schätzwert $\hat{\beta}$, der Multiplikation (Multiplizierer 311) des Signals $a_{13}$ mit der geschätzten Giergeschwindigkeit $\dot{\hat{\psi}}$ und den Signals $b_1$ ermittelt, zu der mit Addierer 315 das Korrektursignal $k_1$ $\tilde{\psi}'$ hinzugezählt wird. Die Integration dieses Signals (Integrierer 317) ergibt den Schätzwert $\hat{\beta}$ des Schwimmwinkels. Genauso wird die geschätzte Ableitung $\dot{\hat{\psi}}'$ der Giergeschwindigkeit als Summe (Addierer 323) der Multiplikation des Signals $a_{31}$ mit dem Schätzwert $\hat{\beta}$ (Multiplizierer 319), der Multiplikation des Signals $a_{33}$ mit der geschätzten Giergeschwindigkeit $\dot{\hat{\psi}}$ (Multiplizierer 321) und des Signals $b_3$ ermittelt, zu der mit Addierer 325 des Korrektursignals $k_3$ $\tilde{\dot{\psi}}$ hinzugezählt wird. Die Integration (Integrierer 327) dieses Signals ergibt den Schätzwert $\hat{\psi}'$ der Giergeschwindigkeit. Durch die Einwirkung der Signale $a_{13}$ $\hat{\psi}'$ (Ausgang Multiplizierer (311)) auf das dynamische Verhalten von $\hat{\beta}$ und $a_{31}$ $\hat{\beta}$ (Ausgang Multiplizierer (319)) auf das dynamische Verhalten von $\hat{\psi}'$ entsteht in der Vorrichtung SB ein enger Zusammenhang zwischen dem Verlauf von $\hat{\beta}$ und $\hat{\psi}'$, was dem dynamischen Fahrverhalten entspricht. Um jedoch zu vermeiden, daß die geschätzten Größen $\hat{\beta}$ und $\hat{\psi}'$ und die tatsächlichen Größen $\beta$ und $\psi'$ auseinanderdriften, wird, wie bereits erwähnt, durch die Summationsstellen 315 und 325 je ein Korrektursignal auf das dynamische Verhalten von $\hat{\beta}$ und $\hat{\psi}'$ aufgeschaltet. Da die Giergeschwindigkeit sowohl als Meßwert $\psi'$ wie auch als Schätzwert $\hat{\psi}'$ vorliegt, kann durch die Subtraktionsstelle 333 der Schätzfehler für die Giergeschwindigkeit $\tilde{\psi}'$ gebildet werden. Dieser Schätzfehler wird als Maß für das Auseinanderedriften zwischen den geschätzten Signalen der Vorrichtung SB und den korrespondierenden realen Größen herangezogen. Deshalb wird der Schätzfehler $\tilde{\psi}'$ mit dem Signal $k_1$ gewichtet (Multiplizierer 329) als Korrekturterm auf den Integrationszweig für den Schätzwert $\hat{\beta}$ (Addierer 315) und mit dem Signal $k_3$ gewichtet (Multiplizierer 331) auf Integrationszweig für den Schätzwert $\hat{\psi}'$ (Addierer 325) aufgeschaltet. Durch den Verlauf Signale $k_1$ und $k_3$ kann damit die Dynamik der Anpassung der geschätzten Signale an die tatsächlichen Signale beeinflußt werden.

## 9.4 Vorrichtung zur Vorsteuerung für die Positionsregelung eines Fahrzeuges

Für die in den Abschnitten 9.2.2 und 9.2.3 beschriebene Positionsregelung ergibt sich, daß das geregelte Fahrzeug seinem Sollwert sowohl in der x- als auch in der y-Richtung mit einem dynamischen Verhalten 2.

Ordnung folgt. Bei einer solchen Dynamik kann sich jedoch eine beträchtliche Regeldifferenz zwischen den Positionssollwerten und den tatsächlichen Positionswerten einstellen, die im wesentlichen von den gefahrenen Geschwindigkeiten, den Beschleunigungen sowie den eingestellten Reglerparametern abhängig ist. Diese Regeldifferenz, die sich durch einen Schleppfehler zwischen den Sollwerten $w_X$, $w_Y$ und den Positionswerten X und Y äußert, kann z. T. beträchtliche Ausmaße annehmen und verschwindet auch bei stationärer Geradeaus- oder Kreisfahrt nicht. Deshalb liegt es nahe, durch eine spezielle Vorrichtung diesen Schleppfehler zu kompensieren. Neben den Sollwerten für die Position benötigt diese Vorrichtung weitere dynamische Bewegungsgrößen der Sollwerte und die Reglerparameter, wovon letztlich die Regeldifferenz abhängt. Abhängig von diesen Größen wird der resultierende Schleppfehler ermittelt und auf die vorgegebenen Sollwerte aufgeschaltet. Durch eine solche Kompensationseinrichtung wird gewährleistet, daß sich zwischen den Positionssollwerten und der Fahrzeugposition keine Regeldifferenz bildet. Hier und im folgenden werden die tatsächlichen Positionssollwerte mit $w_X^{vor}$ und $w_Y^{vor}$ bezeichnet. Ebenso besitzen alle anderen Eingangsgrößen dieser Vorrichtung, die auch Vorsteuerung genannt wird, den Index "vor". Als Ausgang liefert die Vorsteuerung dann die um den Schleppfehler erhöhten für die Regelung relevanten Sollwerte $w_X$ und $w_Y$, die an die Regelungsvorrichtungen übergeben werden.

Zur vollständigen Kompensation des Schleppfehlers werden die folgenden dynamischen Bewegungsgrößen der Sollwerte eingeführt:

$w_X^{vor}$:     Sollposition in x-Richtung

$w_Y^{vor}$:     Sollposition in y-Richtung

$w_v^{vor}$:     Sollgeschwindigkeit

$w_{\dot{v}}^{vor}$:     Solllängsbeschleunigung

$w_v^{vor}$:     Sollwert für den Kurswinkel

$w_{\dot{v}}^{vor}$:     Sollwert für die Kurswinkelgeschwindigkeit

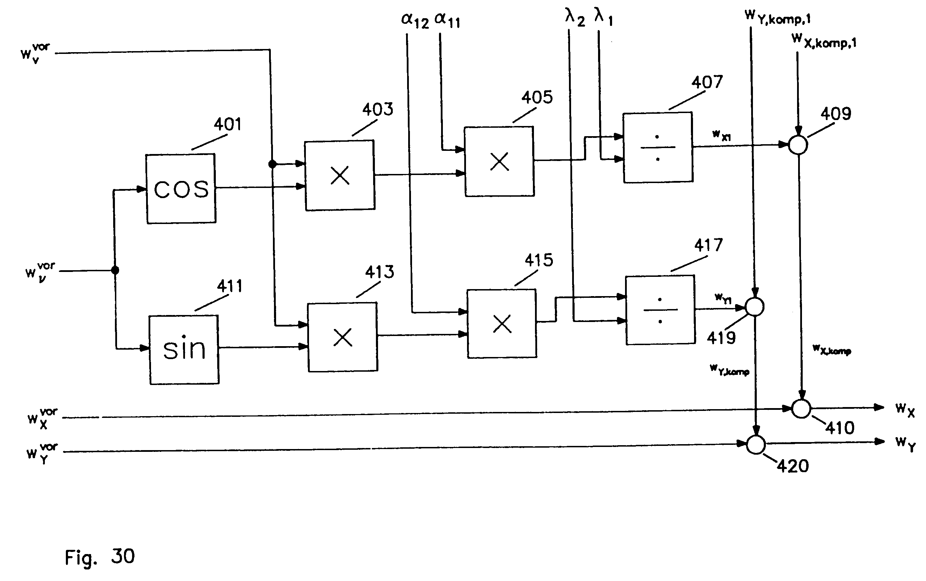

Fig. 30 zeigt die Vorrichtung VS1, in der der Einfluß der Sollgeschwindigkeit und dadurch mittelbar der Einfluß der resultierenden Fahrzeuggeschwindigkeit auf den Schleppfehler ermittelt wird. Hierbei werden durch die Multiplizierer 403 und 413 die Projektionen der Sollgeschwindigkeit in x- und y-Richtung durch Multiplikation der Sollgeschwindigkeit $w_v^{vor}$ mit dem Kosinus, der in Glied 401 gebildet wird, bzw. dem Sinus, der in Glied 411 gebildet wird, des Sollwerts $w_v$ für den Kurswinkel bereitgestellt, die anschließend in den Multiplizierern 405 und 415 mit Reglerparametern gewichtet und anschließend in den Dividierern 407 und 417 durch Reglerparameter dividiert werden. Die dadurch entstehenden Kompensationssignale $w_{X1}$ und $w_{Y1}$ für den Anteil des durch die resultierende Fahrzeuggeschwindigkeit entstehenden Schleppfehlers werden durch die Addierer 409 und 419 zu den Summensignalen $w_{X,komp,1}$ und $w_{Y,komp,1}$, die weitere Kompensationssignale beinhalten, hinzuaddiert, so daß die den Gesamtschleppfehler kompensierenden Signale $w_{X,komp}$ und $w_{Y,komp}$ entstehen, die ihrerseits durch die Addierer 410 und 420 zu den Positionssollwerten $w_X^{vor}$ und $w_Y^{vor}$ hinzuaddiert werden, so daß die um den zu erwartenden Schleppfehler erweiterten und somit für die Regelung relevanten Sollwerte $w_X$ und $w_Y$ entstehen.

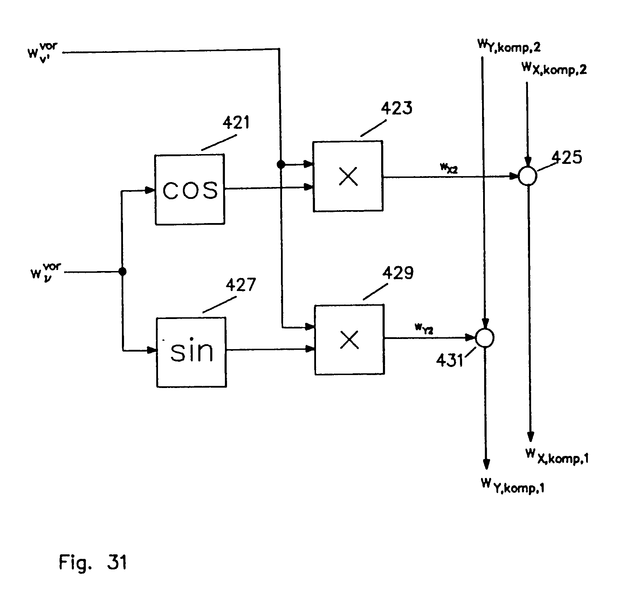

In ähnlicher Weise wird in der Vorrichtung VS2 (siehe Fig. 31) der Einfluß der Sollbeschleunigung und damit mittelbar der Einfluß der resultierenden Fahrzeuglängsbeschleunigung auf den Schleppfehler ermittelt, wobei in den Multiplizierern 423 und 429 die Projektionen der Sollbeschleunigung in x- und y-Richtung durch Multiplikation des Sollwerts $w_{\dot{v}}^{vor}$ für die Fahrzeuglängsbeschleunigung mit dem Kosinus, der in Glied 421 gebildet wird, bzw. dem Sinus, der in Glied 427 gebildet wird, des Sollwerts $w_v^{vor}$ für den Kurswinkel bereitgestellt wird. Die dadurch entstehenden Kompensationssignale $w_{X2}$ und $w_{Y2}$ für den Anteil des durch die resultierende Fahrzeuglängsbeschleunigung entstehenden Schleppfehlers werden durch die Addierer 425 und 431 zu den Summensignalen $w_{X,komp,2}$ und $w_{Y,komp,2}$, die weitere Kompensationssignale beinhalten, hinzuaddiert, so daß die Summensignale $w_{X,komp,1}$ und $w_{Y,komp,2}$ entstehen, die an die Vorrichtung VS1 weitergeleitet werden.

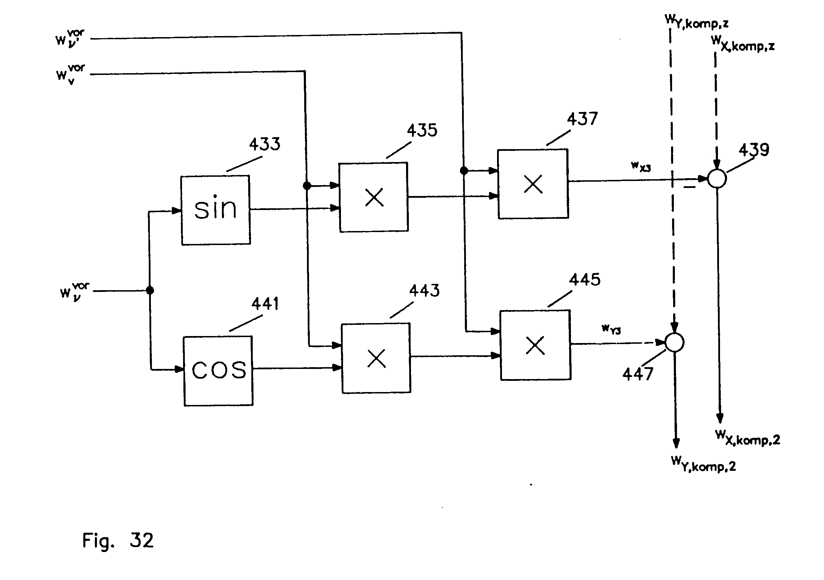

In der Vorrichtung VS3 (siehe Fig. 32) wird letztlich der Einfluß der Fahrzeugdrehung und damit mittelbar der Einfluß der resultierenden Fahrzeugquerbeschleunigung auf den Schleppfehler ermittelt, wobei in den Multiplizierern 435 und 443 die Projektionen der Sollgeschwindigkeiten in x- und y-Richtung bereitgestellt werden, die anschließend in den Multiplizierern 437 und 445 mit dem Sollwert $w_{\dot{v}}^{vor}$ der Kurswinkelgeschwindigkeit gewichtet werden, was ein Maß für den aus der resultierenden Fahrzeugquerbeschleunigung sich ergebenden Schleppfehler darstellt. Das dadurch entstehende negierte Kompensationssignal $w_X$ für den Anteil des durch die resultierende Fahrzeugquerbeschleunigung entstehenden Schleppfehlers in x-Richtung wird durch den Subtrahierer 439 vom Summensignal $w_{X,komp,z}$, das etwaige weitere Kompensationssignale in x-Richtung beinhaltet, subtrahiert. Das Kompensationssignal $w_Y$ für den Anteil des durch die resultierende Fahrzeugquerbeschleunigung entstehenden Schleppfehlers in y-Richtung wird hingegen durch den Addierer 447 zum Sum-

mensignal $w_{Y,komp,z}$, das etwaige weitere Kompensationssignale in y-Richtung beinhaltet, hinzuaddiert.

### 9.5 Gesamtaufbau der Anordnung

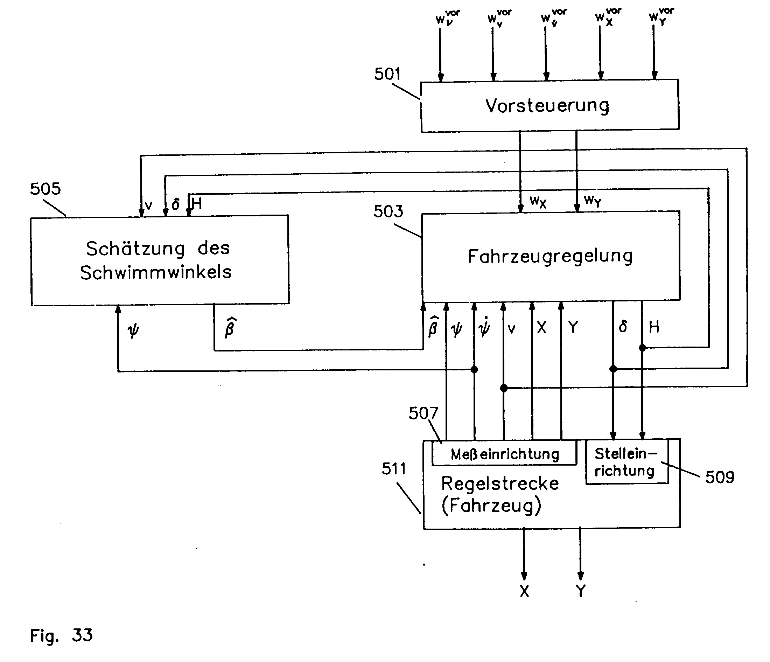

Fig. 33 zeigt den Gesamtaufbau eines Positionsregelsystems für ein Fahrzeug. Zunächst werden in die in Abschnitt 9.4 beschriebene Vorsteuerung (Block 501) die Sollwerte für die Position, Geschwindigkeit, Längsbeschleunigung, Kurswinkel und Kurswinkelgeschwindigkeit eingegeben. Aus diesen Sollwerten werden zur Kompensation des Schleppfehlers die für die Regelung relevanten Sollwerte der Position ermittelt und an eine der in Abschnitt 9.2 beschriebenen Fahrzeugregelungen (Block 503) übergeben. Diese Fahrzeugregelung ermittelt ihrerseits aus diesen Sollwerten und der Messung (Block 507) und Schätzung der dynamischen Zustandsgrößen des Fahrzeugs (Schwimmwinkel $\hat{\beta}$, Gierwinkel $\psi$, Giergeschwindigkeit $\psi'$, Geschwindigkeit v und Positionskoordinaten X und Y) die Zeitverläufe der Stellgrößen (Lenkwinkeleinschlag und Antriebs- bzw. Bremskraft).

Abhängig von diesen Größen werden durch geeignete Stellantriebe (Block 509) die Lenkung, der Motor und die Bremse des Fahrzeugs beeinflußt.

Mit Hilfe einer geeigneten Meßeinrichtung (Block 507) können die Fahrzeugposition, die Geschwindigkeit, der Gierwinkel sowie die Giergeschwindigkeit meßtechnisch erfaßt werden. Der Schwimmwinkel hingegen, der sensortechnisch nicht erfaßt werden kann, wird durch die in Abschnitt 9.3 beschriebene Schätzung des Schwimmwinkels (Block 505) bereitgestellt. Hier wird ein Schätzwert $\hat{\beta}$ für den Schwimmwinkel aus den bekannten Verläufen der Steilgrößen $\delta$ und H sowie der Giergeschwindigkeit $\psi'$ und der Fahrzeuggeschwindigkeit v rekonstruiert. Der geschätzte Schwimmwinkel $\hat{\beta}$ wird von der Fahrzeugregelung wie eine Meßgröße verarbeitet.

Ein mit diesem System ausgestattetes Fahrzeug (Block 511) wird in die Lage versetzt, sich selbsttätig und autonom auf einen ihm vorgegebenen Zielpunkt zuzubewegen und ihm zu folgen.

Die gesamte Schaltungsanordnung kann in Digital- oder Analogtechnik ausgeführt sein. Ebenso möglich ist eine festverdrahtete Vorrichtung, wobei aber genauso das gesamte Verfahren und die Vorrichtung unter Verwendung eines Mikroprozessors mit nur entsprechend einem Softwareprogramm aktuell hergestellten Schaltzuständen eine entsprechende funktionelle Steuerung durchgeführt werden kann.

Wenn in der Beschreibung und in den Ansprüchen von den Positionskoordinaten bzw. Einzelpositionspoordinaten X und Y und den Soll-Positionskoordinaten $w_X$ und $w_Y$ gesprochen wird, so ist dies auch nur beispielhaft zu verstehen, wobei abweichend von einem kartesischen Koordinatensystem auch ein beliebiges anderes Koordinatensystem zur Anwendung gelangen kann, so daß beispielsweise für die Ist-Lagekoordinaten und für die Soll-Lagekoordinaten auch ein Polarkoordinatensystem unter Berücksichtigung eines Abstandsvektors und einer entsprechenden Winkelfunktion oder andere geeignete Koordinatensysteme zur Anwendung gelangen können.

### 10. Beispielhafte Verdeutlichung des Verfahrens

Anhand eines Fahrzeugmodells soll die Wirkungsweise des Verfahrens und der Vorrichtung zur automatischen Führung der Längs- und Querbewegungen eines Fahrzeugs beispielhaft verdeutlicht werden.

### 10.1 Modellhafte Beschreibung eines Fahrzeuges

Der Erfindung liegt ein in der Literatur bekanntes Querdynamikmodell (Riekert, P., Schunck, Th.-E.: Zur Fahrmechanik des gummibereiften Kraftfahrzeuges, Ingenieur Archiv, Bd. XI, S. 210, 1940) für ein Kraftfahrzeug mit Hinterradantrieb zugrunde. Das dynamische Verhalten wird durch ein System von zwei Differentialgleichungen erster Ordnung und einer Differentialgleichung zweiter Ordnung beschrieben.

Bei der vorliegenden Erfindung wurde vereinfachend angenommen, daß das Fahrzeug auf einer steigungs- bzw. gefällefreien Ebene bei Windstille fährt, wobei auch der Reibungswiderstand vernachläßigt wurde. Für die Winkel $\beta$ und l (siehe Tab.10-1) die erfahrungsgemäß nur kleine Werte annehmen, wurde vereinfachend der Sinus gleich dem Argument und der Kosinus gleich 1 gesetzt. Außerdem wurde davon ausgegangen, daß der Raddruck aller Reifen jeweils konstant ist. Dann sind die Seitenkräfte zu den Schräglaufwinkeln proportional. In der Differentialgleichung für die Geschwindigkeit (10-3) wurde der relativ kleine Anteil der Seitenkräfte vernachläßigt. Weiterhin wurde die Erhöhung der Masse um die fiktive Masse der Trägheit der rotierenden Teile nicht berücksichtigt. Die Vereinfachungen wurden aus Gründen der Übersichtlichkeit getroffen, wobei die allgemeine Gültigkeit und Erweiterbarkeit bzgl. der Erfindung in keiner Weise beeinträchtigt wird.

Unter Miteinbeziehung der Vereinfachungen wird das dynamische Verhalten durch folgendes System von Differentialgleichungen beschrieben. Die dabei eingeführten Variablen sind in Tab.10-1 erklärt. Sie entsprechen den in DIN 70000 definierten und erläuterten Begriffen.

$$m_G \, v \, \dot{\nu} = (h - T) \, \beta + S_h + S_v \quad (10 - 1)$$

$$\theta \, \ddot{\psi} = - S_h \cdot b + Sv \cdot a \quad (10 - 2)$$

$$m_G \, \dot{v} = (h - T) \quad (10 - 3)$$

Dabei gelten die Nebenbedingungen:

$$T = c_{ws} \cdot A \cdot v^2 \quad (10 - 4)$$

$$S_v = c_v \cdot (\beta + 1 - \frac{a}{v} * \dot{\psi}) \quad (10 - 5)$$

$$S_h = c_h \cdot (\beta + \frac{b}{v} * \dot{\psi}) \quad (10 - 6)$$

**Tabelle 10-1:**   In den Gleichungen (10-1)-(10-6) vorkommende Größen:

| | |
|---|---|
| $v$ : | Geschwindigkeit des Fahrzeugschwerpunkts |
| $\nu$ : | Kurswinkel |
| $\psi$ : | Gierwinkel |
| $\beta$ : | Schwimmwinkel |
| $l$ : | Lenkwinkeleinschlag |
| $h$ : | Antriebs- bzw. Bremskraft der Hinterräder |
| $T$ : | Luftwiderstand des Fahrtwindes |
| $S_v$: | Seitenkraft vorne |
| $S_h$: | Seitenkraft hinten |
| $m_G$: | Gesamtmasse des Fahrzeuges |
| $\theta$ : | Trägheitsmoment um die Schwerhochachse |
| $a$ : | Abstand zwischen Schwerpunkt und Vorderachse |
| $b$ : | Abstand zwischen Schwerpunkt und Hinterachse |
| $c_v$: | Schräglaufsteifigkeit vorne |
| $c_h$: | Schräglaufsteifigkeit hinten |
| $c_{ws}$: | Luftwiderstandsbeiwert |

Durch Erweiterung dieses Modells um zwei Gleichungen zur Beschreibung der Fahrzeugbewegung in einem kartesischen Koordinatensystem ergibt sich ein System von 6 Differentialgleichungen erster Ordnung [Glgg. (10-7) bis (10-12)], mit denen das Fahrverhalten in der Ebene vollständig beschrieben werden kann. Die Eingangsgrößen sind hierbei der Lenkwinkeleinschlag l sowie die Antriebs- bzw. Bremskraft h, die Ausgangsgrößen sind die x- und y-Komponente der aktuellen Position des Fahrzeugs. Die Tabellen 10-2 und 10-3 geben eine Übersicht über die dynamischen Größen.

$$\dot{\beta} = - \frac{c_1^* \cdot \beta}{m_G \cdot v} + \psi' + \frac{c_2^* \cdot \psi'}{m_G \cdot v^2} + \frac{c_5^* \cdot v\beta}{m_G} - \frac{c_v}{m_G \cdot v} * l - \frac{\beta}{m_G \cdot v} * h \quad (10 - 7)$$

$$\dot{\psi} = \psi' \quad (10 - 8)$$

$$\dot{\psi}' = \frac{c_2^* \cdot \beta}{\theta} - \frac{c_3^* \cdot \psi'}{\theta \cdot v} + \frac{c_4^*}{\theta} l \quad (10 - 9)$$

$$\dot{v} = - \frac{c_5^* \cdot v^2}{m_G} + \frac{1}{m_G} h \quad (10 - 10)$$

$$\dot{X} = v \cdot \cos(\psi - \beta) \quad (10 - 11)$$

$$\dot{Y} = v \cdot \sin(\psi - \beta) \quad (10 - 12)$$

**Tabelle 10-2**: Zustandsgrößen für das Querdynamikmodell:

| | |
|---|---|
| $\beta$ : | Schwimmwinkel |
| $\psi$ : | Gierwinkel |
| $\psi'$: | zeitliche Ableitung des Gierwinkels |
| $v$ : | Geschwindigkeit |
| $X$ : | Position in x-Richtung |
| $Y$ : | Position in y-Richtung |

Diese Größen können naturgemäß durch die in Tab. 10-3 aufgezeigten Stelleingriffsmöglichkeiten beeinflußt werden:

**Tabelle 10-3**: Stellgrößen für das Querdynamikmodell:

l :     Lenkwinkeleinschalg

h :     Antriebs- bzw. Bremskraft der Hinterräder

Die abgeleiteten Beiwerte für die Modellgleichungen (10-7) bis (10-12) ergeben sich aus

$$c_1^* = c_h + c_v \quad (10 - 13)$$

$$c_2^* = a \cdot c_v - b \cdot c_h \quad (10 - 14)$$

$$c_3^* = a^2 \cdot c_v + b^2 \cdot c_h \quad (10 - 15)$$

$$c_4^* = a \cdot c_v \quad (10 - 16)$$

$$c_5^* = c_{ws} \cdot A \quad (10 - 17)$$

Der Gierwinkel $\psi$ beschreibt die Ausrichtung des Fahrzeugs in einem ortsfesten Koordinatensystem. Der Schwimmwinkel $\beta$ hingegen ist ein Maß für den Winkel zwischen dem Geschwindigkeitsvektor und der Ausrichtung des Fahrzeugs. Damit läßt sich der Kurswinkel $\nu$ beschreiben, der die Richtung des Geschwindigkeitsvektors im ortsfesten Koordinatensystem beschreibt. Es gilt:

$$\nu = \psi - \beta$$

## 10.2 Kalibrierung der Reglervorrichtungen

Zur Regelung eines Fahrzeugs, dessen Dynamik dem hier aufgezeigten Fahrzeugmodell entspricht, müssen die Verstärker in den Reglervorrichtungen in der im folgenden beschriebenen Weise eingestellt werden. Mit zunehmender Abweichung von diesen Einstellungen ist eine Verschlechterung des dann aber immer noch ausreichenden Verhaltens zu erwarten.

zu 9.2.1     Regelungsvorrichtung für den Kurswinkel und die Fahrzeuggeschwindigkeit durch die automatische Beeinflussung des Lenkwinkeleinschlags und der Antriebs- bzw. Bremskraft. Die Parameter $c_1$ bis $c_4$ werden dabei durch die Gleichungen (10-18) bis (10-21) bestimmt.

$$c_1 = \frac{c_2^*}{c_v} \quad (10 - 18)$$

$$c_2 = \frac{c_1^*}{c_v} \quad (10 - 19)$$

$$c_3 = \frac{1}{c_v} \quad (10 - 20)$$

$$c_4 = c_5^* \quad (10 - 21)$$

Hier und im folgenden wird der Verstärkungsfaktor eines Verstärkers i mit $f_i$ bezeichnet. Für die Verstärkungsfaktoren ergibt sich entsprechend:

Verstärker 123:

$$f_{123} = c_1 = \frac{c_2^*}{c_v}$$

Verstärker 125:

$$f_{125} = c_2 = \frac{c_1^*}{c_v}$$

Verstärker 136$^{glm}$:

$$f_{136}^{glm} = c_3 = \frac{1}{c_v}$$

bei der Ermittlung des Signals glm

Verstärker 136$^{ghm}$:

$$f_{136}^{glm} = 1$$

bei der Ermittlung des Signals ghm

Verstärker 131:

$$f_{131} = c_4 = c_5^*$$

Der Verstärker 137 wird nach der Leermasse m des Fahrzeugs kalibriert (siehe Anspruch 22)

Verstärker 137:

$$f_{137} = m$$

Ein die Ladung $m_L$ repräsentierendes Signal wird eigens bereitgestellt.

Das geregelte Fahrzeug verhält sich dann gemäß der Dynamik

$$\dot{\nu} + a_{01} \cdot \nu = l_1 \cdot w_\nu \quad (10 - 22)$$

$$\dot{v} + a_{02} \cdot v = l_2 \cdot w_v \quad (10 - 23)$$

zu 9.2.3 Regelungsvorrichtung für die Fahrzeugposition durch die automatische Beeinflussung des Lenkwinkeleinschlages und der Antriebs- bzw. Bremskraft. Die Parameter $c_5$ bis $c_8$ werden dabei durch die Gleichungen (10-24) bis (10-27) bestimmt.

$$c_5 = \frac{c_2^*}{c_v} \quad (10 - 24)$$

$$c_6 = \frac{c_1^*}{c_v} \quad (10 - 25)$$

$$c_7 = \frac{1}{c_v} \quad (10 - 26)$$

$$c_8 = c_5^* \quad (10 - 27)$$

Für die Verstärkungsfaktoren ergibt sich entsprechend:

Verstärker 123:

$$f_{123} = c_5 = \frac{c_2^*}{c_v}$$

Verstärker 125:

$$f_{125} = c_6 = \frac{c_1^*}{c_v}$$

Verstärker 136$^{\text{gplm}}$:

$$f_{136}^{\text{gplm}} = c_7 = \frac{1}{c_v}$$

bei der Ermittlung des Signals gplm

Verstärker 136$^{\text{gphm}}$:

$$f_{136}^{\text{gphm}} = 1$$

bei der Ermittlung des Signals gphm

Verstärker 131:

$$f_{131} = C_8 = c_5^*$$

Der Verstärker 2317 wird nach der Leermasse m des Fahrzeugs kalibriert (siehe Anspruch 22)

Verstärker 137:

$$f_{137} = m$$

Ein die Ladung $m_L$ repräsentierendes Signal wird eigens bereitgestellt.

Das geregelte Fahrzeug verhält sich dann gemäß der Dynamik

$$\ddot{X} + \alpha_{11} \cdot \dot{X} + \alpha_{01} \cdot X = \lambda_1 \cdot w_x \quad (10 - 28)$$

$$\ddot{Y} + \alpha_{12} \cdot \dot{Y} + \alpha_{02} \cdot Y = \lambda_2 \cdot w_y \quad (10 - 29)$$

zu 9.3 Vorrichtung zur Schätzung des nicht meßbaren Schwimmwinkels

Die Verstärkungsfaktoren $f_i$ der Verstärker in der beschriebenen Vorrichtung zur Schätzung des Schwimmwinkels $\beta$ müssen folgendermaßen eingestellt werden:

Verstärker 335:

$$f_{335} = c_1^*/c_5^*$$

Verstärker 343:

$$f_{343} = c_5^*/m_G$$

Verstärker 344:

$$f_{344} = 1/c_5^*$$

Verstärker 345:

$$f_{345} = c_2^*/m_G$$

Verstärker 351:

$$f_{351} = c_2^*/\theta$$

Verstärker 355:

$$f_{355} = c_3^*/\theta$$

Verstärker 359:

$$f_{359} = c_v/m_G$$

Verstärker 367:

$$f_{367} = c_4^*/\theta$$

**Patentansprüche**

1. Verfahren zur automatischen Führung der Längs- und Querbewegungen eines Fahrzeugs, bei dem zumindest die dynamischen Bewegungsgrößen für die Fahrzeuggeschwindigkeit v, den Gierwinkel $\psi$ und die aktuelle Ist-Position und gegebenenfalls darüber hinaus die Giergeschwindigkeit $\psi'$ und der Schwimmwinkel $\beta$ gemessen und ermittelt werden und Sollsignale bezüglich einer Fahrzeug-Sollbahn gebildet werden, und bei dem Stellsignale für einen Lenkwinkeleinschlag $\delta$ und eine Antriebs- bzw. Bremskraft H des Fahrzeugs zur Ansteuerung entsprechender Stellglieder zur automatischen Führung des Fahrzeugs in Abhängigkeit von aus den die tatsächliche Fahrzeugbahn beschreibenden Istsignalen und entsprechenden Sollsignalen für die Sollbahn gebildeten Regeldifferenzsignalen erzeugt werden, wobei die fahrzeugseitigen Verkopplungen zwischen den dynamischen Bewegungsgrößen untereinander entkoppelt werden, **dadurch gekennzeichnet**, daß die entweder bezüglich des Kurswinkels und der Geschwindigkeit oder bezüglich der X- und der Y-Koordinaten jeweils aus den zugehörigen Ist- und Sollsignalen gebildeten beiden Differenzsignale unter Berücksichtigung des jeweiligen aktuellen Ist-Fahrzustandes des Fahrzeugs teilweise nichtlinear verknüpft, d.h. zumindest die beiden Differenzsignale gewichtet und nachfolgend unter Erzeugung von Regeldifferenzsignalen zur Beeinflussung der Stellsignale addiert werden, und daß neben den dynamischen Bewegungsgrößen auch die Gesamtmasse, die sich dabei aus fahrzeug- und ladungsabhängigen Fahrzeugparameter berechnet, berücksichtigt und die Regeldifferenzsignale an diese Gesamtmasse des Fahrzeugs derart angepaßt werden, daß die Regeldifferenzsignale mit zunehmender Gesamtmasse vergrößert werden, und daß die zwischen den dynamischen Bewegungsgrößen des Fahrzeugs untereinander auftretenden nichtlinearen Verkopplungen durch nichtlineare Entkopplungen unter Berücksichtigung des kinematischen und kinetischen Bewegungsverhaltens des Fahrzeugs kompensiert werden und entsprechend erzeugte Kompensationssignale mit den an die Gesamtmasse angepaßten Regeldifferenzsignalen zur Erzeugung der Stellsignale additiv verknüpft werden.

2. Verfahren zur automatischen Bestimmung des aktuell einzustellenden Lenkwinkeleinschlages $\delta$ nach Anspruch 1, **dadurch gekennzeichnet**, daß sich das Stellsignal I für den Lenkwinkeleinschlag aus dem Signal, das den Anteil der untereinander entstehenden Verkopplungen in der Längs- und Querdynamik repräsentiert, der durch den Lenkwinkeleinschlag kompensiert werden muß und dabei durch ein Verfahren in Abhängigkeit vom Schwimmwinkel $\beta$, von der Giergeschwindigkeit $\psi'$ und der Fahrzeuggeschwindigkeit v ermittelt wird, und aus dem Signal, das durch ein Verfahren zur Kompensation der unterschiedlichen Gesamtmasse des Fahrzeuges in der gewichteten modifizierten Regeldifferenz bereitgestellt wird, additiv zusammensetzt, wobei das dadurch entstehende Summensignal noch den technischen Gegebenheiten des Fahrzeugs angepaßt wird, und wobei dem Verfahren zur Kompensation der unterschiedlichen Gesamtmasse des Fahrzeugs in der gewichteten modifizierten Regeldifferenz ein der Fahrzeugladung entsprechendes Signal einerseits und das Ausgangssignal eines Verfahrens zur in Abhüngigkeit vom Schwimmwinkel $\beta$ und von der Fahrzeuggeschwindigkeit v jeweils gebotenen Gewichtung der modifizierten Regeldifferenzen des Kurswinkels und der Fahrzeuggeschwindigkeit hinsichtlich des Lenkwinkeleinschlages $\delta$ andererseits zugeführt wird, und wobei die modifizierte Regeldifferenz für den Kurswinkel in Abhängigkeit vom Kurswinkel $\nu$, vom Sollwert $\nu_{soll}$ für den Kurswinkel sowie von Regelparametern durch ein Regelungsverfahren bereitgestellt werden, und wobei die modifizierte Regeldifferenz für die Fahrzeuggeschwindigkeit in Abhängigkeit von der Fahrzeuggeschwindigkeit v, vom Sollwert $v_{soll}$ für die Fahrzeuggeschwindigkeit sowie von Reglerparametern durch ein Regelungsverfahren bereitgestellt werden, und wobei der Kurswinkel $\nu$ mit einem Verfahren aus dem Gierwinkel $\psi$ und dem Schwimmwinkel $\beta$ gebildet wird, so daß das Stellsignal I für die Lenkung von den Sollwerten für den Kurswinkel und die Fahrzeuggeschwindigkeit sowie vom Schwimmwinkel $\beta$, vom Gierwinkel $\psi$, von der Giergeschwindigkeit $\psi'$ und von der Fahrzeuggeschwindigkeit v abhängt.

3. Verfahren zur automatischen Bestimmung der aktuell einzustellenden Antriebs- bzw. Bremskraft H nach Anspruch 1, **dadurch gekennzeichnet**, daß sich das Stellsignal h für die Antriebs- bzw. Bremskraft aus dem Signal, das den Anteil der untereinander entstehenden Verkopplungen in der Längs- und Querdynamik repräsentiert, der durch die Antriebs- bzw. Bremskraft kompensiert werden muß und dabei durch ein Verfahren in Abhängigkeit von der Fahrzeuggeschwindigkeit v ermittelt wird, und aus dem Signal, das durch ein Verfahren zur Kompensation der unterschiedlichen Gesamtmasse des Fahrzeugs in der gewichteten modifizierten Regeldifferenz bereitgestellt wird, additiv zusammensetzt, wobei das dadurch entstehende Summensignal noch den technischen Gegebenheiten des Fahrzeugs angepaßt wird, und wobei dem Verfahren zur Kompensation der untenschiedlichen Gesamtmasse des Fahrzeugs in der gewichteten modifizierten Regeldifferenz ein der Fahrzeugladung entsprechendes Signal einerseits und die

modifizierte Regeldifferenz für die Fahrzeuggeschwindigkeit zugeführt werden, und wobei die modifizierte Regeldifferenz für die Fahrzeuggeschwindigkeit mit einem Regelungsverfahren in Abhängigkeit von der Fahrzeuggeschwindigkeit v und dem Sollwert $v_{soll}$ für die Fahrzeuggeschwindigkeit sowie den Reglerparametern gebildet werden, und wobei der Kurswinkel mit einem Verfahren aus dem Gierwinkel $\psi$ und dem Schwimmwinkel $\beta$ gebildet wird, so daß das Stellsignal h für die Antriebs- bzw. Bremskraft von den Sollwerten für den Kurswinkel und die Fahrzeuggeschwindigkeit und von der Fahrzeuggeschwindigkeit v abhängt.

4. Verfahren zur automatischen Bestimmung der Sollwerte für den Kurswinkel und die Geschwindigkeit eines Fahrzeugs durch Vorgabe der Sollwerte für die Koordinaten der Fahrzeugposition nach einem der Ansprüche 1 bis 3, **dadurch gekennzeichnet**, daß die in der Bewegungsdynamik des Fahrzeugs bezüglich der für die Positionierung relevanten Einzelkoordinaten vorkommenden nichtlinearen und/oder linearen untereinander entstehenden Verkopplungen kompensiert werden und daß dieses Kompensationsverfahren durch ein Regelungsverfahren für die Fahrzeugposition ergänzt wird.

5. Verfahren zur automatischen Bestimmung des Sollwerts $w_v$ für den Kurswinkel nach Anspruch 4, **dadurch gekennzeichnet**, daß sich das Signal des Sollwerts $w_v$ für den Kurswinkel aus dem Signal, das den Anteil der untereinander entstehenden Verkopplungen bezüglich der für die Positionierung relevanten Einzelkoordinaten repräsentiert, der durch die Beeinflussung des Sollwerts $w_v$ kompensiert werden muß und dabei durch ein Verfahren in Abhängigkeit vom Gierwinkel $\psi$ und vom Schwimmwinkel $\beta$ ermittelt wird, und dem Signal der gewichteten modifizierten sowie an die Fahrzeuggeschwindigkeit v und die Dynamik untergeordneter Regelkreise angepaßten Regeldifferenz additiv zusammensetzt, wobei dem Verfahren zur Anpassung der modifizierten gewichteten Regeldifferenz an die Fahrzeuggeschwindigkeit v und die Dynamik der untergeordneten Regelkreise ein Parameter und das Ausgangssignal eines Verfahrens zur in Abhängigkeit vom Kurswinkel $\nu$, der seinerseits aus dem Gierwinke $\psi$ und dem Schwimmwinkel $\beta$ gebildet wird, jeweils gebotenen Gewichtung der modifizierten Regeldifferenzen der Positionseinzelkoordinaten hinsichtlich des Sollwerts $w_v$ für den Kurswinkel zugeführt wird, und wobei die modifizierten Regeldifferenzen für die Positionseinzelkoordinaten in Abhängigkeit vom Kurswinkel $\nu$ und von der Fahrzeuggeschwindigkeit v, vom jeweiligen Sollwert für die Fahrzeugposition $w_X$ oder $w_Y$, von der jeweiligen Positionskoordinate X oder Y sowie von den Reglerparametern durch ein Regelungsverfahren bereitgestellt werden, so daß das Stellsignal, das gleichzeitig den Sollwert $w_v$ des Kurswinkels für einen untergeordneten Regelkreis verkörpert, von den Sollwerten für die Positionseinzelkoordinaten, der aktuellen Fahrzeugposition sowie vom Schwimmwinkel $\beta$, vom Gierwinkel $\psi$ und von der Fahrzeuggeschwindigkeit v abhängt.

6. Verfahren zur automatischen Bestimmung des Sollwerts $w_v$ für die Fahrzeuggeschwindigkeit nach Anspruch 4, **dadurch gekennzeichnet**, daß sich das Signal des Sollwerts $w_v$ für die Fahrzeuggeschwindigkeit aus dem Signal, das den Anteil der untereinander entstehenden Verkopplungen bezüglich der für die Positionierung relevanten Einzelkoordinaten repräsentiert, der durch die Beeinflussung des Sollwertes $w_v$ kompensiert werden muß und dabei durch ein Verfahren in Abhängigkeit von der Fahrzeuggeschwindigkeit v ermittelt wird, und dem Signal der gewichteten modifizierten sowie an die Dynamik untergeordneter Regelkreise angepaßten Regeldifferenz additiv zusammensetzt, wobei dem Verfahren zur Anpassung der modifizierten gewichteten Regeldifferenz an die Dynamik der untergeordneten Regelkreise ein Parameter und das Ausgangssignal eines Verfahrens zur in Abhängigkeit vom Kurswinkel $\nu$, der seinerseits aus dem Gierwinkel $\psi$ und dem Schwimmwinkel $\beta$ gebildet wird, jeweils gebotenen Gewichtung der modifizierten Regeldifferenzen der Positionseinzelkoordinaten hinsichtlich des Sollwerts $w_v$ für die Fahrzeuggeschwindigkeit zugeführt wird, und wobei die modifizierten Regeldifferenzen für die Positionseinzelkoordinaten in Abhängigkeit vom Kurswinkel $\nu$ und von der Fahrzeuggeschwindigkeit v, vom jeweiligen Sollwert für die Fahrzeugposition $w_X$ oder $w_Y$, von der jeweiligen Positionskoordinate X oder Y sowie von den Reglerparametern durch ein Regelungsverfahren bereitgestellt werden, so daß das Stellsignal, das gleichzeitig den Sollwert $w_v$ der Fahrzeuggeschwindigkeit für einen untergeordneten Regelkreis verkörpert, von den Sollwerten für Positionseinzelkoordinaten, der aktuellen Fahrzeugposition sowie vom Schwimmwinkel $\beta$, vom Gierwinkel $\psi$ und von der Fahrzeuggeschwindigkeit v abhängt.

7. Verfahren zur automatischen Führung der Längs- und Querbewegungen eines Fahrzeugs durch Vorgabe der Sollwerte für die Koordinaten der Fahrzeugposition nach Anspruch 1, **dadurch gekennzeichnet**, daß die in der Bewegungsdynamik des Fahrzeugs bezüglich der Längs- und Querdynamik vorkommenden nichtlinearen und/oder linearen untereinander entstehenden Verkopplungen kompensiert werden und daß dieses Kompensationsverfahren durch ein Regelungsverfahren für die Fahrzeugposition ergänzt wird.

8. Verfahren zur automatischen Bestimmung des aktuell einzustellenden Lenkwinkeleinschlags δ nach Anspruch 7, **dadurch gekennzeichnet**, daß sich das Stellsignal 1 für den Lenkwinkeleinschlag aus dem Signal, das den Anteil der untereinander entstehenden Verkopplungen in der Längs- und Querdynamik repräsentiert, der durch die Lenkung kompensiert werden muß und der dabei durch ein Verfahren in Abhängigkeit vom Schwimmwinkel β, von der Giergeschwindigkeit ψ' und der Fahrzeuggeschwindigkeit v ermittelt wird, und aus dem Signal, das durch ein Verfahren zur Kompensation der unterschiedlichen Gesamtmasse des Fahrzeugs in der gewichteten modifizierten Regeldifferenz bereitgestellt wird, additiv zusammensetzt, wobei das dadurch entstehende Summensignal noch den technischen Gegebenheiten des Fahrzeugs angepaßt wird, und wobei dem Verfahren zur Kompensation der unterschiedlichen Gesamtmasse des Fahrzeugs in der gewichteten modifizierten Regeldifferenz ein der Fahrzeugladung entsprechendes Signal einerseits und das Ausgangssignal eines Verfahrens zur in Abhängigkeit vom Schwimmwinkel β und vom Kurswinkel ν, der seinerseits aus dem Gierwinkel ψ und dem Schwimmwinkel β gebildet wird, jeweils gebotenen Gewichtung der modifizierten Regeldifferenzen der Positionseinzelkoordinaten hinsichtlich des Lenkwinkeleinschlags δ andererseits zugeführt wird, und wobei die modifizierten Regeldifferenzen für die Fahrzeugeinzelkoordinaten in Abhängigkeit vom Kurswinkel ν und von der Fahrzeuggeschwindigkeit v, vom jeweiligen Sollwert für die Fahrzeugposition $w_X$ oder $w_Y$, von der jeweiligen Positionskoordinate X oder Y sowie von den Reglerparametern durch ein Regelungsverfahren bereitgestellt werden, so daß das Stellsignal I für die Lenkung von den Sollwerten für die Positionseinzelkoordinaten, der aktuellen Fahrzeugposition sowie vom Schwimmwinkel β, vom Gierwinkel ψ, von der Giergeschwindigkeit ψ' und von der Fahrzeuggeschwindigkeit v abhängt.

9. Verfahren zur automatischen Bestimmung der aktuell einzustellenden Antriebs-bzw. Bremskraft H nach Anspruch 7, **dadurch gekennzeichnet**, daß sich das Stellsignal h für die Antriebs- bzw. Bremskraft aus dem Signal, das den Anteil der untereinander entstehenden Verkopplungen in der Längs- und Querdynamik repräsentiert, der durch die Lenkung kompensiert werden muß und dabei durch ein Verfahren in Abhängigkeit von der Fahrzeuggeschwindigkeit v ermittelt wird, und aus dem Signal, das durch ein Verfahren zur Kompensation der unterschiedlichen Gesamtmasse des Fahr zeugs in der gewichteten modifizierten Regeldifferenz bereitgestellt wird, additiv zusammensetzt, wobei das dadurch entstehende Summensignal noch den technischen Gegebenheiten des Fahrzeugs angepaßt wird, und wobei dem Verfahren zur Kompensation der unterschiedlichen Gesamtmasse des Fahrzeugs in der gewichteten modifizierten Regeldifferenz ein der Fahrzeugladung entsprechendes Signal einerseits und das Ausgangssignal eines Verfahrens zur in Abhängigkeit vom Kurswinkel ν, der seinerseits aus dem Gierwinkel ψ und dem Schwimmwinkel β gebildet wird, jeweils gebotenen Gewichtung der modifizierten Regeldifferenzen der Positionseinzelkoordinaten hinsichtlich der Antriebs-bzw. Bremskraft H andererseits zugeführt wird, und wobei die modifizierten Regeldifferenzen für die Fahrzeugeinzelkoordinaten in Abhängigkeit vom Kurswinkel ν und von der Fahrzeuggeschwindigkeit v, vom jeweiligen Sollwert für die Fahrzeugposition $w_X$ oder $w_Y$, von der jeweiligen Positionskoordinate X oder Y sowie von den Reglerparametern durch ein Regelungsverfahren bereitgestellt werden, so daß das Stellsignal h für die Antriebs- bzw. Bremskraft von den Sollwerten für die Positionseinzelkoordinaten, der aktuellen Fahrzeugposition sowie vom Schwimmwinkel β, vom Gierwinkel ψ und von der Fahrzeuggeschwindigkeit v abhängt.

10. Verfahren insbesondere nach einem der Ansprüche 1 bis 9, **dadurch gekennzeichnet**, daß zur Ermittlung des aktuellen Wertes des Schwimmwinkels β ein Schätzwert $\hat{\beta}$ des Schwimmwinkels in Abhängigkeit von der als Eingangssignal anliegenden Giergeschwindigkeit ψ' und den Ausgangssignalen eines Verfahrens zur Ermittlung von variablen Schätzparametern sowie von den variablen Verstärkungskoeffizienten für

den Schätzfehler $\tilde{\psi}'$ für die Giergeschwindigkeit gebildet wird, wobei die variablen Schätzparameter aus den Signalen der Fahrzeuggeschwindigkeit v, des Lenkwinkeleinschlags δ und der Antriebs- bzw. Bremskraft H gebildet werden, und wobei aus einem Teil dieser Schätzparameter mit einem Verfahren die variablen Verstärkungskoeffizienten für den Schätzfehler $\tilde{\psi}'$ für die Giergeschwindigkeit ermittelt werden.

11. Vorrichtung zur Durchführung des Verfahrens nach einem der Ansprüche 1 bis 10, mit einer Regeleinrichtung zur Erzeugung von Stellsignalen für den Lenkwinkeleinschlag und die Antriebs- und Bremskraft in Abhängigkeit von Regeldifferenzsignalen, die unter Berücksichtigung von den dynamischen Bewegungsgrößen entsprechenden Ist-Signalen und eine Sollbahn beschreibenden Sollsignalen gebildet sind, wobei die Istsignale durch Meßerfassungsgeräte meß- oder aus diesen Meßsignalen durch Signalumformung bildbar sind und dabei zumindest die Fahrzeuggeschwindigkeit v, den Gierwinkel $\psi$ und die aktuelle Ist-Position und gegebenenfalls zusätzlich der Giergeschwindigkeit $\psi'$ und den Schwimmwinkel $\beta$ umfassen, und mit einer Kompensationseinrichtung zur Entkopplung von fahrzeugseitigen Verkopplungen zwischen den dynamischen Bewegungsgrößen, **dadurch gekennzeichnet**, daß bei der Erzeugung der Stellsignale die Gesamtmasse berücksichtigbar ist, und daß die Regelungseinrichtung eine Gewichtungseinrichtung (7, 29, 81, 103) umfaßt, in der die entweder bezüglich des Kurswinkels und der Geschwindigkeit oder bezüglich der X- und der Y-Koordinaten jeweils aus den zugehörigen Ist- und Sollsignalen gebildeten beiden Differenzsignale unter Berücksichtigung des jeweils aktuellen Ist-Fahrzustandes des Fahrzeugs teilweise nichtlinear verknüft, d.h. zumindest die beiden Differenzsignale gewichtet und nachfolgend unter Erzeugung von Regeldifferenzsignalen additiv verknüpft werden, und daß eine Anpaßanordnung (9, 31, 83, 105) zur Anpassung der Regeldifferenzsignale an die Gesamtmasse des Fahrzeugs im Sinne einer Erhöhung der Regeldifferenzsignale in Abhängigkeit der Gesamtmasse, und eine mit nichtlinearen Elementen bestückte Kompensationsordnung (11, 33, 85, 107) zur nichtlinearen Entkopplung der zwischen den Bewegungsgrößen untereinander auftretenden nichtlinearen Verkopplungen unter Berücksichtigung des kinematischen und kinetischen Bewegungsverhaltens des Fahrzeugs sowie eine additiv arbeitende Verknüpfungsschaltung (Addierer 13, 35, 87, 109) zur Erzeugung der Stellsignale für den Lenkwinkeleinschlag $\delta$ und für die Antriebs- bzw. Bremskraft H aus den jeweiligen an die Gesamtmasse angepaßten Regeldifferenzsignalen und den Kompensationssignalen vorgesehen sind.

12. Vorrichtung nach Anspruch 11, **dadurch gekennzeichnet**, daß sich das Stellsignal I für den Lenkwinkelausschlag nach Art eines Halbautomaten aus dem Signal kl, das den Anteil der untereinander entstehenden Verkopplungen in der Längs- und Querdynamik repräsentiert, der durch die Lenkung kompensiert werden muß und der dabei durch die Vorrichtung KL (11) in Abhängigkeit vom Schwimmwinkel $\beta$, von der Giergeschwindigkeit $\psi'$ und der Fahrzeuggeschwindigkeit v ermittelt wird, und aus dem Signal glm, das durch die Vorrichtung EM (9) zur Kompensation der unterschiedlichen Gesamtmasse des Fahrzeugs in der gewichteten modifizierten Regeldifferenz bereitgestellt wird, additiv zusammensetzt (Addierer 13), wobei das dadurch entstehende Summensignal I noch den technischen Gegebenheiten des Fahrzeugs durch das Anpaßglied 15 und den Verstärker 17 angepaßt und anschließend der Aktuatorik zur Beeinflussung des Lenkwinkeleinschlags $\delta$ (Stellglied 19) zugeführt wird, und wobei der Vorrichtung EM (9) zur Kompensation der unterschiedlichen Gesamtmasse des Fahrzeugs in der gewichteten modifizierten Regeldifferenz ein der Fahrzeugladung entsprechendes Signal $m_L$ einerseits und das Ausgangssignal gl der Vorrichtung GL (7) zur in Abhängigkeit vom Schwimmwinkel $\beta$ und von der Fahrzeuggeschwindigkeit v jeweils gebotenen Gewichtung der modifizierten Regeldifferenzen ruk des Kurswinkels und ruv der Fahrzeuggeschwindigkeit hinsichtlich des Lenkwinkeleinschlages $\delta$ andererseits zugeführt wird, und wobei die modifizierte Regeldifferenz ruk für den Kurswinkel in Abhängigkeit vom Kurswinkel $\nu$, vom Sollwert $v_{soll}$ für den Kurswinkel sowie von Regelparametern durch die Regelungsvorrichtung RU (1) bereitgestellt werden, und wobei die modifizierte Regeldifferenz für die Fahrzeuggeschwindigkeit in Abhängigkeit von der Fahrzeuggeschwindigkeit v, vom Sollwert $v_{soll}$ für die Fahrzeuggeschwindigkeit sowie von Reglerparametern durch die Regelungsvorrichtung RU (3) bereitgestellt werden, und wobei der Kurswinkel $\nu$ mit der Vorrichtung EK (5) aus dem Gierwinkel $\psi$ und dem Schwimmwinkel $\beta$ gebildet wird, so daß das Stellsignal I für die Lenkung von den Sollwerten für den Kurswinkel und die Fahrzeuggeschwindigkeit, sowie vom Schwimmwinkel $\beta$, vom Gierwinkel $\psi$, von der Giergeschwindigkeit $\psi'$ und von der Fahrzeuggeschwindigkeit v abhängt.

13. Vorrichtung nach Anspruch 11 oder 12, **dadurch gekennzeichnet,** daß sich das Stellsignal h für die Antriebs- bzw. Bremskraft nach Art eines Halbautomaten aus dem Signal kh, das den Anteil der untereinander entstehenden Verkopplungen in der Längs- und Querdynamik repräsentiert, der durch die Antriebs- bzw. Bremskraft kompensiert werden muß und dabei durch die Vorrichtung KH (33) in Abhängigkeit von der Fahrzeuggeschwindigkeit v ermittelt wird, und aus dem Signal ghm, das durch die Vorrichtung EM (31) zur Kompensation der unterschiedlichen Gesamtmasse des Fahrzeugs in der gewichteten modifizierten Regeldifferenz bereitgestellt wird, additiv zusammensetzt (Addierer 35), wobei das dadurch entstehende Summensignal h noch den technischen Gegebenheiten des Fahrzeugs durch das Anpaßglied 37 und den Verstärker 39 angepaßt und anschließend den Stellgliedern zur Beeinflussung der Antriebs- bzw. Bremskraft H (Stellglied 41) zugeführt wird, und wobei der Vorrichtung EM (31) zur Kompensation der unterschiedlichen Gesamtmasse des Fahrzeugs in der gewichteten modifizierten Regeldifferenz ein der Fahrzeugladung entsprechendes Signal $m_L$ einerseits und das Ausgangssignal gh der Vorrichtung GH (29) andererseits zugeführt werden, und wobei der Vorrichtung GH als Eingangssignal die modifizierte Regeldifferenz ruv für die Fahrzeuggeschwindigkeit zugeführt wird, und wobei die modifizierte Regeldifferenz ruv für die Fahrzeuggeschwindigkeit in der Regelvorrichtung RU (25) Abhängigkeit von der Fahrzeuggeschwindigkeit v und dem Sollwert $v_{soll}$ für die Fahrzeuggeschwindigkeit sowie den Reglerparametern gebildet wird, so daß das Stellsignal h für die Antriebs- und Bremskraft von dem Sollwerten für die Fahrzeuggeschwindigkeit und von der Fahrzeuggeschwindigkeit v abhängt.

14. Vorrichtung insbesondere nach einem der Ansprüche 11 bis 13, **gekennzeichnet durch** einen, einem Halbautomaten vortschaltbaren Vorschaltautomaten zur automatischen Bestimmung des Sollwertes $w_v$ für den Kurswinkel, wobei sich das Signal des Sollwerts $w_v$ für den Kurswinkel aus dem Signal kok, das den Anteil der untereinander entstehenden Verkopplungen bezüglich der für die Positionierung relevanten Einzelkoordinaten repräsentiert, der durch die Beeinflussung des Sollwertes $w_v$ kompensiert werden muß und dabei durch die Vorrichtung KOK (57) in Abhängigkeit vom Gierwinkel $\psi$ und vom Schwimmwinkel $\beta$ ermittelt wird, und dem Signal krok der gewichteten modifizierten sowie an die Fahrzeuggeschwindigkeit v und die Dynamik untergeordneter Regelkreise angepaßten Regeldifferenz additiv zusammensetzt (Addierer 59), wobei der Vorrichtung KROK (55) zur Anpassung der modifizierten gewichteten Regeldifferenz an die Fahrzeuggeschwindigkeit v und die Dynamik der untergeordneten Regelkreise die Fahrzeuggeschwindigkeit v, ein Parameter und das Ausgangssignal gk der Vorrichtung GK (53) zur in Abhängigkeit vom Kurswinkel $v$, der seinerseits mit der Vorrichtung EK (51) aus dem Gierwinkel $\psi$ und dem Schwimmwinkel $\beta$ gebildet wird, jeweils gebotenen Gewichtung der modifizierten Regeldifferenzen rpx und rpy für die Positionseinzelkoordinaten hinsichtlich des Sollwerts $w_v$ für den Kurswinkel zugeführt wird, und wobei die modifizierten Regeldifferenzen rpx bzw. rpy für die Positionseinzelkoordinaten in Abhängigkeit vom Kurswinkel $v$ und von der Fahrzeuggeschwindigkeit v, vom jeweiligen Sollwert für die Fahrzeugposition $w_X$ oder $w_Y$, von der jeweiligen Positionskoordinate X oder Y sowie von den Reglerparametern durch die Regelungsvorrichtungen RP (47 bzw. 49) bereitgestellt werden, so daß das Stellsignal, das gleichzeitig den Sollwert $w_v$ des Kurswinkels für einen untergeordneten Regelkreis verkörpert, von den Sollwerten für die Positionseinzelkoordinaten, der aktuellen Fahrzeugposition sowie vom Schwimmwinkel $\beta$, vom Gierwinkel $\psi$ und von der Fahrzeuggeschwindigkeit v abhängt.

15. Vorrichtung insbesondere nach einem der Ansprüche 11 bis 14 **gekennzeichnet durch** einen, einem Halbautomaten vorschaltbaren Vorschaltautomat zur automatischen Bestimmung des Sollwerts $w_v$ für die Fahrzeuggeschwindigkeit, wobei sich das Signal des Sollwerts $w_v$ für die Fahrzeuggeschwindigkeit aus dem Signal kov, das den Anteil der untereinander entstehenden Verkopplungen bezüglich der für die Positionierung relevanten Einzelkoordinaten repräsentiert, der durch die Beeinflussung des Sollwertes $w_v$ kompensiert werden muß und dabei durch die Vorrichtung KOV (71) in Abhängigkeit von der Fahrzeuggeschwindigkeit v ermittelt wird, und dem Signal krov der gewichteten modifizierten sowie an die Dynamik untergeordneter Regelkreise angepaßten Regeldifferenzen additiv zusammensetzt (Addierer 73), wobei der Vorrichtung KROV (69) zur Anpassung der modifizierten gewichteten Regeldifferenz an die Dynamik der untergeordneten Regelkreise ein Parameter und das Ausgangssignal gv der Vorrichtung GV (67) zur in Abhängigkeit vom Kurswinkel $v$, der seinerseits mit der Vorrich tung EK (65) aus dem Gierwinkel $\psi$ und dem Schwimmwinkel $\beta$ gebildet wird, jeweils gebotenen Gewichtung der modifizierten Regeldifferenzen rpx und rpy für die Positionseinzelkoordinaten hinsichtlich des Sollwerts $w_v$ für die Fahrzeuggeschwindigkeit zugeführt wird, und wobei die modifizierten Regeldifferenzen rpx bzw. rpy für die Positionseinzelkoordinaten in Abhängigkeit vom Kurswinkel $v$ und von der Fahrzeuggeschwindigkeit v, vom jeweiligen Sollwert für die Fahrzeugposition $w_X$ oder $w_Y$, von der jeweiligen Positionskoordinate X oder Y sowie von den Reglerparametern durch die Regelungsvorrichtungen RP (61 bzw. 63) bereitgestellt werden, so daß das Stellsignal, das gleichzeitig den Sollwert $w_v$ der Fahrzeuggeschwindigkeit für einen untergeordneten Regelkreis verkörpert, von den Sollwerten für Positionseinzelkoordinaten, der aktuellen Fahrzeugposition sowie vom Schwimmwinkel $\beta$, vom Gierwinkel $\psi$ und von der Fahrzeuggeschwindigkeit v abhängt.

16. Vorrichtung nach Anspruch 11, **dadurch gekennzeichnet**, daß sich das Stellsignal I für den Lenkwinkeleinschlag aus dem Signal kl, das den Anteil der untereinander entstehenden Verkopplungen in der Längs- und Querdynamik repräsentiert, der durch die Lenkung kompensiert werden muß und der dabei durch die Vorrichtung KL (85) in Abhängigkeit vom Schwimmwinkel $\beta$, von der Giergeschwindigkeit $\psi'$ und der Fahrzeuggeschwindigkeit v ermittelt wird, und aus dem Signal gplm, das durch die Vorrichtung EM (83) zur Kompensation der unterschiedlichen Gesamtmasse des Fahrzeugs in der gewichteten modifizierten Regeldifferenz bereitgestellt wird, additiv zusammensetzt (Addierer 87), wobei das dadurch entstehende Summensignal I noch den technischen Gegebenheiten des Fahrzeugs durch das Anpaßglied 89 und den Verstärker 91 angepaßt und anschließend der Aktuatorik zur Beeinflussung des Lenkwinkeleinschlags $\delta$

(Stellglied 93) zugeführt wird, und wobei der Vorrichtung EM (83) zur Kompensation der unterschiedlichen Gesamtmasse des Fahrzeugs in der gewichteten modifizierten Regeldifferenz ein der Fahrzeugladung entsprechendes Signal $m_L$ und das Ausgangssignal gpl der Vorrichtung GPL (81) zur in Abhängigkeit vom Schwimmwinkel $\beta$ und vom Kurswinkel $\nu$, der seinerseits in der Vorrichtung EK (79) aus dem Gierwinkel $\psi$ und dem Schwimmwinkel $\beta$ gebildet wird, jeweils gebotenen Gewichtung der modifizierten Regeldifferenzen rpx und rpy der Positionseinzelkoordinaten hinsichtlich des Lenkwinkeleinschlages $\delta$ zugeführt wird, und wobei die modifizierten Regeldifferenzen rpx bzw. rpy für die Fahrzeugeinzelkoordinaten in Abhängigkeit vom Kurswinkel $\nu$ und von der Fahrzeuggeschwindigkeit v, vom jeweiligen Sollwert für die Fahrzeugposition $w_X$ oder $w_Y$, von der jeweiligen Positionskoordinate X oder Y sowie von den Reglerparametern durch die Regelungsvorrichtungn RP (75 bzw. 77) bereitgestellt werden, so daß das Stellsignal l für die Lenkung von den Sollwerten für die Positionseinzelkoordinaten, der aktuellen Fahrzeugposition sowie vom Schwimmwinkel $\beta$, vom Gierwinkel $\psi$, von der Giergeschwindigkeit $\psi'$ und von der Fahrzeuggeschwindigkeit v abhängt.

17. Vorrichtung nach Anspruch 11 oder 16, **dadurch gekennzeichnet**, daß sich das Stellsignal h für die Antriebs- bzw. Bremskraft aus dem Signal kh, das den Anteil der untereinander entstehenden Verkopplungen in der Längs- und Querdynamik repräsentiert, der durch die Lenkung kompensiert werden muß und dabei durch die Vorrichtung KH (107) in Abhängigkeit von der Fahrzeuggeschwindigkeit v ermittelt wird, und aus dem Signal gphm, das durch die Vorrichtung EM (105) zur Kompensation der unterschiedlichen Gesamtmasse des Fahrzeugs in der gewichteten modifizierten Regeldifferenz bereitgestellt wird, additiv zusammensetzt (Addierer 109), wobei das dadurch entstehende Summensignal h noch den technischen Gegebenheiten des Fahrzeugs durch das Anpaßglied 111 und den Verstärker 113 angepaßt und anschließend der Aktuatorik zur Beeinflussung der Antriebs- bzw. Bremskraft H (Stellglied 115) zugeführt wird, und wobei der Vorrichtung EM (105) zur Kompensation der unterschiedlichen Gesamtmasse des Fahrzeugs in der gewichteten modifizierten Regeldifferenz ein der Fahrzeugladung entsprechendes Signal $m_L$ einerseits und das Ausgangssignal gph der Vorrichtung GPH (103) zur in Abhängigkeit vom Kurswinkel $\nu$, der seinerseits in der Vorrichtung EK (101) aus dem Gierwinkel $\psi$ und dem Schwimmwinkel $\beta$ gebildet wird, jeweils gebotenen Gewichtung der modifizierten Regeldifferenz rpx und rpy der Positionseinzelkoordinaten hinsichtlich der Antriebs- bzw. Bremskraft H andererseits zugeführt wird, und wobei die modifizierten Regeldifferenzen rpx bzw. rpy für die Fahrzeugeinzelkoordinaten in Abhängigkeit vom Kurswinkel $\nu$ und von der Fahrzeuggeschwindigkeit v, vom jeweiligen Sollwert für die Fahrzeugposition $w_X$ oder $w_Y$, von der jeweiligen Positionskoordinate X oder Y sowie von den Reglerparametern durch die Regelungsvorrichtungen RP (97 bzw. 99) bereitgestellt werden, so daß das Stellsignal für die Antriebs- bzw. Bremskraft H von den Sollwerten für die Positionseinzelkoordinaten, der aktuellen Fahrzeugposition sowie vom Schwimmwinkel $\beta$, vom Gierwinkel $\psi$ und von der Fahrzeuggeschwindigkeit v abhängt.

18. Vorrichtung nach Anspruch 12 oder 16, **dadurch gekennzeichnet**, daß bei der Anordnung KL das Kompensationssignal durch die Differenzbildung im Subtrahierer 127 aus dem mit dem Verstärker 123 verstärkten Quotienten aus der Giergeschwindigkeit $\psi'$ und der Fahrzeuggeschwindigkeit v (Dividierer 121) mit dem mit dem Verstärker 125 verstärkten Signal des Schwimmwinkels $\beta$ gebildet wird, wobei das Kompensationssignal schädliche, durch den Schwimmwinkel $\beta$, die Giergeschwindigkeit $\psi'$ und die Fahrzeuggeschwindigkeit v direkt bedingte Verkopplungen in der Längs- und Querdynamik des Fahrzeugs, die durch die Lenkung kompensiert werden müssen, kompensiert.

19. Vorrichtung nach Anspruch 13 oder 17, **dadurch gekennzeichnet**, daß bei der Anordnung KH das Kompensationssignal durch die Verstärkung (Verstärker 131) des im Quadrierer 129 gebildeten Quadrats der Fahrzeuggeschwindigkeit v gebildet wird, wobei das Kompensationssignal schädliche, durch die Fahrzeuggeschwindigkeit v direkt bedingte Verkopplungen in der Längs- und Querdynamik des Fahrzeugs, die durch die Antriebs- bzw. Bremskraft kompensiert werden müssen, kompensiert.

20. Vorrichtung nach Anspruch 12, 14, 15, 16 oder 17, **dadurch gekennzeichnet**, daß bei der Anordnung EK das Signal für den Kurswinkel $\nu$ mit dem Subtrahierer 133 durch die Differenzbildung von Gierwinkel $\psi$ und Schwimmwinkel $\beta$ ermittelt wird.

21. Vorrichtung nach Anspruch 12, 13, 16 oder 17, **dadurch gekennzeichnet**, daß bei der Anordnung EM das massenabhängige Ausgangssignal ghm, glm, gphm bzw. gplm im Verstärker 136 gebildet wird, wobei das Eingangssignal des Verstärkers 136 im Multiplizierer 135 aus dem Produkt des massenunabhängigen Eingangssignals gh, gl, gph bzw. gpl und der Gesamtmasse des Fahrzeugs gebildet wird, und wobei die Gesamtmasse aus der in Addierer 139 gebildeten Summe aus der Leermasse des Fahrzeugs und der veränderlichen Ladung $m_L$ des Fahrzeugs besteht und wobei das Signal für die Leermasse des Fahrzeugs im Verstärker 137 gebildet wird.

22. Vorrichtung nach Anspruch 14; 15, 16 oder 17, **dadurch gekennzeichnet**, daß bei der Anordnung RP die modifizierte Regeldifferenz rpx bzw. rpy im Addierer 151 aus der Summe des im Multiplizierer 143 mit dem Parameter $\alpha_{01}$ bzw. $\alpha_{02}$ gewichteten Signals X bzw. Y, des im Multiplizierer 149 mit dem Parameter $\alpha_{11}$ bzw. $\alpha_{12}$ gewichteten Ausgangssignals des Multiplizierers 147 und des im Multiplizierer 141 mit dem Parameter $\lambda_1$ bzw. $\lambda_2$ gewichteten und anschließend negierten Signals für den Sollwert $w_X$ bzw. $w_Y$ gebildet wird, wobei im Multiplizierer 147 die Fahrzeuggeschwindigkeit v mit dem Kosinus bzw. Sinus des Kurswinkels $\nu$ multipliziert wird, wobei der Sinus bzw. Kosinus des Kurswinkels $\nu$ in dem Glied 145 zur Berechnung des Sinus bzw. des Kosinus gebildet wird.

23. Vorrichtung nach Anspruch 12 oder 13, **dadurch gekennzeichnet**, daß bei der Anordnung RU die modifizierte Regeldifferenz ruk bzw. ruv im Subtrahierer 157 durch die Differenzbildung des im Multiplizierer 155 mit dem Parameter $\overline{\alpha}_{01}$ bzw. $\overline{\alpha}_{02}$ gewichteten Signals für den Kurswinkel $\nu$ bzw. für die Fahrzeuggeschwindigkeit v mit dem im Multiplizierer 153 mit dem Parameter $\overline{\lambda}_1$ bzw. $\overline{\lambda}_2$ gewichteten Signal des Sollwerts $w_\nu$ für den Kurswinkel bzw. $w_v$ für die Fahrzeuggeschwindigkeit gebildet wird.

24. Vorrichtung nach Anspruch 12, **dadurch gekennzeichnet**, daß bei der Anordnung GL das Ausgangssignal gl mit dem Subtrahierer 163 durch die Subtraktion der im Multiplizierer 159 mit der Fahrzeuggeschwindigkeit v gewichteten modifizierten Regeldifferenz ruk von der im Multiplizierer 161 mit dem Schwimmwinkel $\beta$ gewichteten modifizierten Regeldifferenz ruv gebildet wird.

25. Vorrichtung nach Anspruch 13, **dadurch gekennzeichnet**, daß bei der Anordnung GH das Ausgangssignal gh mit dem Negierer 165 durch Negierung der modifizierten Regeldifferenz ruv gebildet wird.

26. Vorrichtung nach Anspruch 15, **dadurch gekennzeichnet**, daß bei der Anordnung GV das Ausgangssignal gv mit dem Negierer/Addierer 175 durch die Addition der negierten, durch den Multiplizierer 171 mit dem Kosinus des Kurswinkels $\nu$ gewichteten modifizierten Regeldifferenz rpx und der negierten durch den Multiplizierer 173 mit dem Sinus des Kurswinkels $\nu$ gewichteten modifizierten Regeldifferenz rpy gebildet wird, wobei der Sinus des Kurswinkels $\nu$ durch das Glied 169 zur Ermittlung des Sinus aus dem Signal des Kurswinkels $\nu$ und der Kosinus des Kurswinkels $\nu$ durch das Glied 167 zur Ermittlung des Kosinus ebenfalls aus dem Signal des Kurswinkels $\nu$ gebildet wird.

27. Vorrichtung nach Anspruch 14, **dadurch gekennzeichnet**, daß bei der Anordnung GK das Ausgangssignal gk mit dem Subtrahierer 185 durch die Subtraktion der durch den Multiplizierer 183 mit dem Kosinus des Kurswinkels $\nu$ gewichteten modifizierten Regeldifferenz rpy von der durch den Multiplizierer 181 mit dem Sinus des Kurswinkels $\nu$ gewichteten modifizierten Regeldifferenz rpx gebildet wird, wobei der Sinus des Kurswinkels $\nu$ durch das Glied 179 zur Ermittlung des Sinus aus dem Signal des Kurswinkels $\nu$ und der Kosinus des Kurswinkels $\nu$ durch das Glied 177 zur Ermittlung des Kosinus ebenfalls aus dem Signal des Kurswinkels $\nu$ gebildet wird.

28. Vorrichtung nach Anspruch 17, **dadurch gekennzeichnet**, daß bei der Anordnung GPH das Ausgangssignal gph mit dem Negierer/Addierer 195 durch die Addition der negierten, durch den Multiplizierer 193 mit dem Kosinus des Kurswinkels $\nu$ gewichteten modifizierten Regeldifferenz rpx und der negierten, durch den Multiplizierer 191 mit dem Sinus des Kurswinkels $\nu$ gewichteten modifizierten Regeldifferenz rpy gebildet wird, wobei der Sinus des Kurswinkels $\nu$ durch das Glied 189 zur Ermittlung des Sinus aus dem Signal des Kurswinkels $\nu$ und der Kosinus des Kurswinkels $\nu$ durch das Glied 187 zur Ermittlung des Kosinus ebenfalls aus dem Signal des Kurswinkels $\nu$ gebildet wird.

29. Vorrichtung nach Anspruch 16, **dadurch gekennzeichnet**, daß bei der Anordnung GPL das Ausgangssignal gpl mit dem Addierer 213 durch die Addition der durch den Multiplizierer 205 mit dem Ausgang des Addierers 203 gewichteten modifizierten Regeldifferenz rpx und der durch den Multiplizierer 211 mit dem Ausgang des Subtrahierers 209 gewichteten modifizierten Regeldifferenz rpy gebildet wird, wobei im Addierer 203 die Summe aus dem Sinus des Kurswinkels $\nu$ und dem im Multiplizierer 201 gebildeten Produkt aus dem Kosinus des Kurswinkels $\nu$ mit dem Schwimmwinkel $\beta$ gebildet wird, und wobei im Subtrahierer 209 der Kosinus des Kurswinkels $\nu$ von dem im Multiplizierer 207 gebildeten Produkt aus dem Sinus des Kurswinkels $\nu$ mit dem Schwimmwinkel $\beta$ gebildet wird, und wobei der Sinus des Kurswinkels $\nu$ durch das

Glied 199 zur Ermittlung des Sinus aus dem Signal des Kurswinkels $\nu$ und der Kosinus des Kurswinkels $\nu$ durch das Glied 197 zur Ermittlung des Kosinus ebenfalls aus dem Signal des Kurswinkels $\nu$ gebildet wird.

30. Vorrichtung nach Anspruch 14, **dadurch gekennzeichnet**, daß bei der Anordnung KROK das Ausgangssignal krok durch Division (Dividierer 217) des Ausgangssignals des Dividierers 215 mit dem Parameter $a_{01}$ gebildet wird, wobei mit dem Dividierer 215 der Quotient aus dem Signal gk und der Fahrzeuggeschwindigkeit v gebildet wird.

31. Vorrichtung nach Anspruch 15, **dadurch gekennzeichnet**, daß bei der Anordnung KROV das Ausgangssignal krov durch Division (Dividierer 219) des Signals gv mit dem Parameter $a_{02}$ gebildet wird.

32. Vorrichtung nach Anspruch 14, **dadurch gekennzeichnet**, daß bei der Anordnung KOK das Ausgangssignal kok mit der Vorrichtung EK (Block 221) aus dem Schwimmwinkel $\beta$ und dem Gierwinkel $\psi$ gebildet wird.

33. Vorrichtung nach Anspruch 15, **dadurch gekennzeichnet**, daß bei der Anordnung KOV das Ausgangssignal kov aus der Fahrzeuggeschwindigkeit v besteht.

34. Vorrichtung insbesondere nach einem der Ansprüche 11 bis 33, **gekennzeichnet durch** eine Anordnung zur Schätzung des aktuellen Wertes für den Schwimmwinkel $\beta$, wobei in der Vorrichtung SB (307) der Schätzwert $\hat{\beta}$ für den Schwimmwinkel in Abhängigkeit von der als Eingangsgröße anliegenden Giergeschwindigkeit $\psi'$ und den ebenfalls eingangsseitig anliegenden Signalen $a_{11}$, $a_{13}$, $a_{31}$, $a_{33}$, $b_1$, $b_3$, $k_1$ und $k_3$ gebildet wird, und wobei die Signale $a_{11}$, $a_{13}$, $a_{31}$, $a_{33}$, $b_1$ und $b_3$ in der Vorrichtung SA (301) aus den hier eingangsseitig anliegenden Werten der Fahrzeuggeschwindigkeit v, des Lenkwinkeleinschlags $\delta$ und der Antriebs- bzw. Bremskraft H gebildet werden, und wobei das Signal $k_1$ in der Vorrichtung SK1 (303) aus den in der Vorrichtung SA (301) ermittelten Signalen $a_{11}$, $a_{13}$ und $a_{31}$ sowie den Parametern $\lambda_{1,s}$ und $\lambda_{2,s}$ gebildet wird, und wobei das Signal $k_3$ in der Vorrichtung SK3 (305) aus den in der Vorrichtung SA (301) ermittelten Signalen $a_{11}$ und $a_{33}$ sowie den Parametern $\lambda_{1,s}$ und $\lambda_{2,s}$ gebildet wird.

35. Vorrichtung nach Anspruch 34, **dadurch gekennzeichnet**, daß bei der Anordnung SA der aktuelle Wert des Signals $a_{11}$ über den Verstärker 343 aus der Differenz (Subtrahierer 341) zwischen der Fahrzeuggeschwindigkeit v und dem durch den Dividierer 339 gebildeten Quotienten aus der Summe (Addierer 337) des durch den Verstärker 344 angepaßten Signals der Antriebs- bzw. Bremskraft H mit dem Ausgang des Verstärkers 335, der am Eingang den Zahlenwert 1 anliegen hat, und der Fahrzeuggeschwindigkeit v gebildet wird, und daß der aktuelle Wert des Signals $a_{13}$ aus der Summe (Addierer 350) des Zahlenwertes 1 und des Quotienten (Dividierer 349) aus dem Ausgang des Verstärkers 345, der am Eingang den Zahlenwert 1 anliegen hat, mit dem Ausgang des Quadrierers 347, durch den das Quadrat der Fahrzeuggeschwindigkeit v gebildet wird, zusammengesetzt wird, und daß der aktuelle Wert des Signals $a_{31}$ durch den Verstärker 351, der am Eingang den Zahlenwert 1 anliegen hat, gebildet wird, und daß der aktuelle Wert des Signals $a_{33}$ aus dem Quotienten (Dividierer 357) des Ausganges des Verstärkers 355 mit der Fahrzeuggeschwindigkeit v gebildet wird, wobei der Verstärker 355 über den Ausgang des Negiergliedes 353 den Zahlenwert -1 am Eingang anliegen hat, und daß der aktuelle Wert des Signals $b_1$ durch den Dividierer 363 aus dem Quotienten des mit dem Verstärker 359 verstärkten und anschließend im Negierglied 361 negierten Signals des Lenkwinkeleinschlags $\delta$ mit der Fahrzeuggeschwindigkeit v gebildet wird, und daß das Signal $b_2$ aus dem mit Verstärker 367 verstärkten Signal des Lenkwinkeleinschlags $\delta$ besteht.

36. Vorrichtung nach Anspruch 34, **dadurch gekennzeichnet**, daß sich bei der Anordnung SK1 der aktuelle Wert des Signals $k_1$ aus der Summe (Addierer 385) des Signals $a_{13}$ und des mit dem Dividierer 383 gebildeten Quotienten aus dem Ausgang des Addierers 381 mit dem Signal $a_{31}$ zusammensetzt, wobei im Addierer 381 das im Multiplizierer 379 gebildete Produkt aus den Parametern $\lambda_{1,s}$ und $\lambda_{2,s}$ zu dem Ausgang des Subtrahierers 377 hinzugezählt wird, und wobei im Subtrahierer 377 die Differenz aus dem Ausgang des Subtrahierers 373 und dem im Multiplizierer 375 mit dem Parameter $\lambda_{2,s}$ gewichteten Signal $a_{11}$ gebildet wird und wobei im Subtrahierer 373 die Differenz aus dem im Quadrierer 371 gebildeten Quadrat des Signals $a_{11}$ mit dem im Multiplizierer 369 mit dem Parameter $\lambda_{1,s}$ gewichteten Signal $a_{11}$ gebildet wird.

37. Vorrichtung nach Anspruch 34, **dadurch gekennzeichnet**, daß sich bei der Anordnung SK3 der aktuelle Wert des Signals $k_3$ aus der Differenz (Subtrahierer 389) der Summe (Addierer 387) des Signals $a_{11}$ und

EP 0 433 322 B1

des Signals $a_{33}$ mit der Summe (Addierer 391) des Parameters $\lambda_{1,s}$ und des Parameters $\lambda_{2,s}$ bildet.

38. Vorrichtung nach einem der Ansprüche 34 bis 37, **dadurch gekennzeichnet**, daß zur Ermittlung des aktuellen Schätzwertes $\hat{\beta}$ für den Schwimmwinkel in einer Anordnung SB der Schätzwert $\hat{\beta}$ des Schwimmwinkels aus der zeitlichen Ableitung $\dot{\beta}$ des Schätzwertes des Schwimmwinkels im Integrierer 317 gebildet wird, wobei sich das Signal $\dot{\beta}$ additiv (Addierer 315) aus dem Produkt (Multiplizierer 329) des Signals $\tilde{\psi}'$ mit dem Signal $k_1$ und aus der Summe (Addierer 313) des Signals $b_1$ und des Produktes (Multiplizierer 309) aus dem Signal $a_{11}$ mit dem durch den Integrierer 317 gebildeten Signal für den Schätzwert $\hat{\beta}$ des Schwimmwinkels sowie des Produkts (Multiplizierer 311) aus dem Signal $a_{13}$ mit dem durch den Integrierer 327 gebildeten Signal für den Schätzwert $\hat{\psi}'$ der Giergeschwindigkeit zusammensetzt, und daß der Schätzwert $\hat{\psi}'$ für die Giergeschwindigkeit aus der zeitlichen Ableitung $\dot{\hat{\psi}}'$ des Schätzwertes für die Giergeschwindigkeit im Integrierer 327 gebildet wird, wobei sich das Signal $\dot{\hat{\psi}}'$ additiv (Addierer 325) aus dem Produkt (Multiplizierer 331) des Signals $\tilde{\psi}'$ mit dem Signal $k_3$ und aus der Summe (Addierer 323) des Signals $b_3$ und des Produkts (Multiplizierer 319) aus dem Signal $a_{31}$ mit dem durch den Integrierer 317 gebildeten Signal für den Schätzwert $\hat{\beta}$ für den Schwimmwinkel sowie des Produkts (Multiplizierer 321) aus dem Signal $a_{33}$ mit dem durch den Integrierer 327 gebildeten Signal für den Schätzwert $\hat{\psi}'$ der Giergeschwindigkeit zusammensetzt, und daß das Signal $\tilde{\psi}'$ aus der Differenz (Subtrahierer 333) der Giergeschwindigkeit $\psi'$ und des Schätzwerts $\hat{\psi}'$ für die Giergeschwindigkeit, der am Ausgang des Integrierers 327 anliegt, gebildet wird.

39. Vorrichtung nach Anspruch 11 oder 34, **dadurch gekennzeichnet**, daß für den Schätzwert $\hat{\beta}$ für den Schwimmwinkel der konstante Wert 0 setzbar ist.

40. Vorrichtung insbesondere nach einem der Ansprüche 11 bis 39 **dadurch gekennzeichnet**, daß ferner eine Anordnung VS1 zur Kompensation des durch die resultierende Fahrzeuggeschwindigkeit entstehenden Schleppfehlers vorgesehen ist und dazu durch den Addierer 410 zum Positionssollwert $w_X^{vor}$ das den Schleppfehler in x-Richtung kompensierende Signal $w_{X,komp}$ hinzuaddiert wird, so daß der für die Regelung relevante Sollwert $w_X$ entsteht, wobei das Signal $w_{X,komp}$ durch Addition (Addierer 409) des Kompensationssignals $w_{X1}$ für den durch die resultierende Fahrzeuggeschwindigkeit entstehenden Schleppfehler in x-Richtung und des Summensignals $w_{X,komp,1}$, das weitere Kompensationssignale in x-Richtung beinhaltet, gebildet wird, wobei das Signal $w_{X1}$ im Dividierer 407 durch den Quotienten aus dem Ausgangssignal des Multiplizierers 405 und dem Parameter $\lambda_1$ gebildet wird, und wobei im Multiplizierer 405 das Produkt aus dem Ausgangssignal des Multiplizierers 403 und dem Parameter $\alpha_{11}$ gebildet wird, und wobei im Multiplizierer 403 das Produkt aus dem Sollwert $w_v^{vor}$ für die Fahrzeuggeschwindigkeit und dem Kosinus des Sollwerts $w_v^{vor}$ für den Kurswinkel gebildet wird, und wobei der Kosinus des Sollwerts $w_v^{vor}$ für den Kurswinkel im Glied 401 zur Ermittlung des Kosinus aus dem Sollwert $w_v^{vor}$ gebildet wird, und daß durch den Addierer 420 zum Positionssollwert $w_Y^{vor}$ das den Schleppfehler in y-Richtung kompensierende Signal $w_{Y,komp}$ hinzuaddiert wird, so daß der für die Regelung relevante Sollwert $w_Y$ entsteht, wobei das Signal $w_{Y,komp}$ durch Addition (Addierer 419) des Kompensationssignals $w_{Y1}$ für den durch die resultierende Fahrzeuggeschwindigkeit entstehenden Schleppfehler in y-Richtung und des Summensignals $w_{Y,komp,1}$, das weitere Kompensationssignale in y-Richtung beinhaltet, gebildet wird, wobei das Signal $w_{Y1}$ im Dividierer 417 durch den Quotienten aus dem Ausgangssignal des Multiplizierers 415 und dem Parameter $\lambda_2$ gebildet wird, und wobei im Multiplizierer 415 das Produkt aus dem Ausgangssignal des Multiplizierers 413 und dem Parameter $\alpha_{12}$ gebildet wird, und wobei im Multiplizierer 413 das Produkt aus dem Sollwert $w_v^{vor}$ für die Fahrzeuggeschwindigkeit und dem Sinus des Sollwerts $w_v^{vor}$ für den Kurswinkel gebildet wird, und wobei der Sinus des Sollwertes $w_v^{vor}$ für den Kurswinkel im Glied 411 zur Ermittlung des Sinus aus dem Sollwert $w_v^{vor}$ gebildet wird.

41. Vorrichtung nach Anspruch 40, **dadurch gekennzeichnet**, daß zur Kompensation des durch die resultierende Fahrzeuglängsbeschleunigung entstehenden Schleppfehlers eine Anordnung VS2 vorgesehen ist, wobei das Signal $w_{X,komp,1}$ durch Addition (Addierer 425) des Kompensationssignals $w_{X2}$ für den durch die resultierende Fahrzeuglängsbeschleunigung entstehenden Schleppfehler in x-Richtung und des Summensignals $w_{X,komp,2}$, das weitere Kompensationssignale in x-Richtung beinhaltet, gebildet wird, und

27

wobei das Signal $w_{X2}$ im Multiplizierer 423 durch das Produkt aus dem Sollwert $w_v^{vor}$ für die Fahrzeugbeschleunigung und dem Kosinus des Sollwerts $w_v^{vor}$ für den Kurswinkel gebildet wird, und wobei der Kosinus des Sollwerts $w_v^{vor}$ für den Kurswinkel im Glied 421 zur Ermittlung des Kosinus aus dem Sollwert $w_v^{vor}$ gebildet wird, und das das Signal $w_{Y,komp,1}$ durch Addition (Addierer 431) des Kompensationssignals $w_{Y2}$ für den durch die resultierende Fahrzeuglängsbeschleunigung entstehenden Schleppfehler in y-Richtung und des Summensignals $w_{Y,komp,2}$, das weitere Kompensationssignale in y-Richtung beinhaltet, gebildet wird, wobei das Signal $w_{Y2}$ im Multiplizierer 429 durch das Produkt aus dem Sollwert $w_v^{vor}$ für die Fahrzeuglängsbeschleunigung und dem Sinus des Sollwerts $w_v^{vor}$ für den Kurswinkel gebildet wird, und wobei der Sinus des Sollwerts $w_v^{vor}$ für den Kurswinkel im Glied 427 zur Ermittlung des Sinus aus dem Sollwert $w_v^{vor}$ gebildet wird.

42. Vorrichtung nach Anspruch 40 oder 41, **dadurch gekennzeichnet,** daß zur Kompensation des durch die resultierende Fahrzeugquerbeschleunigung entstehenden Schleppfehlers eine Anordnung VS3 vorgesehen ist, wobei das Signal $w_{X,komp,2}$ durch Subtraktion (Subtrahierer 439) des Kompensationssignals $w_{X3}$ für den durch die resultierende Fahrzeugquerbeschleunigung entstehenden Schleppfehler in x-Richtung vom Summensignal $W_{X,komp,z}$, das etwaige weitere Kompensationssignale in x-Richtung beinhaltet, gebildet wird und wobei das Signal $w_{X3}$ im Multiplizierer 437 durch das Produkt aus dem Sollwert $w_v^{vor}$ für die Kurswinkelgeschwindigkeit und dem im Multiplizierer 435 gebildeten Produkt aus dem Sollwert $w_v^{vor}$ für die Fahrzeuggeschwindigkeit und dem Sinus des Sollwertes $w_v^{vor}$ für den Kurswinkel gebildet wird, und wobei der Sinus des Sollwerts $w_v^{vor}$ für den Kurswinkel im Glied 433 zur Ermittlung des Sinus aus dem Sollwert $w_v^{vor}$ gebildet wird, und daß das Signal $w_{Y,komp,2}$ durch Addition (Addierer 447) des Kompensationssignals $w_{Y3}$ für den durch die resultierende Fahrzeugquerbeschleunigung entstehenden Schleppfehler in y-Richtung und des Summensignals $w_{Y,komp,z}$, das etwaige weitere Kompensationssignale in y-Richtung beinhaltet, gebildet wird, wobei das Signal $w_{Y3}$ im Multiplizierer 445 durch das Produkt aus dem Sollwert $w_v^{vor}$ für die Kurswinkelgeschwindigkeit und dem im Multiplizierer 443 gebildeten Produkt aus dem Sollwert $w_v^{vor}$ für die Fahrzeuggeschwindigkeit und dem Kosinus des Sollwerts $w_v^{vor}$ für den Kurswinkel gebildet wird, und wobei der Kosinus des Sollwerts $w_v^{vor}$ für den Kurswinkel im Glied 441 zur Ermittlung des Kosinus aus dem Sollwert $w_v^{vor}$ gebildet wird.

## Claims

1. A method for automatically controlling the longitudinal and transverse motion of a vehicle, in the case of which at least the dynamic motion quantities with respect to the speed v of the vehicle, the yaw angle $\psi$ and the instantaneous true position and if necessary also the yaw rate $\psi'$ and the sideslip angle $\beta$ are measured and determined and desired value signals are formed with respect to a desired path of the vehicle, and in which the setting signals for a steering wheel angle $\delta$ and a driving or braking force H with respect to the vehicle are produced for driving respective actuating members for the automatic control of the vehicle in a manner dependent on regulation deviation signals derived from the true value signals, which describe the true vehicle path and corresponding desired value signals for the desired path, the coupling effects of the vehicle between the dynamic motion quantities being de-coupled from one another, characterized in that the two deviation signals formed either with respect to the course angle and the speed or with respect to the X and Y coordinates respectively from the associated true value and desired value signals are linked together partly in a non-linear fashion taking into account the true traveling condition of the vehicle, that is to say at least the two deviation signals are weighted and subsequently, with the production of regulation deviation signals, are added together for influencing the setting signals and in that in addition to the dynamic motion quantities furthermore the overall mass, which in this respect is derived from the vehicle parameters dependent on the vehicle and the load, are taken into account and the regulation deviation signals are so adapted to the overall mass of the vehicle that the regulation deviation signals are increased with an increase in the overall mass, and in that the non-linear coupling effects occurring between the dynamic motion quantities of the vehicle are compensated for by non-linear de-coupling effects taking in account the kinematic and kinetic motion properties of the vehicle and suitably produced compensation signals are additively linked with the regulation deviation signals, adapted to the overall mass, for the production of the setting signals.

2. The method for the automatic ascertainment of the steering angle δ to be instantaneously set as claimed in claim 1, characterized in that the setting signal I for the steering wheel angle is additively composed of the signal, which represents the fraction of the mutual coupling effects, coming into existence, in the longitudinal and transverse dynamics, which fraction has to be compensated for by the steering wheel angle and in this respect is ascertained by a method dependent on the sideslip angle β, the yaw rate ψ' and the vehicle speed v, and of the signal, which is made available by a method for the compensation of the change in overall mass of the vehicle in the weighted, modified regulation deviation, the sum signal resulting from this being furthermore adapted to the technical features of the vehicle, and the method for the compensation of the change in overall mass of the vehicle in the weighted, modified regulation deviation is supplied with on the one hand a signal corresponding to the load of the vehicle and on the other hand the output signal of a method for the necessary weighting, respectively in a manner dependent on the sideslip angle β and the vehicle deviation speed v, of the modified regulation deviations of the course angle and of the vehicle speed as regards the steering wheel angle δ, and the modified regulation deviation for the course angle is made available in a manner dependent on the course angle ν, the desired value $v_{soll}$ for the course angle and furthermore on regulation parameters by a regulation method, and the modified regulation deviation for the vehicle speed is made available in a manner dependent on the vehicle speed v, on the desired value $v_{soll}$ for the vehicle speed and furthermore on regulator parameters by means of a regulation method, the course angle ν being derived using a method from the yaw angle ψ and the sideslip angle β so that the setting signal I for steering is dependent on the desired values for the course angle and the vehicle speed and furthermore on the sideslip angle β, the yaw angle ψ, on the yaw rate ψ' and on the vehicle speed.

3. The method for the automatic ascertainment of the driving or, respectively, braking force H to be set instantaneously as claimed in claim 1, characterized in that the setting signal h for the driving or, respectively, braking force is additively composed of the signal, which represents the fraction of the mutual coupling effects, coming into existence, in the longitudinal and transverse dynamics, which fraction must be compensated for by the driving or, respectively, braking force, and in this respect is determined by a method dependent on the vehicle speed v, and of the signal, which is made available by a method for the compensation of the change in overall mass of the vehicle in the weighted, modified regulation deviation, the sum signal resulting from this being furthermore adapted to the technical features of the vehicle, and the method for the compensation of the change in overall mass of the vehicle in the weighted, modified regulation deviation being supplied with on the one hand a signal corresponding to the load of the vehicle and on the other hand the modified regulation deviation for the vehicle speed, and the modified regulation deviation for the vehicle speed being derived with a regulation method in a manner dependent on the vehicle speed v and the desired value $v_{soll}$ for the vehicle speed and furthermore the regulator parameters, and the course angle ν being derived using a method from the yaw angle ψ and the sideslip angle β so that the setting signal h for the driving and, respectively, braking force is dependent on the desired values for the course angle and the vehicle speed is dependent on the vehicle speed v.

4. The method for the ascertainment of the desired values for the course angle and the speed of a vehicle by stipulating the desired values for the coordinates of the vehicle position as claimed in any one of the claims 1 through 3, characterized in that the non-linear and/or linear mutual coupling effects coming into existence in the motion dynamics of the vehicle with respect to the individual coordinates relevant for positioning are compensated for and in that such compensation method is further developed by a regulation method for the vehicle position.

5. The method for the automatic ascertainment of the desired value $w_ν$ for the course angle as claimed in claim 4, characterized in that the signal of the desired value $w_ν$ for the course angle is additively composed of the signal which represents the fraction of the mutual coupling effects, coming into existence, with respect to the individual coordinates relevant for the positioning, which fraction must be compensated for by influencing the desired value $w_ν$ and in this respect is ascertained by a method dependent on the yaw angle ψ and the sideslip angle β, and of the signal of the weighted, modified regulation deviation adapted to the vehicle speed v and the dynamics of subordinate regulation circuits, the method for the adaptation of the modified weighted regulation deviation to the vehicle speed v and the dynamics of the subordinate regulation circuits being supplied with a parameter and the output signal of a method of weighting, in a manner dependent on the course angle ν (which for its part is formed by the yaw angle ψ and the sideslip angle β) the modified regulation deviations of the individual position coordinates with respect to the desired value $w_ν$ for the course angle, and the modified regulation deviations for the position coordinates being made available in a manner dependent the course angle $\nu$ and on the vehicle speed v, on the respective desired value for the vehicle position $w_X$ or $w_Y$, on the respective position coordinates X or Y and on regulation parameters by a regulation method so that the setting signal, which simultaneously represents the desired value $w_\nu$ of the course angle for a subordinate regulation circuit, is dependent on the desired values for the individual position coordinates, the instantaneous vehicle position and furthermore on the sideslip angle $\beta$, the yaw angle $\psi$ and on the vehicle speed v.

6. The method for the automatic ascertainment of the desired value $w_v$ for the vehicle speed as claimed in claim 4, characterized in that the signal of the desired value $w_v$ for the vehicle speed is additively composed of the signal, which represents the fraction of the mutual coupling effects coming into existence, with respect to the individual coordinates relevant for positioning, which fraction must be compensated for by influencing the desired value $w_v$, and in this respect is determined by a method dependent on the vehicle speed v, and the signal of the weighted modified regulation deviation adapted to the dynamics of subordinate regulation circuits, the method for the adaptation of the modified weighted regulation deviation to the dynamics of the subordinate regulation circuits being supplied with a parameter and with the output signal of a method for the respectively necessary weighting, in a manner dependent on the course angle $\nu$, which for its part is derived from the yaw angle $\psi$ and the sideslip angle $\beta$, of the modified regulation deviations of the individual position coordinates with respect to the desired value $w_v$ for the vehicle speed, and the modified regulation deviations for the individual position coordinates being made available in a manner dependent on the course angle $\nu$ and on the vehicle speed v, on the respective desired value for the vehicle position $w_X$ or $w_Y$, on the respective position coordinates X or Y and furthermore on the regulation parameters using a regulation method so that the setting signal, which simultaneously represents the desired value $w_v$ of the vehicle speed for a subordinate regulation circuit, is dependent on the desired values for the position coordinates, on the instantaneous vehicle position and furthermore on the sideslip angle $\beta$, on the yaw angle $\psi$ and on the vehicle speed v.

7. The method for the automatic control of the longitudinal and transverse movements of a vehicle by stipulation of the desired values for the coordinates of the vehicle position as claimed in claim 1, characterized in that the mutual non-linear and/or linear coupling effects coming into existence, in the motion dynamics of the vehicle with respect to the longitudinal and transverse dynamics of the vehicle, are compensated for and in that such compensation method is further developed by a regulation method for the vehicle position.

8. The method for the ascertainment of the steering wheel angle $\delta$ to be instantaneously set as claimed in claim 7, characterized in that the setting signal l of the steering wheel angle is additively composed of the signal, which represents the fraction of the mutual coupling effects, coming into existence, in the longitudinal and transverse dynamics, which fraction must be compensated for by steering, and which in this respect is determined by a method dependent on the sideslip angle $\beta$, on the yaw rate $\psi'$ and on the vehicle speed v, and of the signal, which is made available by a method for the compensation of the change in overall mass of the vehicle in the weighted, modified regulation deviation, the resulting sum signal being furthermore adapted to the technical features of the vehicle and the method for the compensation of the change in overall mass of the vehicle in the weighted, modified regulation deviation being supplied on the one hand with a signal corresponding to the vehicle load and on the other hand with the output signal of a method for the respectively necessary weighting, in a fashion dependent on the sideslip angle $\beta$ and on the course angle $\nu$, which for its part is derived from the yaw angle $\psi$ and the sideslip angle $\beta$, of the modified regulation deviations of the individual position coordinates with respect to the steering wheel angle $\delta$, and the modified regulation deviations for the individual vehicle coordinates being made available in a manner dependent on the course angle $\nu$ and on the vehicle speed v, on the respective desired value for the vehicle position $w_X$ or $w_Y$, on the respective position coordinates X or Y and furthermore on the regulation parameters by means of a regulation method so that the setting signal l for the steering is dependent on the desired values for the individual position coordinates, on the instantaneous vehicle position and furthermore on the sideslip angle $\beta$, on the yaw angle $\psi$, on the yaw rate $\psi'$ and on the vehicle speed v.

9. The method for the automatic ascertainment of the driving or, respectively, braking force H to be instantaneously set as claimed in claim 7, characterized in that the setting signal h of the driving or, respectively, braking force is additively composed of the signal, which represents the fraction of the mutual coupling effects, coming into existence, in the longitudinal and transverse dynamics, which fraction must be compensated for by steering, and in this respect is determined by a method in a manner dependent on the vehicle speed v, and of the signal which is made available by a method for the compensation of the change in overall mass of the vehicle in the weighted modified regulation deviation, the resulting sum signal being furthermore adapted to the technical features of the vehicle and the method for the compensation of the change in overall mass of the vehicle in the weighted modified regulation deviation being supplied on the one hand with a signal corresponding to the vehicle load and on the other hand with the output signal of a method for the respectively necessary weighting, in a manner dependent on the course angle v, which for its part is derived from the yaw angle $\psi$ and on the sideslip angle $\beta$, of the modified regulation deviations of the individual position coordinates as regards the driving or, respectively, braking force H, and the modified regulation deviations for the individual vehicle coordinates being made available in a manner dependent on the course angle v and on the vehicle speed v, on the respective desired value for the vehicle position $w_X$ or $w_Y$, on the respective position coordinates X or Y and furthermore on the regulation parameters by a regulation method so that the setting signal h for the driving or, respectively, braking force is dependent on the desired values for the individual position coordinates, on the instantaneous vehicle position and furthermore on the sideslip angle $\beta$, on the yaw angle $\psi$ and on the vehicle speed v.

10. The method more particularly as claimed in any one of the claims 1 through 9, characterized in that for the ascertainment of the instantaneous value of the sideslip angle $\beta$, an estimated value $\hat{\beta}$ for the sideslip angle is formed in a manner dependent on the yaw rate $\psi'$ present as an input signal and the output signals of a method for the determination of variable estimated parameters and furthermore on the variable amplification gain for the estimated error $\tilde{\psi}'$ in the yaw rate, the variable estimated parameters being derived from the signals for the vehicle speed v, for the steering wheel angle $\delta$ and the driving or, respectively, braking force H and using a method from a part of such estimated parameters the variable coefficients of amplification for the estimated error $\tilde{\psi}'$ for the yaw rate are determined.

11. An apparatus for the performance of the method as claimed in any one of the claims 1 through 10, comprising a regulation device for the production of setting signal for the steering wheel angle and the driving and braking force in a manner dependent on regulation deviation signals, which are derived taking into account true value signals corresponding to the dynamic motion quantities and desired value signals describing a desired path, the true value signals being able to be measured by detecting devices or being able to be formed from such signals by signal conversion and in this respect include at least the vehicle speed v, the yaw angle $\psi$ and the true instantaneous position and if necessary additionally the yaw rate $\psi'$ and the sideslip angle $\beta$, and furthermore a compensation device for overriding coupling effects in the vehicle between dynamic motion quantities, characterized in that for the production of the setting signals the overall mass is taken into account and in that the regulation device comprises a weighting device (7, 29, 81 and 103), wherein the two deviation signals formed either with respect to the course angle and the speed or with respect to the X and Y coordinates respectively from the respective true value the desired value signals are linked taking into account the respectively instantaneous true traveling condition of the vehicle partly in a non-linear manner, that is to say at least the two deviation signals are weighted and then additively linked with the production of regulation deviation signals and in that an adapting arrangement (9, 31, 83 and 105) is provided for the adaptation of the regulation deviation signals to the overall mass of the vehicle with the purpose of increasing the regulation deviation signal in a manner dependent on the overall mass, and furthermore a compensation arrangement (11, 33 85 and 107) having non-linear elements being provided for the non-linear overriding of the coupling effects occurring between the motion quantities while taking into account the kinematic and kinetic motion property of the vehicle and furthermore an additively operating linking circuit (adders 13, 35, 87 and 109) being s provided for the production of the setting signals for the course angle $\delta$ and for the driving and, respectively, braking force H from the respective regulation deviation signals and the compensation signals.

12. The apparatus as claimed in claim 11, characterized in that the setting signal l for the steering wheel angle acting as a semi-automatic device is additively made up (adder 13) of the signal kl - which represents the fraction of the mutually occurring coupling effects in the longitudinal and transverse dynamics - which fraction must be compensated for by steering and which in this respect is ascertained by the device KL (11) in a manner dependent on the sideslip angle $\beta$, on the yaw rate $\psi'$ and on the vehicle speed v, and of the signal glm, which is made available by the device EM (9) for compensation of the change in overall mass of the vehicle in the weighted, modified regulation deviation, the resulting sum signal l furthermore being adapted to the technical features of the vehicle by the adapting member 15 and the amplifier 17 and then supplied to the actuating means in order to influence the steering wheel angle δ (actuator 19), and the device EM (9) for the compensation of the change in overall mass of the vehicle in the weighted modified regulation deviation being on the one hand supplied with a signal $m_L$ corresponding to the vehicle load on the one hand and on the other hand with the output signal gl of the device GL (7) for the respectively necessary weighting in a manner dependent on the sideslip angle β and on the vehicle speed v, of the modified regulation deviation ruk of the course angle and ruv of the vehicle speed with respect to the steering wheel angle δ, the modified regulation deviation ruk for the course angle being made available in a manner dependent on the course angle v, on the desired value $v_{soll}$ for the course angle and furthermore on regulation parameters by means of the regulation device RU (1), the modified regulation deviation for the vehicle speed being made available in a manner dependent on the vehicle speed v, on the desired value $v_{soll}$ for the vehicle speed and furthermore on regulation parameters by the regulation device RU (3), and the course angle v being derived with the device EK (5) from the yaw angle ψ and the sideslip angle β so that the setting signal l for steering is dependent on the desired values for the course angle and the vehicle speed and furthermore on the sideslip angle β, on the yaw angle ψ, on the yaw rate ψ′ and on the vehicle speed v.

13. The apparatus as claimed in claim 11 or in claim 12, characterized in that the setting signal h for the driving or, respectively, braking force, in the manner of a semiautomatic system, is additively composed (adder 35) of the signal kh, which represents a fraction of the mutual coupling effects in the longitudinal and transverse dynamics, which fraction must be compensated for by the driving or, respectively, braking force and in this respect is determined by the device KH (33) in a manner dependent on the vehicle speed v, and of the signal ghm, which is made available by the device EM (31) for the compensation of the change in overall mass of the vehicle in the weighted, modified regulation deviation, the sum signal h resulting from this being furthermore adapted to the technical features of the vehicle by the adapting member 37 and the amplifier 39 and then being supplied to the actuators for influencing the driving and, respectively, braking force H (actuator 41), and the device EM (31) for the compensation of the change in overall mass of the vehicle in the weighted, modified regulation deviation being supplied on the one hand with a signal $m_L$ corresponding to the vehicle load and on the other hand with the output signal gh of the device GH (29) and the device GH is supplied with an input signal in the form of the modified regulation deviation ruv for the vehicle speed, and the modified regulation deviation ruv for the vehicle speed is formed in the regulation device RU (25) in a manner dependent on the vehicle speed v and the desired value $v_{soll}$ for the vehicle speed together with the regulator parameters so that the setting signal h for the driving and braking force is dependent on the desired values for the vehicle speed and on the vehicle speed v.

14. The apparatus more particularly as claimed in any one of the claims 11 through 13, characterized by an automatic input device adapted to be connected on the input side of a semi-automatic device for the automatic determination of the desired value $w_v$ for the course angle, the signal of the desired value $w_v$ for the course angle being additively composed (adder 59) of the signal kok, which represents the fraction of the mutual coupling effects, coming into existence, with respect to the individual coordinates relevant for positioning, which fraction must be compensated for by influencing desired value $w_v$ and in this respect is determined by the device KOK (57) in a manner dependent on the yaw angle ψ and on the sideslip angle β, and of the signal krok of the weighted, modified regulation deviation which is also adapted to the vehicle speed v and to the dynamics of subordinate regulation circuits, for the purpose of adaptation of the modified weighted regulation deviation to the vehicle speed v and the dynamics of the subordinate regulate circuits the device KROK (55) being supplied with the vehicle speed v, a parameter and the output signal gk of the device GK (53) for the respectively necessary weighting in a fashion dependent on the course angle v, which for its part is formed with the device EK (51) from the yaw angle ψ and the sideslip angle β, of the modified regulation deviations rpx and rpy for the individual position coordinates with respect to the desired value $w_v$ for the course angle, and the modified regulation deviations rpx and, respectively, rpy for the individual position coordinates being made available in a manner dependent on the course angle v and on the vehicle speed v, on the respective desired value for the vehicle position $w_X$ or $w_Y$, on the respective position coordinates X or Y and furthermore on the regulation parameters, by the regulation devices RP (47 and, respectively, 49) so that the setting signal, which simultaneously represents the desired value $w_v$ of the course angle for a subordinate regulation circuit, is dependent on the desired values for the individual position coordinates, the instantaneous vehicle position and furthermore on the sideslip angle β, on the yaw angle ψ and on the vehicle speed v.

15. The apparatus more particularly as claimed in any one of the claims 11 through 14, characterized by an automatic input device adapted to be connected on the input side of a semi-automatic device for the automatic determination of the desired value $w_v$ for the course angle, the signal of the desired value $w_v$ for the vehicle speed being additively composed (adder 73) of the signal kov, which represents the fraction of the mutual coupling effects, coming into existence, with respect to the individual coordinates relevant for positioning, which fraction must be compensated for by influencing the desired value $w_v$ and in this respect is determined by the device KOV (71) in a manner dependent on the vehicle speed v and the signal krov of the weighted modified regulation deviations adapted to the dynamics of subordinate regulation circuits, for the purpose of adaptation of the modified weighted regulation deviation to the dynamics of the subordinate regulation circuits the device KROV (69) being supplied with a parameter and the output signal gv of the device GV (67) for the respectively necessary weighting, in a fashion dependent on the course angle v, which for its part is formed with the device EK (65) from the yaw angle $\psi$ and the sideslip angle $\beta$, of the modified regulation deviations rpx and, respectively, rpy for the individual position coordinates in relation to the desired value $w_v$ for the vehicle speed and the modified regulation deviations rpx and rpy being made available in a manner dependent on the course angle v and on the vehicle speed v, on the respective desired value for the vehicle position $w_X$ or $w_Y$, on the respective position coordinates X or Y and furthermore on the regulation parameters, by the regulation devices RP (61 and, respectively, 63) so that the setting signal, which simultaneously represents the desired value $w_v$ of the vehicle speed for a subordinate regulation circuit, is dependent on the desired values for the individual position coordinates, the instantaneous vehicle position and furthermore on the sideslip angle $\beta$, on the yaw angle $\psi$ and on the vehicle speed v.

16. The apparatus as claimed in claim 11, characterized in that the setting signal I of the steering wheel angle is additively composed (adder 87) of the signal kl, which represents the fraction of the mutual coupling effects, coming into existence, in the longitudinal and transverse dynamics, which fraction must be compensated for by steering and which in this respect is determined by the device KL (85) in a manner dependent on the sideslip angle $\beta$, on the yaw rate $\psi'$ and on the vehicle speed v, and of the signal gplm, which is made available by the device EM (83) for compensation of the change in overall mass of the vehicle in the weighted, modified regulation deviation, the sum signal I thereby produced being adapted to the technical features of the vehicle by the adapting member 89 and the amplifier 91 and then supplied to the actuating means for influencing the steering wheel angle $\delta$ (actuator 93), and the device EM (83) for the compensation of the change in overall mass of the vehicle, in the weighted, modified regulation deviation, being supplied with a signal $m_L$ corresponding to the vehicle load and the output signal gpl of the device GPL (81) for the necessary weighting, in a manner dependent on the sideslip angle $\beta$ and on the course angle v, which for its part is formed in the device EK (79) from the yaw angle $\psi$ and the sideslip angle $\beta$, of the modified regulation deviations rpx and rpy of the individual position coordinates with respect to the steering wheel angle $\delta$, and the modified regulation deviations rpx and, respectively, rpy for the individual vehicle coordinates are made available in a manner dependent on the course angle v and on the vehicle speed v, on the respective desired value for the vehicle position $w_X$ or $w_Y$, on the respective position coordinates X or Y and furthermore on the regulation parameters by the regulation devices RP (75 and, respectively, 77) so that the setting signal I for steering is dependent on the desired value for the individual position coordinates, the instantaneous vehicle position and furthermore on the sideslip angle $\beta$, on the yaw angle $\psi$, on the yaw rate $\psi'$ and on the vehicle speed v.

17. The apparatus as claimed in claim 11 or claim 16, characterized in that the setting signal h for the driving or, respectively, braking force is additively composed (adder 109) of the signal kh, which represents fraction of the mutual coupling effects, coming into existence, in the longitudinal and transverse dynamics, which fraction must be compensated for by steering and in this respect is derived by the device KH (107) in a manner dependent on the vehicle speed v, and of the signal gphm, which is made available by the device EM (105) for compensation of the change in overall mass of the vehicle in the weighted modified regulation deviation, the resulting sum signal h being furthermore adapted to the technical features of the vehicle by the adapting member 111 and the amplifier 113 and then supplied to the actuating means for influencing the driving and braking force H (actuator 115), and the device EM (105) for the compensation of the change in overall mass of the vehicle in the weighted modified regulation deviation being supplied on the one hand with a signal $m_L$ corresponding to the vehicle load and on the other hand with the output signal gph of the device GPH (103) for the respectively necessary weighting, in a manner dependent on the course angle v, which for its part is formed in the device EK (101) from the yaw angle $\psi$ and from the sideslip angle $\beta$, of the modified regulation deviation rpx and rpy of the individual position coordinates with respect to the driving or, respectively, braking force H, and the modified regulation deviations rpx and , respectively, rpy for the individual vehicle coordinates being made available in a manner dependent of the course angle $\nu$ and on the vehicle speed v, on the respective desired value for the vehicle position $w_X$ or $w_Y$, on the respective position coordinates X or Y and furthermore on the regulator parameters by the regulation devices RP (97 and, respectively, 99) so that the setting signal for the driving and, respectively, braking force H is dependent on the desired values for the individual position coordinates, on the instantaneous vehicle position and furthermore on the sideslip angle $\beta$, on the yaw angle $\psi$ and on the vehicle speed v.

18. The apparatus as claimed in claim 12 or claim 16, characterized in that in the case of the arrangement KL the compensation signal is formed by difference formation in the subtractor 127 from the quotients, amplified in the amplifier 123, of the yaw rate $\psi'$ and the vehicle speed v (divider 123) with the signal amplified in the amplifier 125 of the sideslip angle $\beta$, the compensation signal compensating for undesired coupling effects, caused directly by the sideslip angle $\beta$, the yaw rate $\psi'$ and the vehicle speed v, in the longitudinal and transverse dynamics of the vehicle, which must be compensated for by steering.

19. The apparatus as claimed in claim 13 or claim 17, characterized in that in the case of the arrangement KH the compensation signal is formed by amplification (amplifier 131) of the square formed in the square producing means 129, of the vehicle speed v, the compensation signal compensating for undesired coupling effects, caused directly by the vehicle speed v, in the longitudinal and transverse dynamics of the vehicle, which must be compensated for by the driving or, respectively, braking force.

20. The apparatus as claimed in claim 12, claim 14, claim 15, claim 16 or claim 17, characterized in that in the case of the arrangement EK the signal for the course angle $\nu$ is determined using the subtractor 133 by difference formation with the yaw angle $\psi$ and the sideslip angle $\beta$.

21. The apparatus as claimed in claim 12, claim 13, claim 16 or claim 17, characterized in that in the case of the arrangement EM the mass-dependent output signal ghm, glm, gphm and, respectively, gplm is formed in the amplifier 136, the input signal of the amplifier 136 being formed in the multiplier 135 from the product of the mass-independent input signal gh, gl, gph and, respectively, gpl times the overall mass of the vehicle, the overall mass being the sum, formed in the adder 139, of the empty mass of the vehicle and the variable load $m_L$ of the vehicle and the signal for the empty mass of the vehicle being formed in the amplifier 137.

22. The apparatus as claimed in claim 14, claim 15, claim 16 or claim 17, characterized in that the in the case of the arrangement RP the modified regulation deviation rpx or, respectively, rpy is formed in the adder 151 from the sum of the output signal X or, respectively, Y weighted in the multiplier 143 with the parameter $\alpha_{01}$ and, respectively, $\alpha_{02}$, of the output signal, weighted in the multiplier 149 with the parameter $\alpha_{11}$ and, respectively, $\alpha_{12}$, of the multiplier 147 and of the signal weighted in the multiplier 141 with the parameters $\lambda_1$ and, respectively, $\lambda_2$ and then negated for the desired value $w_X$ and, respectively, $\lambda_2$, the vehicle speed v being multiplied in the multiplier 147 by the cosine and, respectively, sine of the course angle $\nu$. the sine or, respectively, cosine of the course angle $\nu$ being formed in the member 145 for the calculation of the sine or, respectively, of the cosine.

23. The apparatus as claimed in claim 12 or in claim 13, characterized in that in the case of the arrangement RU the modified regulation deviation ruk or, respectively, ruv is formed in the subtractor 157 by the difference formation of the signal, weighted in the multiplier 155 using the parameter $\overline{\alpha}_{01}$ and, respectively, $\overline{\alpha}_{02}$ for the course angle $\nu$ and, respectively, for the vehicle speed v with the signal, weighted in the multiplier 153 using the parameter $\overline{\lambda}_1$ and, respectively, $\overline{\lambda}_2$, of the desired value $w_\nu$ for the course angle and, respectively, $w_v$ for the vehicle speed.

24. The apparatus as claimed in claim 12, characterized in that in the case of the arrangement GL the output signal gl is formed, using the subtractor 163, by the subtraction of the modified regulation deviation ruk, weighted with the vehicle speed v in the multiplier 159, from the modified regulation deviation ruv weighted in the multiplier 161 using the sideslip angle $\beta$.

25. The apparatus as claimed in claim 13, characterized in that in the case of the arrangement GH the output signal gh is formed using the negator 165 by negation of the modified regulation deviation ruv.

26. The apparatus as claimed in claim 15, characterized in that in the case of the arrangement GV the output signal gv is formed using the negator/adder 175 by the addition of the negated modified regulation deviation rpx, weighted by the multiplier 171 with the cosine of the course angle $\nu$ and the negated modified regulation deviation rpy being weighted by the multiplier 173 with the sine of the course angle $\nu$ the sine of the course angle $\nu$ being formed by the member 169 for the determination of the sine from the signal of the course angle $\nu$ and the cosine from the signal of the course angle $\nu$ using the member 167 for the determination of the cosine from the signal of the course angle $\delta$ also.

27. The apparatus as claimed in claim 14, characterized in that in the case of the arrangement GK the output signal gk is formed using the subtractor 185 by subtracting of the modified regulation deviation rpy, weighted with the cosine of the course angle $\nu$ by the multiplier 183, from the modified regulation deviation rpx weighted with the sine of the course angle $\nu$, the sine of the course angle $\nu$ being formed by the member 179 for the determination of the sine from the signal of the course angle $\nu$ and the cosine of the course angle $\nu$ by the member 177 for the determination of the cosine, also from the signal of the course angle $\nu$.

28. The apparatus as claimed in claim 17, characterized in that in the case of the arrangement GPH the output signal gph is formed using the negator/adder 195 by the addition of the negated modified regulation deviation rpx as weighted by the multiplier 193 with the cosine of the course angle $\nu$ and the negated modified regulation deviation rpy as weighted by the multiplier 191 with the sine of the course angle $\nu$, the sine of the course angle $\nu$ being formed by the member 189 for the determination of the sine from the signal of the course angle $\nu$ and the cosine of the course angle $\nu$ by the member 187 for the determination of the cosine also from the signal of the course angle $\nu$.

29. The apparatus as claimed in claim 16, characterized in that in the case of the arrangement GPL the output signal gpl is formed using the adder 213 by the addition of the modified regulation deviation rpx as weighted by the multiplier 205 with the output of the adder 203 and the modified regulation deviation rpy as weighted by the multiplier 211 with the output of the subtractor 209, in the adder 203 the sum being formed of the sine of the course angle $\nu$ and the product, formed in the multiplier 201, of the cosine of the course angle $\nu$ times the sideslip angle $\beta$, in the subtractor 209 the cosine of the course angle $\nu$ being formed from the product, formed in the multiplier 207, of the sine of the course angle $\nu$ times the sideslip angle $\beta$, the sine of the course angle $\nu$ being formed by the member 199 for the determination of the sine from the signal for the course angle $\nu$ being formed and the cosine of the course angle $\nu$ by the member 197 for the determination of the cosine also being formed from the signal for the course angle $\nu$ also.

30. The apparatus as claimed in claim 14, characterized in that in the case of the arrangement KROK the output signal krok is formed by division (divider 217) of the output signal of the divider 215 by the parameter $a_{01}$, the divider being employed to form the quotient of the signal gk and the vehicle speed v.

31. The apparatus as claimed in claim 15, characterized in that in the case of the arrangement KROV the output signal krov is formed by division (divider 219) of the signal gv by the parameter $a_{02}$.

32. The apparatus as claimed in claim 14, characterized in that in the case of the arrangement KOK the output signal kok is formed using the device EK (block 221) from the sideslip angle $\beta$ and the yaw angle $\psi$.

33. The apparatus as claimed in claim 15, characterized in that in the case of the arrangement KOV the output signal kov consists of the vehicle speed v.

34. The apparatus as claimed in any one of the claims 11 through 33, characterized by an arrangement for the estimation of the instantaneous value for the sideslip angle $\beta$, in the device SB (307) the estimated value $\hat{\beta}$ for the sideslip angle being formed in a manner dependent of the speed $\psi'$ present as the input quantity and the signals, also present at the input, $a_{11}$, $a_{13}$, $a_{31}$, $a_{33}$, $b_1$, $b_3$, $k_1$ and $k_3$, and the signals $a_{11}$, $a_{13}$, $a_{31}$, $a_{33}$, $b_1$ and $b_3$ being formed in the device SA (301) from the values, present here at the input, for the vehicle speed v, the steering wheel angle $\delta$ and the driving and, respectively, braking force H, and the signal $k_1$ being formed in the device SK1 (303) from the signals $a_{11}$, $a_{13}$ and $a_{31}$ as determined in the device SA (301) and furthermore the parameters $\lambda_{1,s}$ and $\lambda_{2,s}$ and the signal $k_3$ being formed from the signals $a_{11}$ and $a_{33}$ as determined in the device SA (301) and furthermore from the parameters $\lambda_{1,s}$ and $\lambda_{2,s}$.

35. The apparatus as claimed in claim 34, characterized in that the in the case of the arrangement SA the instantaneous value of the signal $a_{11}$ is formed using the amplifier 343 from the difference (subtractor 341) between the vehicle speed v and the quotient, formed from the sum (adder 337) of the signal adapted by the amplifier 344, of the driving and, respectively, braking force H with the output of the amplifier 335, which at the input has the numerical value of 1, and the vehicle speed v, in that the instantaneous value of the signal $a_{13}$ is made up from the sum (adder 350) of the numerical value 1 and of the quotient (divider 349) from the output of the amplifier 345, which at the input has the numerical value of 1, with the output of the square producing means 347, by which the square of the vehicle speed v is formed, in that the instantaneous value of the signal $a_{31}$ is formed by the amplifier 351, which at the input has the numerical value of 1, in that the instantaneous value of the signal $a_{33}$ is formed from the quotient (divider 357) of the output of the amplifier 335 with the vehicle speed v, the amplifier 355 having the numerical value of -1 present at the input via the output of the negating means 353, in that the instantaneous value of the signal $b_1$ is formed by the divider 363 from the quotient of the signal amplified in the amplifier 359 and then negated in the negating means 361 of the steering wheel angle $\delta$ with the vehicle speed v and in that the signal $b_2$ consists of the signal, amplified by amplifier 367, of the steering wheel angle $\delta$.

36. The apparatus as claimed in claim 34, characterized in that in the case of the arrangement SK1 the instantaneous value of the of the signal $k_1$ is composed of the sum (adder 385) of the signal $a_{13}$ and of the quotient, as formed by the divider 383, of the output of the adder 381 with the signal $a_{31}$, in the adder 381 the product formed in the multiplier 379, of the parameters $\lambda_{1,s}$ and $\lambda_{2,s}$ being added to the output of the subtractor 377 and in the subtractor 377 the difference between the output of the subtractor 373 and the signal $a_{11}$, weighted with the parameter $\lambda_{2,s}$ in the multiplier 375 being formed and in the subtractor 373 the difference between the square formed in the square producing means 371 of the signal $a_{11}$ being formed with the signal $a_{11}$ as weighted in the multiplier 369 with the parameter $\lambda_{1,s}$.

37. The apparatus as claimed in claim 34, characterized in that in the case of the arrangement SK3 the instantaneous value of the signal $k_3$ is formed from the difference (subtractor 389) of the sum (adder 387) of the signal $a_{11}$ and of the signal $a_{33}$ with the sum (adder 391) of the parameter $\lambda_{a,s}$ and of the parameter $\lambda_{2,s}$.

38. The apparatus as claimed in any one of the claims 37 through 37, characterized in that for the determination of the instantaneous estimated value $\hat{\beta}$ for the sideslip angle in an arrangement SB the estimated value $\hat{\beta}$ of the sideslip angle is formed from the time derivation $\dot{\hat{\beta}}$ of the estimated value of the sideslip angle in the integrator 317, the signal $\dot{\hat{\beta}}$ being composed additively (adder 315) of the product (multiplier 329) of the signal $\tilde{\psi}'$ times the signal $k_1$ and from the sum (adder 313) of the signal $b_1$ and of the product (multiplier 309) of the signal $a_{11}$ times the signal formed by the integrator 317 for the estimated value $\hat{\beta}$ of the sideslip angle and of the product (multiplier 311) of the signal $a_{13}$ times the signal formed by the integrator 327 for the estimated value $\hat{\psi}'$ of the yaw rate, that in that the estimated value $\hat{\psi}'$ for the yaw rate is formed from the time derivation $\dot{\hat{\psi}}'$ of the estimated value for the yaw rate in the integrator 327, the signal $\dot{\hat{\psi}}'$ being additively (adder 325) composed of the product (multiplier 331) of the signal $\tilde{\psi}'$ times the signal $k_3$ and from the sum (adder 323) of the signal $b_3$ and of the product (multiplier 319) of the signal $a_{31}$ times the signal, formed in the integrator 317, for the estimated value $\hat{\beta}$ for the sideslip angle and of the product (multiplier 321) of the signal $a_{33}$ times the signal, formed in the integrator 327, for the estimated value $\hat{\psi}'$ of the yaw rate, and in that the signal $\tilde{\psi}'$ is derived from the difference (subtractor 333) of the yaw rate $\psi'$ and of the estimated value $\hat{\psi}'$ for the yaw rate, which is present at the output of the integrator 327.

39. The apparatus as claimed in claim 11 or in claim 34, characterized in that for the estimated value $\hat{\beta}$ for the sideslip angle the constant value 0 may be posited.

40. The apparatus more particularly as claimed in any one of the claims 11 through 39, characterized in that furthermore an arrangement VS1 for the compensation of the drag error due to the resulting vehicle speed is provided and for this purpose by the adder 410 the signal $w_{X,komp}$ compensating the drag error in the x direction is added to the desired position value $w_X^{vor}$ so that the desired value $w_X$ relevant for the regulation is produced, the signal $w_{X,komp}$ being formed by addition (adder 409) of the compensation signal $x_{X1}$ for the drag error in the x direction, due to the resulting vehicle speed and the sum signal $w_{X,komp,1}$, which comprises further compensation signals in the x direction, the signal $x_{X1}$ being formed in the divider 407 from the quotient of the output signal of the multiplier 405 and the parameter $\lambda_1$ and in the multiplier 405 the product of the output signal of the multiplier 403 times the parameter $\alpha_{11}$ being formed, and in the multiplier 403 the product of the desired value $w_v^{vor}$ for the vehicle speed times the cosine of the desired value $w_v^{vor}$ for the course angle being formed, and of the cosine of the desired value $w_v^{vor}$ for the course angle being formed in the member 401 for the determination of the cosine of the desired value $w_v^{vor}$, and in that by means of the adder 420 the signal $_{Y,komp}$ compensating the drag error in the y direction is added to the position value $w_Y^{vor}$ so that the desired value $w_Y$ relevant for regulation is produced, the signal $w_{Y,komp}$ being formed by addition (adder 419) of the compensation signal $w_{Y1}$ for the drag error in the y direction, due to the resulting vehicle speed and of the sum signal $w_{Y,komp,1}$, which comprises further compensation signals in the y direction, the signal $w_{Y1}$ in the divider 417 being formed by the quotient of the output signal of the multiplier 415 and the parameter $\lambda_2$, and the product of the output signal of the multiplier 413 times the parameter $\alpha_{12}$ being formed in the multiplier 415, that in the multiplier the product of the desired value $w_v^{vor}$ for the vehicle speed times the sine of the desired value $w_v^{vor}$ for the course angle being formed in the member 411 in order to determine the sine from the desired value $w_v^{vor}$.

41. The apparatus as claimed in claim 40, characterized in that for the compensation of the drag error due to the resulting longitudinal vehicle acceleration an arrangement VS2 is provided, the signal $w_{X,komp,1}$ being formed by addition (adder 425) of the compensation signal $w_{X2}$ for the drag error due to the resulting longitudinal vehicle acceleration in the x direction and of the sum signal $w_{X,komp,2}$, which comprises further compensation signals in the x direction, and the signal $w_{X2}$ being formed in the multiplier 423 using the product of the desired value $w_{v'}^{vor}$ for the vehicle acceleration times the cosine of the desired value $w_v^{vor}$ for the course angle, the cosine of the desired value $w_v^{vor}$ for the course angle being formed in the member 421 for the determination of the cosine from the desired value $w_v^{vor}$, and the signal $w_{Y,komp,1}$ being formed by addition (adder 431) of the compensation signal $w_{Y2}$ for the drag error in the y direction due to longitudinal vehicle acceleration and of the sum signal $w_{Y,komp,2}$, which comprises further compensation signals in the y direction, the signal $w_{Y2}$ being formed in the multiplier 429 by the product of the desired value $w_v^{vor}$ for the longitudinal vehicle acceleration times the sine of the desired value $w_v^{vor}$ for the course angle in the member 427 for the determination of the sine from the desired value $w_v^{vor}$ being formed from the desired value $w_v^{vor}$.

42. The apparatus as claimed in claim 40 or in claim 41, characterized in that for the compensation of the drag error due to longitudinal acceleration of the vehicle an arrangement VS3 is provided, the signal $w_{X,komp,2}$, being formed by subtraction (subtractor 439) of the compensation signal $w_{X3}$ for the drag error in the x direction due to the resulting vehicle acceleration from the sum signal $w_{X,komp,z}$, which comprises any further compensation signals in the x direction, and the signal $w_{X3}$ being formed in the multiplier 437 using the product of the desired value $w_{v'}^{vor}$ for the vehicle and product formed in the multiplier 435 of the desired value $w_v^{vor}$ for the vehicle speed and the sine of the desired value $w_v^{vor}$ for the course angle and the sine of the desired value $w_v^{vor}$ for the course angle being formed, and the sine of the desired value $w_v^{vor}$ for the course angle being formed in the member 433 for the determination of the sine from the desired value $w_v^{vor}$, and that the signal $w_{Y,komp,2}$ being formed by addition (adder 447) of the compensation signal $w_{Y3}$ for the drag error in the y direction due to the resulting transverse vehicle acceleration and of the sum signal $w_{Y,komp,z}$, which comprises any further compensation signals in the y direction,, the signal $w_{Y3}$ being formed in the multiplier 445 using the product of the desired value $w_v^{vor}$ for the course angle speed and the product, formed in the multiplier 443, from the desired value $w_v^{vor}$ for the vehicle speed and the cosine of the desired value $w_v^{vor}$ for the course angle being formed in the member 441 for the determination of the cosine from the desired value $w_v^{vor}$.

**Revendications**

1. Procédé pour le guidage automatique des mouvements longitudinaux et transversaux d'un véhicule dans lequel au moins les grandeurs dynamiques des mouvements pour la vitesse du véhicule V, l'angle de lacet ψ et la position réelle actuelle et éventuellement aussi la vitesse de lacet ψ' et l'angle de flottement β sont mesurés et déterminés et des signaux de consigne concernant un parcours de consigne véhicule sont formés et dans lequel des signaux de réglage pour un braquage d'angle de direction Δ et une force motrice ou de freinage H du véhicule sont produits pour commander des éléments de réglage correspondant en vue du guidage automatique du véhicule en fonction des signaux de différence de réglage formés à partir des signaux de valeur réelle décrivant le parcours réel du véhicule et des signaux de consigne correspondant pour le parcours de consigne, dans lequel les couplages du côté du véhicule entre les grandeurs de mouvement dynamique sont découplés les unes par rapport aux autres, caractérisées en ce que les deux signaux de différence correspondant à l'angle de parcours et à la vitesse ou correspondant aux coordonnées X et Y sont connectés de manière partiellement non linéaires d'après les 2 signaux de différence formés avec les signaux de grandeur réelle et de consigne correspondant en tenant compte de l'état de roulement réel actuel du véhicule, c'est-à-dire qu'au moins les 2 signaux de différence sont pondérés et sont ajoutés ensuite avec production de signaux de différence de réglage pour influencer les signaux de réglage et en ce que, outre les grandeurs de mouvement dynamique, il est tenu compte de la masse totale qui est calculée d'après les paramètres de véhicule dépendant du véhicule et de la charge et les signaux de différence de réglage sont adaptés à cette masse totale du véhicule de façon que les signaux différentiels de réglage soient augmentés quand la masse totale augmente et que les couplages non linéaires apparaissant entre les grandeurs de mouvement dynamique du véhicule soient compensés par des découplages non linéaires en tenant compte du comportement de mouvement cinématique et cinétique du véhicule et que des signaux de compensation créés de manière correspondante soient combinés par addition aux signaux différentiels de réglage adaptés à la masse totale pour produire les signaux de réglage.

2. Procédé pour déterminer automatiquement le braquage d'angle de direction Δ a adopter réellement selon la revendication 1 caractérisée en ce que le signal de réglage 1 pour le braquage d'angle de direction est formé à partir du signal représentant la fraction des couplages créé entre la dynamique longitudinale et transversale qui doit être compensée par le braquage d'angle de direction et par un procédé en fonction de l'angle de flottement β de la vitesse de lacet ψ et la vitesse du véhicule V et sont compensés par addition à partir du signal qui est créé par un procédé pour compenser les différences de masse flottante du véhicule dans la différence de réglage à modification pondérée dans lequel le signal total ainsi obtenu est encore adapté aux caractéristiques techniques du véhicule, et dans lequel il s'ajoute au procédé de compensation des différences masses totales du véhicule dans la différence de réglage à modification pondérée, un signal correspondant à la charge du véhicule d'une part et d'autre part, le signal sortie d'un procédé pour en fonction de l'angle de flottement β et de la vitesse de véhicule V déterminer chaque fois la pondération résultante de la différence de réglage modifiée de l'angle de parcours et de la vitesse du véhicule pour ce qui concerne le braquage de l'angle de direction et dans lequel la différence de réglage modifiée pour l'angle de parcours est préparé en fonction de l'angle de parcours ν de la valeur de consigne ν soll pour l'angle de parcours, ainsi que de paramètre de réglage par une opération de régulation et dans lequel la différence de réglage modifiée pour la vitesse du véhicule est préparée en fonction de la vitesse du véhicule v, de la valeur de consigne v soll pour la vitesse du véhicule ainsi que des paramètres de régulateurs par une opération de régulation et dans lequel l'angle de parcours ν est formé par une opération en partant de l'angle de lacet ψ et de l'angle de flottement β si bien que le signal de réglage 1 pour la direction dépend des valeurs de consigne pour l'angle de parcours et la vitesse du véhicule ainsi que de l'angle de flottement β, de l'angle de lacet ψ, de la vitesse de lacet ψ' et la vitesse du véhicule V.

3. Procédé pour déterminer automatiquement la force motrice ou de freinage H a adapter réellement selon la revendication 1 caractérisée en ce que le signal de réglage H pour la force motrice ou de freinage est déterminé à partir du signal représentant la fraction des couplages apparaissant entre la dynamique longitudinale et la dynamique transversale qui doit être compensée par la force motrice ou de freinage et qui est déterminé par une opération en fonction de la vitesse du véhicule et est composée par addition à partir du signal qui est préparé par une opération pour compenser les différences de masse totale du véhicule dans la différence de réglage à modification pondérée dans lequel le signal total ainsi produit est encore adapté aux caractéristiques techniques du véhicule et dans lequel à l'opération de compensation de la différence de masse totale du véhicule, dans la différence de réglage à modification pondérée, il s'ajoute d'une part un signal correspondant à la charge du véhicule et à la différence de réglage modifié pour la vitesse du véhicule et dans lequel la différence de réglage modifiée pour la vitesse du véhicule est formée par une opération de régulation en fonction de la vitesse du véhicule V et de la valeur de consigne v soll pour la vitesse du véhicule ainsi que des paramètres de régulateur et dans lequel l'angle de parcours est formé par une opération en partant de l'angle de lacet $\psi$ et de l'angle de flottement $\beta$ si bien que le signal de réglage H pour la force motrice ou de freinage dépend de valeurs de consigne pour l'angle de parcours et pour la vitesse du véhicule et de la vitesse du véhicule.

4. Procédé pour déterminer automatiquement les valeurs de consigne pour l'angle de parcours et la vitesse d'un véhicule en déterminant au préalable les valeurs de consigne pour les coordonnées de la position du véhicule selon l'une des revendications en 1 à 3, caractérisées en ce que les couplages non linéaires et/ou linéaires apparaissant dans la dynamique de mouvement du véhicule pour les différentes coordonnées correspondant aux positionnements sont compensés et en ce que cette opération de compensation est complétée par une opération de régulation pour la position du véhicule.

5. Procédé pour déterminer automatiquement la valeur de consigne $w_v$ pour l'angle de parcours selon les revendications 4 caractérisées en ce que le signal de la valeur de consigne $w_v$ pour l'angle de parcours est composé par addition du signal représentant la fraction des couplages apparaissant entre les différentes coordonnées correspondant au positionnement, qui doit être compensé en influant la valeur de consigne $w_v$ et est déterminé par une opération en fonction de l'angle de lacet $\psi$ et de l'angle de flottement $\beta$ et du signal de la différence de réglage à modification pondérée et adaptée à la vitesse du véhicule V et à la dynamique des circuits de régulation subordonnés dans lequel à l'opération pour adapter la différence de réglage à modification pondérée à la vitesse du véhicule V et à la dynamique des circuits de régulation subordonnés on ajoute un paramètre et le signal de sortie d'une opération pour obtenir, en fonction de l'angle de parcours $v$ qui est obtenu pour sa part d'après l'angle de lacet $\psi$ et l'angle de flottement $\beta$, la pondération de la différence de réglage modifiée des coordonnées individuelles de position pour ce qui concerne la valeur de consigne $w_v$ pour l'angle de parcours et dans lequel les différences de réglage modifiées pour les différentes coordonnées de position sont obtenues en fonction de l'angle de parcours $v$ et de la vitesse du véhicule V, de chaque valeur de consigne pour la position du véhicule Wx ou Wy d'après les coordonnées de position X ou Y ainsi que d'après les paramètres de réglage par une opération de régulation si bien que le signal de réglage, qui représente simultanément la valeur de consigne $w_v$ de l'angle de parcours pour un circuit de régulation subordonné, dépend des valeurs de consigne pour les différentes coordonnées de position, de la position réelle du véhicule ainsi que de l'angle de flottement $\beta$, de l'angle de lacet $\psi$, et de la vitesse du véhicule V.

6. Procédé pour déterminer automatiquement la valeur de consigne $W_v$ pour la vitesse du véhicule selon la revendication 4, caractérisé en ce que le signal de la valeur de consigne $W_v$ pour la vitesse du véhicule est composé par addition du signal représentant la fraction des couplages mutuels apparaissant pour le positionnement des différentes coordonnées correspondantes qui doit être compensé en influençant la valeur de consigne $W_v$ et qui est déterminé par une opération en fonction de la vitesse du véhicule V et du signal de la différence de réglage à modification pondérée et adaptée à la dynamique des circuits de régulation subordonnés, dans lequel à l'opération pour adapter la différence de réglage à modification modérée à la dynamique des circuits de régulations subordonnées on ajoute un paramètre et le signal de sortie d'une opération pour obtenir, en fonction de l'angle de parcours du V qui est formé pour sa part à partir de l'angle de lacet $\psi$ et de l'angle de flottement $\beta$, la pondération de différence de réglage modifiée des coordonnées individuelles de position pour ce qui concerne la valeur de consigne $W_v$ pour la vitesse du véhicule et dans lequel les différences de réglage modifiées pour les différentes coordonnées de position sont obtenues en fonction de la valeur de consigne $W_v$ pour la vitesse du véhicule et dans lequel les différences de réglage modifiées pour les coordonnées individuelles de position sont obtenues en fonction de l'angle de parcours $v$ et de la vitesse du véhicule V de chaque valeur de consigne pour la position du véhicule Wx et Wy des coordonnées individuelles de position X ou Y ainsi que des paramètres de réglage par une opération de régulation, si bien que le signal de réglage qui constitue simultanément la valeur de consigne de $W_v$ de la vitesse du véhicule pour un circuit de régulation subordonné, dépend des valeurs de consigne des différentes coordonnées de position, de la position réelle du véhicule ainsi que de l'angle de flottement $\beta$, de l'angle de lacet $\psi$ et de la vitesse du véhicule V.

7. Procédé pour le guidage automatique des mouvements longitudinaux et transversaux d'un véhicule par introduction au préalable des valeurs de consigne pour les coordonnées de position du véhicule selon la revendication 1, caractérisé en ce que les couplages non linéaires et/ou linéaires mutuels qui sont composés dans la dynamique de mouvement du véhicule pour ce qui concerne les dynamiques longitudinale et transversale et en ce que cette opération de compensation est complétée par une opération de régulation pour la position du véhicule.

**8.** Procédé pour déterminer automatiquement le braquage d'angle de direction $\Delta$ à adopter actuellement selon la revendication 7, caractérisé en ce que le signal de réglage 1 pour le braquage de l'angle de direction est composé par addition du signal représentant la fraction des couplages mutuels apparaissant dans les dynamiques longitudinale et transversale, qui doit être compensée par la direction et qui est déterminée alors par une opération en fonction de l'angle de flottement $\beta$, de l'angle de lacet $\psi'$ et de la vitesse du véhicule V et du signal qui est obtenu par une opération pour compenser les différences de masse totale du véhicule dans la différence de réglage à modification pondérée dans lequel le signal total ainsi obtenu est encore adapté aux caractéristiques techniques du véhicule et dans lequel à l'opération pour compenser des différences de masse totale du véhicule dans la différence de réglage à modération pondérée, on ajoute un signal correspondant à la charge du véhicule et le signal de sortie d'une opération pour former la pondération des différences de réglage modifiée des différentes coordonnées de position concernant le braquage de l'angle de direction $\beta$, d'autre part en fonction de l'angle de flottement $\beta$ et de l'angle de parcours $\nu$ d'une part, qui est formé d'après l'angle de lacet $\psi$ et l'angle de flottement $\beta$, et dans lequel les différences de réglage modifiées pour les différentes coordonnées du véhicule sont obtenues en fonction de l'angle de parcours $\nu$ et de la vitesse du véhicule V, des valeurs de consigne pour la position du véhicule $W_x$ ou $W_y$, des différentes coordonnées de position X ou Y ainsi que des paramètres de réglage par une opération de régulation, si bien que le signal de réglage 1 pour la direction dépend des valeurs de consigne pour les différentes coordonnées de position, de la position réelle du véhicule ainsi que de l'angle de flottement $\beta$, de l'angle de lacet $\psi$, de la vitesse de lacet $\psi'$ et de la vitesse du véhicule V.

**9.** Procédé pour déterminer automatiquement la force motrice ou de freinage H à adopter actuellement selon la revendication 7, caractérisé en ce que le signal de réglage H pour la force motrice ou de freinage est composé par addition du signal représentant la fraction des couplages mutuels apparaissant dans les dynamiques longitudinale et transversale, qui doit être compensés par la direction et qui est déterminée par une opération en fonction de la vitesse du véhicule V et du signal qui est obtenu par une opération de compensation des différences de masse totale du véhicule dans la différence de réglage à modification pondérée, dans lequel le signal total ainsi obtenu est encore adapté aux caractéristiques techniques du véhicule et dans lequel à l'opération de compensation des différences de masse totale du véhicule dans la différence de réglage à modification pondérée, on ajoute, d'une part, un signal correspondant à la charge du véhicule et d'autre part, le signal de sortie d'une opération pour former en fonction de l'angle de parcours $\nu$, qui est obtenu pour sa part d'après l'angle de lacet $\psi$ et l'angle de flottement $\beta$, la pondération correspondante des différences de réglage modifiées, des coordonnées individuelles de position concernant la force motrice ou de freinage et dans lequel les différences de réglage modifiées pour les coordonnées individuelles du véhicule sont obtenues en fonction de l'angle de parcours $\nu$ et de la vitesse du véhicule V des valeurs de consigne pour la position du véhicule $W_x$ ou $W_y$ des différentes coordonnées de position X ou Y ainsi que des paramètres de réglage par une opération de régulation, si bien que le signal de réglage H pour la force motrice ou de freinage dépend des valeurs de consigne pour les différentes coordonnées de position, de la position réelle du véhicule ainsi que de l'angle de flottement $\beta$, de l'angle de lacet $\psi$ et de la vitesse du véhicule V.

**10.** Procédé, en particulier, selon l'une des revendications 1 à 9, caractérisé en ce que, pour déterminer la valeur réelle de l'angle de flottement $\beta$, on forme une valeur estimée $\beta$ de l'angle de flottement en fonction de la vitesse de lacet $\psi'$ introduite sous forme de signal d'entrée et des signaux de sortie d'un procédé pour déterminer des paramètres variables évalués et en fonction des coefficients d'amplification variables pour l'erreur estimée $\psi'$ pour la vitesse de lacet dans lequel les paramètres variables estimés sont obtenus d'après les signaux de la vitesse du véhicule V, du braquage de l'angle de direction $\delta$ et de la force motrice ou de freinage H et dans lequel les coefficients d'amplification variables pour l'erreur estimée $\psi'$ de la vitesse de lacet sont déterminés au moyen d'une opération d'après une partie de ces paramètres estimés au moyen d'une opération.

**11.** Dispositif pour mettre en oeuvre le procédé selon l'une des revendications 1 à 10 avec un dispositif de régulation pour créer des signaux de réglage pour le braquage de l'angle de direction et la force motrice et de freinage en fonction des signaux de différence de réglage qui sont obtenus en tenant compte des signaux de valeur réelle correspondant aux grandeurs de mouvement dynamiques et des signaux de consigne décrivant un parcours de consigne, dans lequel les signaux de valeur réelle peuvent être mesurés par des appareils de mesure ou peuvent être obtenus, d'après ces signaux de mesure, par conversion des signaux et dans lequel ces signaux comprennent au moins la vitesse du véhicule V, l'angle de lacet $\psi$ et la position réelle actuelle et éventuellement en outre la vitesse de lacet $\psi'$ et l'angle de flottement

β et avec un dispositif de compensation pour découpler les couplages du côté du véhicule entre les grandeurs de mouvement dynamiques, caractérisé en ce que pour créer les signaux de réglage, on peut tenir compte de la masse totale et en ce que les dispositifs de régulation comprend un dispositif de pondération (7, 29, 81, 103) dans lequel les deux signaux différentiels obtenu d'après les signaux de valeur réelle et de consigne correspondants et concernant l'angle de parcours et la vitesse ou concernant les coordonnées X et Y, sont combinés de manière partiellement non linéaire en tenant compte de l'état réel actuel du véhicule c'est-à-dire qu'au moins les deux signaux différentiels sont pondérés et sont combinés ensuite par addition avec création de signaux de différentiels de réglage et en ce que un dispositif d'adaptation (9, 31, 83, 105) est destiné à adapter les signaux de différentiels de réglage à la masse totale du véhicule dans le sens d'une augmentation des signaux de différentiels de réglage en fonction de la masse totale et un dispositif de compensation (11, 33, 85, 107) comportant des éléments non linéaires pour effectuer le découplage non linéaire des couplages non linéaires mutuels apparaissant entre les grandeurs de mouvement, en tenant compte du comportement de mouvement cinématique et cinétique du véhicule ainsi qu'un circuit de combinaison fonctionnant par addition (additionneur 13, 35, 87, 109) pour créer des signaux de réglage pour le braquage de l'angle de direction δ et pour la force motrice et le freinage H d'après les signaux de différence de réglage totale et les signaux de compensation.

12. Dispositif selon la revendication 11 caractérisé en ce que le signal de réglage 1 pour le braquage d'angle de direction est composé à la manière d'un dispositif semi-automatique, par addition conditionneur (3) du signal KL représentant la fraction des couplages mutuels apparaissant dans les dynamiques longitudinale et transversale qui doit être compensée par la direction et qui est déterminée par le dispositif KL (11) en fonction de l'angle de flottement β, de la vitesse de lacet ψ' et de la vitesse du véhicule V et d'après le signal VLM qui est créé par le dispositif EM (9) de compensation des différences de masse totale du véhicule dans la différence de réglage à modification pondérée dans lequel le signal total 1 ainsi obtenu est encore adapté aux caractéristiques techniques du véhicule par l'élément d'adaptation 15 et l'amplificateur 17 et est envoyé ensuite à l'actionneur pour influencer le braquage de l'angle de direction δ (élément de réglage 19) et dans lequel le dispositif EM (9) de compensation des différences de masse totale du véhicule dans la différence de réglage à modification pondérée crée un signal ML correspondant à la charge du véhicule, d'une part, et d'autre part, le signal de sortie VL du dispositif GL 7 pour réaliser la pondération des différences de réglage modifiées RUK de l'angle de parcours et de la vitesse du véhicule RUV pour ce qui concerne le braquage de l'angle de direction en fonction de l'angle de flottement β et de la vitesse du véhicule V et dans lequel les différences de réglage modifiées RUK pour l'angle de parcours est obtenu en fonction de l'angle de parcours ν, de la valeur de consigne $\nu_{soll}$ pour l'angle de parcours ainsi que des paramètres de réglage par le dispositif de régulation RU (1) et dans lequel la différence de réglage modifiée pour la vitesse du véhicule est obtenu en fonction de la vitesse du véhicule V, de la valeur de consigne $V_{soll}$ de la vitesse du véhicule, ainsi que des paramètres de réglage par le dispositif de régulation RU (3) et dans lequel l'angle de parcours ν est formé par le dispositif EK (5) d'après l'angle de lacet ψ et l'angle de flottement β, si bien que le signal de réglage 1 pour la direction dépend de la valeur de consigne pour l'angle de parcours et la vitesse du véhicule ainsi que de l'angle de flottement β, de l'angle de lacet ψ, de la vitesse de lacet ψ' et de la vitesse du véhicule V.

13. Dispositif selon la revendication 11 ou 12, caractérisé en ce que le signal de réglage h pour la force motrice ou de freinage est composé à la manière d'un dispositif semi-automatique par addition (additionneur 35) du signal KH représentant la fraction des couplages mutuels apparaissant dans les dynamiques longitudinale et transversale qui doit être compensée par la force motrice ou de freinage et qui est déterminée par le dispositif KH33 en fonction de la vitesse du véhicule V et du signal VHM qui est produit par le dispositif EM 31 de compensation de la différence de masse totale du véhicule dans la différence de réglage à modification pondérée, dans lequel le signal total h ainsi obtenu est encore adapté aux caractéristiques techniques du véhicule par l'élément d'adaptation 37 et l'amplificateur 39 et est envoyé ensuite aux éléments de réglage pour influencer la force motrice ou de freinage H (élément de réglage 41) et dans lequel le dispositif EM 31 de compensation des différences de masse totale du véhicule dans la différence de réglage à modification pondérée reçoit, d'une part, un signal correspondant à la charge du véhicule et, d'autre part, le signal de sortie gh du dispositif GH (29) et dans lequel le dispositif GH reçoit comme signal d'entrée la différence de réglage modifiée RUV pour la vitesse du véhicule et dans lequel la différence de réglage modifiée RUV pour la vitesse du véhicule est obtenue dans le dispositif de réglage RU (25) en fonction de la vitesse du véhicule V et de la valeur de consigne $V_{soll}$ pour la vitesse du véhicule ainsi que des paramètres de réglage, si bien que le signal de réglage pour la force motrice et de freinage dépend des valeurs de consigne pour la vitesse du véhicule et de la vitesse du véhicule.

**14.** Dispositif en particulier selon l'une des revendications 11 à 13, caractérisé par un dispositif automatique de précommutation pouvant être monté avant un dispositif semi-automatique en vue de la détermination automatique de la valeur de consigne Wv pour l'angle de parcours dans lequel le signal de la valeur de consigne Wv pour l'angle de parcours est composé par addition (additionneur 59) du signal KOK représentant la fraction des couplages mutuels apparaissant pour le positionnement des coordonnées individuelles correspondantes qui doit être compensée en influençant la valeur de consigne Wv et qui est déterminée par le dispositif KOK 57 en fonction de l'angle de lacet $\psi$ et de l'angle de flottement $\beta$ et du signal KROK de la différence de réglage à modification pondérale et adapté à la vitesse du véhicule V et à la dynamique des circuits de régulation subordonnés, dans lequel le dispositif KROK 55 pour adapter la différence de réglage à modification pondérée à la vitesse du véhicule V et à la dynamique des circuits de régulation subordonnés reçoit la vitesse du véhicule V, un paramètre et le signal de sortie gh du dispositif GK1 53 pour obtenir la pondération correspondante des différences de réglage modifiées RPx et RPy pour les différentes coordonnées de position concernant la valeur de consigne Wv pour l'angle de parcours qui est formé en fonction de l'angle de parcours $\nu$ qui est obtenu pour sa part avec le dispositif EK 51 d'après l'angle de lacet $\psi$ et l'angle de flottement $\beta$ et dans lequel les différences de réglage modifiés rpx ou rpy pour les coordonnées individuelles de position sont obtenues en fonction de l'angle de parcours $\nu$ et de la vitesse du véhicule V d'après chaque valeur de consigne pour la position du véhicule $w_X$ ou $w_Y$ des coordonnées de position particulières X ou Y ainsi que des paramètres de réglage par les dispositifs de régulation RP (47) ou (49) si bien que le signal de réglage, qui constitue simultanément la valeur de consigne $w_v$ de l'angle de parcours pour un circuit de régulation subordonné, dépend des valeurs de consigne pour les différentes coordonnées de position de la position réelle du véhicule ainsi que de l'angle de flottement $\beta$, de l'angle de lacet $\psi$ et la vitesse du véhicule V.

**15.** Dispositif en particulier selon l'une des revendications 11 à 14 caractérisé par un dispositif automatique de précommutation pouvant être connecté avant un dispositif semi-automatique pour déterminer automatiquement la valeur de consigne $w_v$ pour la vitesse du véhicule dans lequel le signal de la valeur de consigne $w_v$ pour la vitesse du véhicule est formé d'après le signal kov représentant la fraction des couplages mutuels apparaissant et concernant les différentes coordonnées correspondantes de positionnement qui doit être compensée en influençant la valeur de consigne $w_v$ et qui est déterminée par le dispositif KOV (71) en fonction de la vitesse du véhicule et d'après le signal krov des différences de réglage à modification pondérée et adaptée à la dynamique des circuits de régulation subordonnés, dans lequel le dispositif KROV (69) pour adapter la différence de réglage à modification pondérée à la dynamique des circuits de régulation subordonnés reçoit un paramètre et le signal de sortie gv du dispositif GV (67) pour déterminer, en fonction de l'angle de parcours $\nu$, qui est formé pour sa part par le dispositif EK 65 d'après l'angle de lacet $\psi$ et l'angle de flottement $\beta$, afin d'obtenir la pondération requise des différences de régulation modifiée rpx et rpy pour les coordonnées individuelles de position concernant la valeur de consigne $w_v$ pour la vitesse du véhicule et dans lequel les différences de réglage modifiées rpx ou rpy pour les coordonnées individuelles de position sont obtenues en fonction de l'angle de parcours $\nu$ et de la vitesse du véhicule V des valeurs de consigne pour la position du véhicule $w_X$ ou $w_Y$, des coordonnées individuelles de position X ou Y ainsi que des paramètres de réglage par les dispositifs de régulation RP (61) ou (63) si bien que le signal de réglage 1, qui représente simultanément la valeur de consigne $w_v$ de la vitesse du véhicule pour un circuit de régulation subordonné, dépend des valeurs de consigne pour les coordonnées individuelles de position, de la position réelle du véhicule ainsi que de l'angle de flottement $\beta$, de l'angle de lacet $\psi$ et de la vitesse du véhicule V.

**16.** Dispositif selon la revendication 11 caractérisé en ce que le signal de réglage 1 pour le braquage de l'angle de direction est composé par addition (additionneur 87) du signal kl représentant la fraction des couplages mutuels apparaissant dans les dynamiques longitudinale et transversale qui doit être compensée par la direction et qui est déterminée par le dispositif KL (85) en fonction de l'angle de flottement $\beta$, de la vitesse de lacet $\psi'$ et de la vitesse du véhicule V et du signal gplm qui est produit par le dispositif EM (83) de compensation des différences de masse totale du véhicule dans la différence de régulation à modification pondérée, dans lequel le signal total 1 ainsi obtenu est encore adapté aux caractéristiques techniques du véhicule par l'élément d'adaptation 89 et l'amplificateur 91 et est envoyé ensuite à l'actionneur pour influencer le braquage de l'angle de direction $\delta$ (élément de réglage 93) et dans lequel le dispositif EM (83) de compensation de différences de masse totale du véhicule dans la différence de régulation à modification pondérée reçoit un signal $m_L$ correspondant à la charge du véhicule et le signal de sortie GPL du dispositif GPL (81) pour former la pondération requise en fonction de l'angle de flottement $\beta$ et de l'angle de parcours $\nu$, qui est formé pour sa part dans le dispositif EK (79) d'après l'angle de lacet $\psi$ et l'angle

de flottement β et des différences de régulation modifiées rpx et rpy des coordonnées individuelles de position concernant le braquage de l'angle de direction δ et dans lequel les différences de régulation modifiées rpx ou rpy pour les différentes coordonnées du véhicule sont obtenues en fonction de l'angle de parcours ν et de la vitesse du véhicule V, des valeurs de consigne pour la position du véhicule $w_X$ ou $w_Y$ des différentes coordonnées de position X ou Y ainsi que des paramètres de réglage par les dispositifs de régulation RP (75) ou (77) si bien que le signal de réglage 1 pour la direction dépend des valeurs de consigne pour les coordonnées individuelles de position, de la position réelle du véhicule ainsi que de l'angle de flottement β, de l'angle de lacet ψ, de la vitesse de lacet ψ' et de la vitesse du véhicule V.

17. Dispositif selon la revendication 11 ou 16 caractérisé en ce que le signal de réglage h pour la force motrice ou de freinage est composé par addition (additionneur 109) du signal kh représentant la fraction des couplages mutuels apparaissant dans les dynamiques longitudinale et transversale, qui doit être compensée par la direction et qui est déterminée par le dispositif KH (107) en fonction de la vitesse du véhicule et du signal gphm qui est produit par le dispositif EM (105) pour compenser les différences de masse totale du véhicule dans la différence de régulation à modification pondérée dans lequel le signal total h ainsi obtenu est encore adapté aux caractéristiques techniques du véhicule par l'élément d'adaptation (111) et l'amplificateur (113) et est envoyé ensuite à l'actionneur pour influencer la force motrice ou de freinage H (élément de réglage 115) et dans lequel le dispositif EM (105) de compensation des différences de masse totale du véhicule dans la différence de régulation à modification pondérée reçoit un signal $m_L$ correspondant à la charge du véhicule, d'une part, et, le signal de sortie gph du dispositif GPH (103) pour obtenir la pondération requise de la différence de régulation modifiée rpx et rpy des coordonnées individuelles de position concernant la force motrice et de freinage, d'autre part, en fonction de l'angle de parcours ν, qui est formé pour sa part dans le dispositif EK (101) d'après l'angle de lacet ψ et l'angle de flottement β et dans lequel les différences de régulation modifiées rpx ou rpy pour les coordonnées individuelles du véhicule sont obtenues en fonction de l'angle de parcours ν et de la vitesse du véhicule V, des valeurs de consigne pour la position du véhicule $w_X$ ou $w_Y$ des coordonnées individuelles de position X ou Y ainsi que des paramètres de réglage dans les dispositifs de régulation RP (97 ou 99), si bien que le signal de réglage pour la force motrice ou de freinage H dépend des valeurs de consigne pour les différentes coordonnées de position, de la position actuelle du véhicule ainsi que de la vitesse de flottement β, de l'angle de lacet ψ et de la vitesse du véhicule V.

18. Dispositif selon la revendication 12 ou 16, caractérisé en ce que, dans le dispositif KL, le signal de compensation est formé par la formation dans le soustracteur 127, de la différence du quotient amplifié par l'amplificateur (123) de la vitesse de lacet ψ' et de la vitesse du véhicule V (diviseur 121) et du signal de l'angle de flottement β amplifié par l'amplificateur 125, dans lequel le signal de compensation compense les couplages nuisibles dans les dynamiques longitudinale et transversale du véhicule, conditionnés directement par l'angle de flottement β, la vitesse de lacet ψ' et la vitesse du véhicule V et qui doivent être compensés par la direction.

19. Dispositif selon la revendication 13 ou 17 caractérisé en ce que, dans le dispositif KH, le signal de compensation est formé par l'amplification (amplificateur 131) du carré de la vitesse du véhicule V formé dans le quadrateur (129) dans lequel le signal de compensation compense les couplages nuisibles dans les dynamiques longitudinale et transversale du véhicule conditionnés directement par la vitesse du véhicule V et qui doivent être compensés par la force motrice ou de freinage.

20. Dispositif selon la revendication 12, 14, 15, 16 ou 17, caractérisé en ce que, dans le dispositif EK, le signal pour l'angle de parcours ν est déterminé dans le soustracteur (133) par la formation de la différence entre l'angle de lacet ψ et l'angle de flottement β.

21. Dispositif selon la revendication 12, 13, 16 ou 17 caractérisé en ce que dans le dispositif EM les signaux de sortie dépendants de la masse ghm, glm, gphm ou gplm est formé dans l'amplificateur (136) lorsque le signal d'entrée de l'amplificateur (136) est formé dans le multiplicateur (135) par le produit du signal d'entrée gh, gl, gph ou gpl indépendants de la masse par la masse totale du véhicule et dans lequel la masse totale est formée de la somme formée dans l'additionneur (139) de la masse à vide du véhicule et de la charge variable $m_L$ du véhicule et dans lequel le signal pour la masse à vide du véhicule est formé dans l'amplificateur (137).

22. Dispositif selon la revendication 14, 15, 16 ou 17 caractérisé en ce que dans le dispositif RP, la différence de régulation modifiée rpx ou rpy est formée dans l'additionneur 151 de la somme du signal X ou Y pondéré dans le multiplicateur 143 par le paramètre $\alpha 01$ ou $\alpha 02$, du signal de sortie du multiplicateur 147 pondéré dans le multiplicateur 149 par la paramètre $\alpha 11$ ou $\alpha 12$ et du signal pour la valeur de consigne $w_X$ ou $w_Y$ pondéré dans le multiplicateur 141 par le paramètre $\lambda 1$ ou $\lambda 2$ et rendu ensuite négatif, dans lequel, dans le multiplicateur 147, la vitesse du véhicule V est multipliée par le cosinus ou le sinus de l'angle de parcours $\nu$, dans lequel le sinus ou le cosinus de l'angle de parcours $\nu$ est formé dans l'élément 145 pour calculer le sinus ou le cosinus.

23. Dispositif selon la revendication 12 ou 13, caractérisé en ce que, dans le dispositif RU, la différence de régulation modifiée ruk ou ruv est formée dans le soustracteur 157 de la différence du signal pondéré dans le multiplicateur 155 par le paramètre $\alpha 01$ ou $\alpha 02$ pour l'angle de parcours $\nu$ ou pour la vitesse du véhicule V et du signal pondéré dans le multiplicateur 153 par le paramètre $\lambda 1$ ou $\lambda 2$ de la valeur de consigne $w_\nu$ de l'angle de parcours ou $w_\nu$ pour la vitesse du véhicule.

24. Dispositif selon la revendication 12, caractérisé en ce que, dans le dispositif GL, le signal de sortie gl est formé dans le soustracteur 163, par la soustraction de la différence de régulation à modification pondérée dans le multiplicateur 159 par la vitesse du véhicule ruk de la différence de régulation ruv à modification pondérée dans le multiplicateur 161 par l'angle de flottement $\beta$.

25. Dispositif selon la revendication 13 caractérisé en ce que dans le dispositif GH le signal de sortie gh est formé par l'inverseur de signe 165 en inversant le signe de la différence de régulation modifiée ruv.

26. Dispositif selon la revendication 15, caractérisé en ce que dans le dispositif GV, le signal de sortie gv est formé, dans l'inverseur de signe/additionneur 175 par l'addition de la différence de régulation rpx à modification pondérée dans le multiplicateur 171 par le cosinus de l'angle de parcours V et à signe inversé et de la différence de régulation rpx à modification pondérée dans le multiplicateur 173 par le cosinus de l'angle de parcours $\nu$ et à signe inversé dans lequel le sinus de l'angle de parcours $\nu$ est formé par l'élément 169 pour déterminer le sinus d'après le signal de l'angle de parcours $\nu$ et le cosinus de l'angle de parcours $\nu$ est formé par l'élément 167 pour déterminer le cosinus, également d'après le signal de l'angle de parcours $\nu$.

27. Dispositif selon la revendication 14, caractérisé en ce que, dans le dispositif GK le signal de sortie gk est formé, dans le soustracteur 185, par la soustraction de la différence de régulation rpy à modification pondérée dans le multiplicateur 183 par le cosinus de l'angle de parcours $\nu$ de la différence de régulation rpx à modification pondérée dans le multiplicateur 181 par le sinus de l'angle de parcours $\nu$, dans lequel le sinus d'angle de parcours $\nu$ est formé par l'élément 179 pour déterminer le sinus d'après le signal d'angle de parcours $\nu$ et le cosinus de l'angle de parcours $\nu$ est formé par l'élément 177 pour déterminer le cosinus, également d'après le signal de l'angle de parcours $\nu$.

28. Dispositif selon la revendication 17, caractérisé en ce que dans le dispositif GPH le signal de sortie gph est formé, dans l'inverseur de signe 195, par l'addition de la différence de régulation à modification rpx pondérée par le multiplexeur 193 par le cosinus de l'angle de parcours $\nu$ et à signe inversé et de la différence de la régulation rpy à modification pondérée dans le multiplicateur 191 par le sinus de l'angle de parcours $\nu$ et à signe inversé, dans lequel le sinus de l'angle de parcours $\nu$ est formé par l'élément 189 pour déterminer le sinus en partant du signal de l'angle de parcours $\nu$ et le cosinus de l'angle de parcours $\nu$ est formé par l'élément 187 pour déterminer le cosinus également en partant du signal de l'angle de parcours $\nu$.

29. Dispositif selon la revendication 16 caractérisé en ce que dans le dispositif GPL, le signal de sortie gpl est formé, dans l'additionneur 213, par l'addition de la différence de régulation rpx à modification pondérée dans le multiplicateur 205 par la sortie de l'additionneur 203 et de la différence de régulation rpy à modification pondérée dans le multiplicateur 211 par la sortie du soustracteur 209, dans lequel, dans l'additionneur 203, on forme la somme du sinus de l'angle de parcours $\nu$ et du produit, formé dans le multiplicateur 201, du cosinus de l'angle de parcours $\nu$ par l'angle de flottement $\beta$ et dans lequel, dans le soustracteur 209, le cosinus de l'angle de parcours $\nu$ est formé par le produit formé dans le multiplicateur 207 du sinus de l'angle de parcours $\nu$ par l'angle de flottement $\beta$ et dans lequel le sinus de l'angle parcours $\nu$ est formé par l'élément 109 pour déterminer le sinus en partant du signal de l'angle de parcours $\nu$ et le cosinus de l'angle de parcours $\nu$ est formé par l'élément 197 pour déterminer le cosinus également en partant du signal de l'angle de parcours $\nu$.

**30.** Dispositif selon la revendication 14, caractérisé en ce que dans le dispositif KROK le signal de sortie krok est formé par division dans le diviseur 217 du signal de sortie du diviseur 215 par la paramètre $a_{01}$ dans lequel le quotient du signal gk et de la vitesse du véhicule V est formé dans le diviseur 215.

**31.** Dispositif selon la revendication 15 caractérisé en ce que dans le dispositif KROV le signal de sortie krov est formé par la division dans le diviseur 219 du signal gv par le paramètre A02.

**32.** Dispositif selon la revendication 14 caractérisé en ce que dans le dispositif KOK le signal de sortie kok est formé par le dispositif EK (bloc 221) en partant de l'angle de flottement $\beta$ et de l'angle lacet $\psi$.

**33.** Dispositif selon la revendication 15, caractérisé en ce que, dans le dispositif KOV, le signal de sortie kov est constitué de la vitesse du véhicule V.

**34.** Dispositif en particulier selon l'une des revendications 11 à 33, caractérisé par un dispositif pour estimer la valeur actuelle de l'angle de flottement $\beta$ dans lequel, dans le dispositif SB (307), la valeur estimée $\beta$ pour l'angle de flottement est formée en fonction de la vitesse de lacet $\psi'$ se présentant comme une grandeur d'entrée et des signaux a11, a13, a31, a33, b1, b3, k1 et k3 qui sont également des signaux introduits à l'entrée et dans lequel les signaux a11, 13, a31, a33, b3 dans le dispositif SA (301) sont formés en partant des valeurs, introduites à l'entrée, de la vitesse du véhicule V, du braquage de l'angle de direction $\delta$ et de la force motrice ou de freinage H et dans lequel le signal $k_1$ dans le dispositif SK1 (303) est formé des signaux a11, a13, et a31 déterminé dans le dispositif SA (301) ainsi que des paramètres $\lambda_{1,s}$ et $\lambda_{2,s}$ et dans lequel le signal k3 dans le dispositif SK3 (305) est formé des signaux $a_{11}$ et $a_{33}$ déterminés dans le dispositif SA (301) ainsi que des paramètres $\lambda_{1,s}$ et $\lambda_{2,s}$.

**35.** Dispositif selon la revendication 34, caractérisé en ce que, dans le dispositif SA, la valeur actuelle du signal $a_{11}$ est formé en passant par l'amplificateur 343 en utilisant la différence (soustracteur 341) entre la vitesse du véhicule V et le quotient formé dans le diviseur 339 de la somme (additionneur 337) du signal adapté par l'amplificateur 344 de la force motrice ou de freinage H par la sortie de l'amplificateur 335 qui prend à l'entrée la valeur numérique 1 et de la vitesse du véhicule V et en ce que la valeur actuelle du signal $a_{13}$ est formée de la somme (additionneur 350) de la valeur numérique 1 et du quotient (diviseur 349) de la sortie de l'amplificateur 345 qui prend à l'entrée la valeur numérique 1 par la sortie du quadrateur 347 par lequel est formé le carré de la vitesse du véhicule V et en ce que la valeur actuelle du signal $a_{31}$ est formée par l'amplificateur 351 qui présente à l'entrée la valeur numérique 1 et en ce que la valeur actuelle du signal a33 est formée du quotient (diviseur 357) de la sortie de l'amplificateur 355 par la vitesse du véhicule V dans lequel l'amplificateur 355 applique, par la sortie de l'élément d'inversion de signe 353, la valeur numérique -1 à l'entrée et en ce que la valeur actuelle du signal $b_1$ est formée dans le diviseur 363 par le quotient du signal du braquage d'angle de direction $\delta$ amplifié par l'amplificateur 359 et à signe inversé ensuite dans l'élément d'inversion de signe 361 par la vitesse du véhicule V et en ce que le signal $b_2$ est constitué du signal du braquage d'angle de direction $\delta$ amplifié par l'amplificateur 367.

**36.** Dispositif selon la revendication 34, caractérisé en ce que, dans le dispositif SK1, la valeur actuelle du signal $k_1$ est composée de la somme (additionneur 385) du signal a13 et du quotient formé dans le diviseur 383 de la sortie de l'additionneur 381 par le signal a31 dans lequel, dans l'additionneur 381, le produit formé dans le multiplicateur 379 les paramètres $\lambda_{1,s}$ et $\lambda_{2,s}$ est ajouté à la sortie du soustracteur 377 et dans lequel, dans le soustracteur 377, on forme la différence de la sortie du soustracteur 373 et du signal a11 pondéré par le paramètre $\lambda_{2,s}$ et dans lequel, dans le soustracteur 373, on forme la différence du carré du signal a11 formé dans le quadrateur 371 par le signal a11 pondéré dans le multiplicateur 379 par le paramètre $\lambda_{1,s}$.

**37.** Dispositif selon la revendication 34, caractérisé en ce que, dans le dispositif SK3, la valeur actuelle du signal $k_3$ est formée de la différence (soustracteur 389) de la somme (additionneur 387) du signal a11 et du signal a33 par la somme (additionneur 391) du paramètre $\lambda_{1,s}$ et du paramètre $\lambda_{2,s}$.

**38.** Dispositif selon l'une des revendications 34 à 37, caractérisé en ce que, pour déterminer la valeur estimée actuelle $\beta$ pour l'angle de flottement, dans un dispositif SB la valeur estimée $\beta$ de l'angle de flottement est formée en dérivant en fonction du temps $\beta$ la valeur estimée de l'angle de flottement dans l'intégrateur 317, dans lequel le signal $\beta$ est composé par addition (additionneur 315) du produit (multiplicateur 329) du signal $\psi'$ par le signal $k_1$ et de la somme (additionneur 313) du signal $b_1$ et du produit (multiplicateur 309) du signal a11 par le signal formé dans l'intégrateur 317 pour la valeur estimée β de l'angle de flottement, ainsi que du produit (multiplicateur 311) du signal a13 par le signal formé par l'intégrateur 327 pour la valeur estimée ψ' de la vitesse de lacet et en ce que la valeur estimée ψ' pour la vitesse de lacet est formée en dérivant en fonction du temps ψ', la valeur estimée pour la vitesse de lacet dans l'intégrateur 327 dans lequel le signal ψ' est composé par addition (additionneur 325) du produit (multiplicateur 331) du signal ψ' par le signal k3 et de la somme (additionneur 323) du signal b3 et du produit (multiplicateur 319) du signal a31 par le signal formé par l'intégrateur 317 pour la valeur estimée β pour l'angle de flottement, ainsi que du produit (multiplicateur 321) du signal a33 par le signal formé par l'intégrateur 327 pour la valeur estimée ψ' de la vitesse de lacet et en ce que le signal ψ' est formé de la différence (soustracteur 333) de la vitesse de lacet ψ' et de la valeur estimée ψ' pour la vitesse de lacet qui existe à la sortie de l'intégrateur 327.

39. Dispositif selon la revendication 11 ou 34, caractérisé en ce que la valeur constante 0 ou 1 peut être utilisée comme valeur estimée β pour l'angle de flottement.

40. Dispositif en particulier selon l'une des revendications 11 à 39, caractérisé en ce que il est prévu en outre un dispositif VS1 pour la compensation de l'erreur de poursuite résultant de la vitesse du véhicule et que, à cet effet, dans l'additionneur 410 le signal $w_{X,komp}$ compensant l'erreur de poursuite en direction X est ajouté à la valeur de consigne de position WXvor si bien que il en résulte la valeur de consigne Wx convenant pour la régulation dans laquelle le signal $w_{X,komp}$ est formé par l'addition (additionneur 409) du signal de compensation $w_{X1}$ pour l'erreur de poursuite résultant de la vitesse du véhicule en direction X et du signal total $w_{X,komp1}$ comportant d'autres signaux de compensation en direction X, dans lequel le signal $w_{X1}$ est formé dans le diviseur 407 par le quotient du signal de sortie du multiplicateur 405 et du paramètre λ1 et dans lequel, dans le multiplicateur 405, est formé le produit du signal de sortie du multiplicateur 403 et du paramètre a11 et dans lequel est formé, dans le multiplicateur 403, le produit de la valeur de consigne $w_v{}^{vor}$ pour la vitesse du véhicule et du cosinus de la valeur de consigne $w_v{}^{vor}$ pour l'angle de parcours et dans lequel est formé le cosinus de la valeur de consigne $w_v{}^{vor}$ pour l'angle de parcours dans l'élément 401 pour déterminer le cosinus de la valeur de consigne $w_v{}^{vor}$ et en ce que le signal $w_{Y,komp}$ compensant l'erreur de poursuite en direction Y est additionné, dans l'additionneur 420, à la valeur de consigne de position $w_Y{}^{vor}$, si bien qu'il en résulte la valeur de consigne $w_Y$ convenant pour la régulation, dans laquelle le signal $w_{Y,komp}$ est formé par l'addition (additionneur 419) du signal de compensation $w_{Y1}$ pour l'erreur de poursuite en direction Y résultant de la vitesse du véhicule et du signal total $w_{Y,komp1}$, comportant d'autres signaux de compensation en direction Y, dans lequel le signal $w_{Y1}$ est formé dans le diviseur 417 par le quotient du signal de sortie du multiplicateur 415 et du paramètre λ2 et dans lequel est formé, dans le multiplicateur 415, le produit du signal de sortie du multiplicateur 413 et du paramètre α12 et dans lequel est formé, dans le multiplicateur 413, le produit de la valeur de consigne $w_v{}^{vor}$ pour la valeur du véhicule par le sinus de la valeur de consigne $w_v{}^{vor}$ pour l'angle de parcours et dans lequel le sinus de la valeur de consigne $w_v{}^{vor}$ pour l'angle de parcours est formé dans l'élément 411 pour déterminer le sinus d'après la valeur de consigne $w_v{}^{vor}$.

41. Dispositif selon la revendication 40, caractérisé en ce que, pour la compensation de l'erreur de poursuite, résultant de l'accélération longitudinale du véhicule, il est prévu un dispositif VS2 dans lequel le signal $W_{Xcomp1}$ est formé par l'addition (additionneur 425) du signal de compensation $w_{X2}$ pour l'erreur de poursuite résultant de l'accélération longitudinale du véhicule en direction X et du signal total $w_{Xkomp2}$ comportant d'autres signaux de compensation en direction X et dans lequel le signal $w_{X2}$ est formé dans le multiplicateur 423 par le produit de la valeur de consigne WV'vor pour l'accélération du véhicule et du cosinus de la valeur de consigne $w_v{}^{vor}$ pour l'angle de parcours et dans lequel le cosinus de la valeur de consigne $w_v{}^{vor}$ pour l'angle de parcours est formé dans l'élément 421 pour déterminer le cosinus de la valeur de consigne $w_v{}^{vor}$ et que le signal $w_{Y,komp1}$ est formé par l'addition (additionneur 431) du signal de compensation $w_{Y2}$ pour l'erreur de poursuite en direction Y résultant de l'accélération longitudinale du véhicule et du signal total $w_{Y,komp2}$, comportant d'autres signaux de compensation en direction Y, dans lequel le signal Y2 est formé dans le multiplicateur 429 par le produit de la valeur de consigne $w_v{}^{vor}$ pour l'accélération longitudinale du véhicule et du sinus de la valeur de consigne $w_v{}^{vor}$ pour l'angle de parcours et dans lequel le sinus de la valeur de consigne vor pour l'angle de parcours est formé dans l'élément 427 pour déterminer le sinus de la valeur de consigne $w_v{}^{vor}$.

42. Dispositif selon la revendication 40 ou 41, caractérisé en ce que pour la compensation de l'erreur de poursuite résultant de l'accélération longitudinale du véhicule, il est prévu un dispositif VS3 dans lequel le si-

gnal $w_{Xkomp2}$ est formé par soustraction (soustracteur 439) du signal de compensation WX3 pour l'erreur de poursuite en direction X résultant de l'accélération transversale du véhicule du signal total $w_{XkompZ}$, comportant certains autres signaux de compensation en direction X et dans lequel le signal $w_{X3}$ est formé, dans le multiplicateur 437, par le produit de la valeur de consigne vor par la vitesse angulaire de parcours et du produit, formé dans le multiplicateur 435, de la valeur de consigne $w_v{}^{vor}$ de la vitesse du véhicule par le sinus de la valeur de consigne vor pour l'angle de parcours et dans lequel le sinus de la valeur de consigne $w_v{}^{vor}$ pour l'angle de parcours est formé dans l'élément 433 pour déterminer le sinus de la valeur de consigne vor et en ce que le signal $w_{Y,komp2}$ est formé par addition (additionneur 447) du signal de compensation WY3 pour l'erreur de poursuite en direction Y résultant de l'accélération transversale du véhicule et du signal total $w_{Y,kompz}$, comportant certains autres signaux de compensation en direction Y dans lequel le signal WY3 est formé, dans le multiplicateur 445, par le produit de la valeur de consigne vor pour la vitesse angulaire de parcours et du produit formé dans le multiplicateur 443, de la valeur de consigne $w_v{}^{vor}$ pour la vitesse du véhicule et du cosinus de la valeur de consigne $w_v{}^{vor}$ pour l'angle de parcours et dans lequel le cosinus de la valeur de consigne vvor pour l'angle de parcours est formé dans l'élément 441 pour déterminer le cosinus de la valeur de consigne vor.

Fig. 1

Fig. 2

Fig. 3

Fig. 4

Fig. 5

Fig. 6

Fig. 7

Fig. 8

β  v  ψ'

121

125

123

127

—

kl

Fig. 9

56

v    β  ψ'

129

131

kh

Fig. 10

ψ    β    ψ'  v    X    Y

133    —

ν

Fig. 11

EP 0 433 322 B1

EP 0 433 322 B1

v   β   ψ'

gh ──────────────────► ⊗ ──────► ⊟ ──────► ghm
bzw. gl                                     bzw. glm
bzw. gph        ╱137    m    ╲135    ╲136    bzw. gphm
bzw. gpl                                    bzw. gplm

1 ──────► ⊟ ──────► ⊕
                    139

m_L

Fig. 12

Fig. 13

EP 0 433 322 B1

EP 0 433 322 B1

$w_\nu$ bzw. $w_v$

153

$\times$

$\beta$  $\psi$  $\psi'$  v bzw. $\nu$

$\nu$ bzw. v

157

155

$\times$

ruk bzw. ruv

$\overline{\lambda}_1$ bzw. $\overline{\lambda}_2$

$\overline{\alpha}_{01}$ bzw. $\overline{\alpha}_{02}$

Fig. 14

v   ψ   ψ'   β

159

ruk ──→ ⊠ ───────────────────────────── ─ ──→ gl
                              161          163
ruv ──────────────────── ⊠ ───────

Fig. 15

v   ψ   ψ'   β

ruk ── ─ ─→                    165
ruv ─────────────────── ─ ◯ ──────→ gh

Fig. 16

60

Fig. 17

Fig. 18

β

ν

187 cos

189 sin

Y

X

v

ψ̇

ψ

193 ×

191 ×

195

gph

rpx

rpy

Fig. 19

Fig. 20

EP 0 433 322 B1

Fig. 21

Fig. 22

β ψ ψ' v

221

EK

kok

Fig. 23

β ψ ψ' v

kov

Fig. 24

EP 0 433 322 B1

Fig. 25

Fig. 26

Fig. 27

Fig. 28

EP 0 433 322 B1

$a_{11}$

$a_{33}$

387

389

$k_3$

$\lambda_{1,S}$

$\lambda_{2,S}$

391

Fig. 29

Fig. 30

Fig. 31

Fig. 32

$w_{\nu'}^{vor}$

$w_{\nu}^{vor}$

$w_{\nu}^{vor}$

433 sin

441 cos

435 ×

443 ×

437 ×

445 ×

$w_{X3}$

$w_{Y3}$

439

447

$w_{Y,komp,z}$

$w_{X,komp,z}$

$w_{X,komp,2}$

$w_{Y,komp,2}$

EP 0 433 322 B1

Fig. 33

EP 0 433 322 B1